(19) Europäisches Patentamt
European Patent Office
Office européen des brevets

(11) **EP 3 858 914 B1**

(12) **EUROPEAN PATENT SPECIFICATION**

(45) Date of publication and mention of the grant of the patent:
**05.11.2025 Bulletin 2025/45**

(21) Application number: **19866228.0**

(22) Date of filing: **05.09.2019**

(51) International Patent Classification (IPC):
***C08L 45/00*** *(2006.01)* ***C08F 8/46*** *(2006.01)*
***C08F 232/08*** *(2006.01)* ***C08K 3/22*** *(2006.01)*
***C08L 65/00*** *(2006.01)*

(52) Cooperative Patent Classification (CPC):
(C-Sets available)
**C08F 210/02; C08F 8/46; C08K 3/22; C08K 9/04; G02B 1/041;** C08F 4/65912; C08F 2420/04; C08K 5/09; C08K 5/521; C08K 5/5317; C08K 2003/2244; C08K 2201/011 (Cont.)

(86) International application number:
**PCT/JP2019/035017**

(87) International publication number:
**WO 2020/066529 (02.04.2020 Gazette 2020/14)**

(54) **CYCLIC OLEFIN-BASED RESIN COMPOSITION, MOLDED PRODUCT AND OPTICAL COMPONENT**

AUF CYCLISCHEM OLEFIN BASIERENDE HARZZUSAMMENSETZUNG, FORMPRODUKT UND OPTISCHE KOMPONENTE

COMPOSITION DE RÉSINE À BASE D’OLÉFINE CYCLIQUE, PRODUIT MOULÉ ET COMPOSANT OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2018 JP 2018181395**

(43) Date of publication of application:
**04.08.2021 Bulletin 2021/31**

(73) Proprietor: **Mitsui Chemicals, Inc.**
**Tokyo 104-0028 (JP)**

(72) Inventors:
- **NOGUCHI, Mikiko**
  **Sodegaura-shi, Chiba 299-0265 (JP)**
- **SAITO, Haruka**
  **Sodegaura-shi, Chiba 299-0265 (JP)**
- **OKAMOTO, Masahiko**
  **Sodegaura-shi, Chiba 299-0265 (JP)**
- **KAWAGUCHI, Seigou**
  **Yonezawa-shi, Yamagata 992-8510 (JP)**
- **TSUKUTA Yuto**
  **Yonezawa-shi, Yamagata 992-8510 (JP)**

(74) Representative: **Hoffmann Eitle**
**Patent- und Rechtsanwälte PartmbB**
**Arabellastraße 30**
**81925 München (DE)**

(56) References cited:
**JP-A- 2004 284 232**
**JP-A- 2006 299 001**
**JP-A- 2013 001 780**
**JP-A- 2015 189 949**
**JP-A- 2018 172 588**
**JP-A- H0 251 510**
**JP-A- H08 134 310**
**JP-A- H10 330 429**
**US-A1- 2011 028 658**
**US-A1- 2017 145 191**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 858 914 B1

(52) Cooperative Patent Classification (CPC): (Cont.)

C-Sets
**C08F 8/46, C08F 232/08;**
**C08F 210/02, C08F 4/6592;**
**C08K 3/22, C08L 45/00;**
**G02B 1/041, C08L 23/0823;**
C08F 210/02, C08F 232/08, C08F 216/04

## Description

TECHNICAL FIELD

The present invention relates to a cyclic olefin-based resin composition, a molded product, and an optical component.

BACKGROUND ART

Cyclic olefin-based copolymers have excellent optical performance and are therefore used as optical components such as, for example, optical lenses.

Examples of technologies related to cyclic olefin-based copolymers used in optical components include those described in Patent Document 1 (Japanese Unexamined Patent Publication No. 2013-209501) and Patent Document 2 (Japanese Unexamined Patent Publication No. 2009-108282).

Patent Document 1 discloses a nano-dispersion in which particles of an inorganic compound having an average particle size of equal to or less than 100 nm are dispersed in a matrix of a terminal-modified vinyl alicyclic hydrocarbon polymer hydride containing a functional group at the end of a molecular chain. In Patent Document 1, it is described that when such a nano-dispersion is used, an optical lens having high refractive index characteristics is obtained.

Patent Document 2 discloses an alicyclic structure-containing polymer obtainable by polymerizing at least a polymerizable monomer composition including: 5% to 30% by weight of an alicyclic structure-containing polymerizable monomer (A) that has an alicyclic structure having a silicon-containing group having a specific structure and a carbon-carbon double bond in the ring and does not have an aromatic ring structure; 50% to 90% by weight of an alicyclic structure-containing polymerizable monomer (B) that has an alicyclic structure having an aromatic ring structure and a carbon-carbon double bond in the ring and does not have a silicon atom; and 0% to 45% by weight of a polymerizable monomer (C) that can be copolymerized with these monomers. In Patent Document 2, it is described that when such an alicyclic structure-containing polymer is used, an optical lens having all of a high refractive index, a high Abbe number, and a high light transmittance is obtained.

US 2017/145191 A1 describes a resin composition comprising a transparent resin, and modified inorganic particles obtained by surface-modifying inorganic particles with a modifier, the transparent resin having a saturated water absorption at 37° C of 0.015 to 0.25 wt %, the inorganic particles having an average particle size of 20 nm or less, and having a refractive index larger than that of the transparent resin by 0.40 or more, a modification ratio of the modified inorganic particles being 15 to 40 wt %, and the modifier being a compound represented by the formula $R^1$-X, wherein $R^1$ represents a hydrocarbon group having 12 to 18 carbon atoms, and X represents a functional group that forms a bond to the surface of the inorganic particles, or an atomic group that comprises the functional group. Also disclosed are a resin formed article and an optical part.

JP 2006 299001 A describes a method for making an inorganic/organic composite thermoplastic material that comprises conducting in order: a surface treating step for applying surface treatment to the inorganic fine particles with primary particle diameter of 1-30 nm, a dispersing step for dispersing the inorganic fine particles in a nonpolar solvent or a mixed solvent of a nonpolar solvent and a polar solvent using a dispersant to prepare slurry and a mixing step for mixing the slurry with the resin.

JP 2004 284232 A describes a laminate wherein a transparent intermediate layer C is provided between a transparent member layer A and a transparent member layer B, both of which have different refractive indexes. Both of the difference between the refractive index $n_{AC}$ of the surface (a) going toward the transparent intermediate layer C of the transparent member layer A and the refractive index $n_{CA}$ of the surface (b) going toward the transparent member layer A of the transparent intermediate layer C and the difference between the refractive index $n_{BC}$ of the surface (c) going toward the transparent intermediate layer C of the transparent member layer B and the refractive index $n_{CB}$ of the surface (d) going toward the transparent member layer B of the transparent intermediate layer C are 0.05 at the most respectively. The refractive index of the transparent intermediate layer C changes continuously or stepwise in the thickness direction going toward the surface (b) from the surface (d)

JP H10 330429 A describes a random addition copolymer of a cyclic olefin having a polar group such as an ester group or an acid anhydride group with ethylene. The copolymer has (a) a structural unit derived from ethylene and (b) a structural unit derived from a polar group-containing cyclic olefin expressed by the following formula:

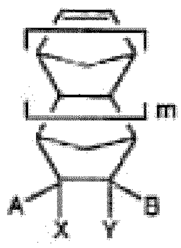

A and B are each a hydrogen atom or a 1-10C hydrocarbon group; either of X and Y is an ester group expressed by $(CH_2)_nCOOR$, wherein R is a 1-20C hydrocarbon group and (n) is an integer of 0-10, and the other is a hydrogen atom, a 1-10C hydrocarbon group or an ester group expressed by $(CH_2)_nCOOR$ wherein R and (n) are respectively same as the above, or X and Y bond with each other to form a bifunctional group expressed by $(CH_2)$n-CO-O-CO-$(CH_2)_n$ wherein (n) is same as the above; (m) is 0 or 1, The copolymer has 1, 000-100, 000 number-average molecular weight calculated as polystyrene and a content of the structural unit derived from the polar group-containing cyclic olefin in the copolymer of 1-99 mol.%.

US 2011/028658 A1 describes an ionomer resin composition that is obtained by bringing a functional group-containing olefin copolymer (A) having a structural unit derived from a cyclic olefin in the range of 10 percent by mol or more and having a group derived from an acid and/or a derivative thereof as the functional group into contact with a metal compound (B).

JP 2015 189949 A describes a resin composition that includes a transparent resin and inorganic particles having the surface modified by a modifier. The transparent resin has a saturated water absorption percentage of less than 0.015 wt.% at 37°C. The inorganic particles have an average particle diameter of 20 nm or less and a refraction factor larger than that of the transparent resin by 0.40 or more. The modifier is a phosphorus-containing compound that is selected from the group consisting of a phosphate ester, an organic phosphonic acid, and a phosphonic ester and contains a hydrocarbon group having a carbon-carbon double bond and 12-18 carbon atoms.

RELATED DOCUMENT

PATENT DOCUMENT

[Patent Document 1] Japanese Unexamined Patent Publication No. 2013-209501
[Patent Document 2] Japanese Unexamined Patent Publication No. 2009-108282

SUMMARY OF THE INVENTION

TECHNICAL PROBLEM

There has been a demand for a further increase in the refractive index in the use applications of optical components such as optical lenses, where size reduction and thickness reduction are required.

The present invention has been made in view of the above-described circumstances, and the invention provides a cyclic olefin-based resin composition that can realize an optical component having transparency and a high refractive index.

SOLUTION TO PROBLEM

The present inventors intensively studied to achieve the above objects. As a result, the inventors found that a cyclic olefin-based resin composition which can realize an optical component having excellent performance balance between transparency and a high refractive index is obtained by finely dispersing inorganic fine particles having a surface modified by a modifier against a cyclic olefin-based copolymer, and the inventors completed the present invention.

The present invention is as shown below.

[1] A cyclic olefin-based resin composition including:

a cyclic olefin-based copolymer (A); and
inorganic fine particles (B) having a surface modified by a modifier,

in which the modifier is one kind or two or more kinds selected from the group consisting of a phosphoric acid ester and a carboxylic acid,
the inorganic fine particles (B) exist in a state of being dispersed in the cyclic olefin-based copolymer (A),
the inorganic fine particles (B) have an average particle size $D_{50}$ of equal to or more than 1 nm and equal to or less than 100 nm, and
the cyclic olefin-based copolymer (A) includes one kind or two or more kinds selected from the following [A-1] and [A-4]:

[A-1] a random copolymer of an olefin selected from the group comprising ethylene and α-olefins having 3 to 20 carbon atoms and a cyclic olefin represented by the following Formula [I], [II], [III], [IV], or [V]; and
[A-4] a graft-modification product of the item [A-1].

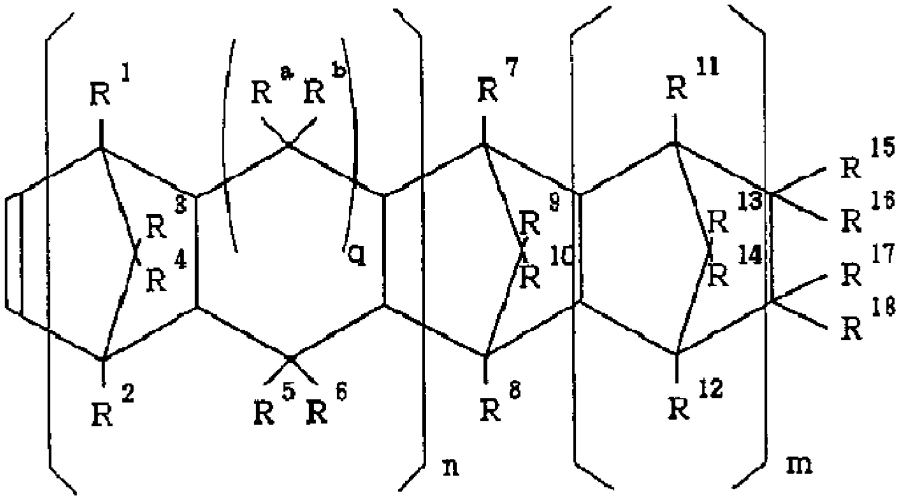

··· [I]

in the Formula [I], n represents 0 or 1; m represents 0 or a positive integer; q represents 0 or 1; $R^1$ to $R^{18}$, $R^a$, and $R^b$ each independently represent a hydrogen atom, a halogen atom, a carboxyl group, a hydroxyl group, a sulfonic acid group, an acid anhydride group, an epoxy group, an amino group, or a hydrocarbon group which may be substituted with a halogen atom, a carboxyl group, a hydroxyl group, a sulfonic acid group, an acid anhydride group, an epoxy group, or an amino group; and $R^{15}$ to $R^{18}$ may be bonded to each other to form a monocyclic or polycyclic ring, where the monocyclic or polycyclic ring may have a double bond and may form an alkylidene group with $R^{15}$ and $R^{16}$ or with $R^{17}$ and $R^{18}$,

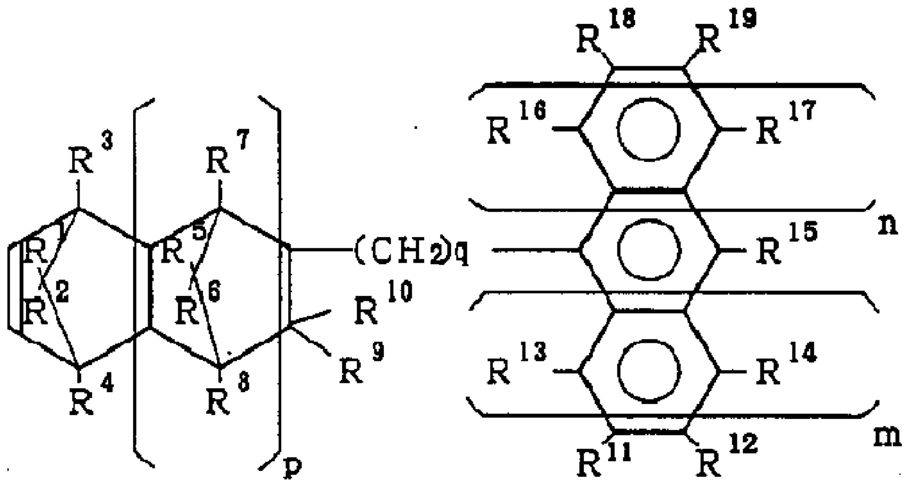

··· [II]

in the Formula [II], p and q each represent 0 or a positive integer; m and n each represent 0, 1, or 2; $R^1$ to $R^{19}$ each independently represent a hydrogen atom, a halogen atom, a carboxyl group, a hydroxyl group, a sulfonic acid group, an acid anhydride group, an epoxy group, an amino group, or a hydrocarbon group or an alkoxy group, which may be substituted with a halogen atom, a carboxyl group, a hydroxyl group, a sulfonic acid group, a sulfonic

acid group, an acid anhydride group, an epoxy group, or an amino group; a carbon atom to which $R^9$ and $R^{10}$ are bonded may be bonded to a carbon atom to which $R^{13}$ is bonded or to a carbon atom to which $R^{11}$ is bonded, directly or through an alkylene group having 1 to 3 carbon atoms; and in a case of n = m = 0, $R^{15}$ and $R^{12}$ or $R^{15}$ and $R^{19}$ may be bonded to each other to form a monocyclic or polycyclic aromatic ring,

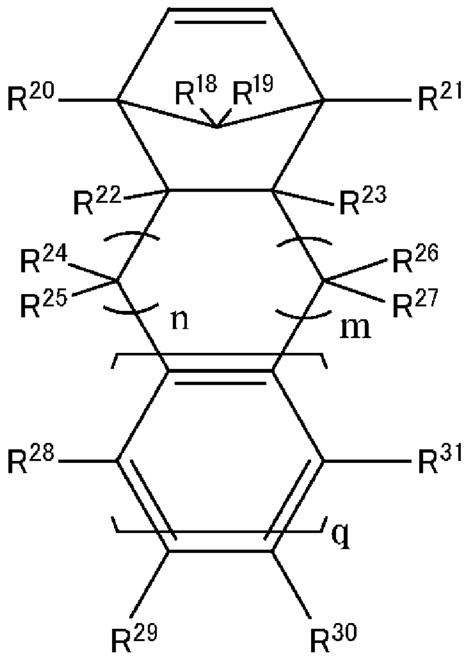

··· [III]

in the Formula [III], n and m each independently represent 0, 1, or 2; q represents 1, 2, or 3; $R^{18}$ to $R^{31}$ each independently represent a hydrogen atom, a halogen atom, a carboxyl group, a hydroxyl group, a sulfonic acid group, an acid anhydride group, an epoxy group, an amino group, or a hydrocarbon group having 1 to 20 carbon atoms which may be substituted with a halogen atom, a carboxyl group, a hydroxyl group, a sulfonic acid group, an acid anhydride group, an epoxy group, or an amino group; and in a case of q = 1, $R^{28}$ and $R^{29}$, $R^{29}$ and $R^{30}$, or $R^{30}$ and $R^{31}$ may be bonded to each other to form a monocyclic or polycyclic ring; in a case of q = 2 or 3, $R^{28}$ and $R^{28}$, $R^{28}$ and $R^{29}$, $R^{29}$ and $R^{30}$, $R^{30}$ and $R^{31}$, or $R^{31}$ and $R^{31}$ may be bonded to each other to form a monocyclic or polycyclic ring, where the monocyclic ring or the polycyclic ring may have a double bond and the monocyclic ring or the polycyclic ring may be an aromatic ring,

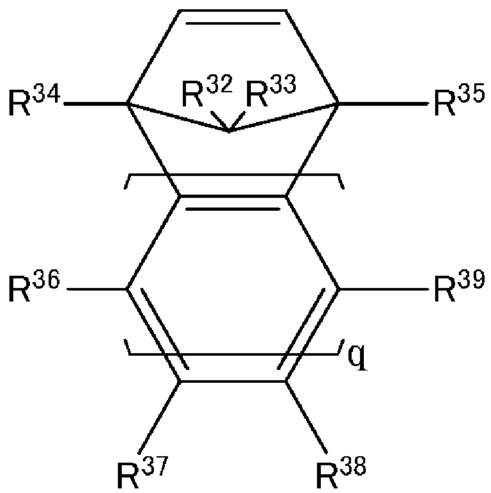

··· [IV]

in the Formula [IV], q represents 1, 2, or 3; $R^{32}$ to $R^{39}$ each independently represent a hydrogen atom, a halogen atom, a carboxyl group, a hydroxyl group, a sulfonic acid group, an acid anhydride group, an epoxy group, an amino group, or a hydrocarbon group having 1 to 20 carbon atoms which may be substituted with a halogen atom, a carboxyl group, a hydroxyl group, a sulfonic acid group, an acid anhydride group, an epoxy

group, or an amino group; in a case of q = 1, $R^{36}$ and $R^{37}$, $R^{37}$ and $R^{38}$, or $R^{38}$ and $R^{39}$ may be bonded to each other to form a monocyclic or polycyclic ring; and in a case of q = 2 or 3, $R^{36}$ and $R^{36}$, $R^{36}$ and $R^{37}$, $R^{37}$ and $R^{38}$, $R^{38}$ and $R^{39}$, or $R^{39}$ and $R^{39}$ may be bonded to each other to form a monocyclic or polycyclic ring, where the monocyclic ring or the polycyclic ring may have a double bond and the monocyclic ring or the polycyclic ring may be an aromatic ring, or

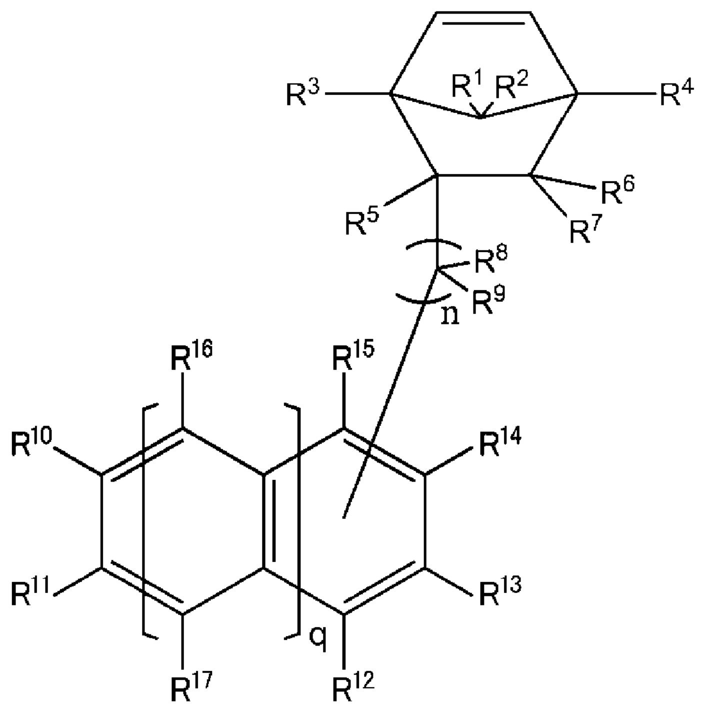

... [V]

in the Formula [V], n and q each independently represent 0, 1, or 2; $R^1$ to $R^{17}$ each independently represent a hydrogen atom, a halogen atom, a carboxyl group, a hydroxyl group, a sulfonic acid group, an acid anhydride group, an epoxy group, an amino group, or a hydrocarbon group having 1 to 20 carbon atoms which may be substituted with a halogen atom, a carboxyl group, a hydroxyl group, a sulfonic acid group, an acid anhydride group, an epoxy group, or an amino group; one of $R^{10}$ to $R^{17}$ represents a linking bond; in a case of q = 0, $R^{10}$ and $R^{11}$, $R^{11}$ and $R^{12}$, $R^{12}$ and $R^{13}$, $R^{13}$ and $R^{14}$, $R^{14}$ and $R^{15}$, or $R^{15}$ and $R^{10}$ may be bonded to each other to form a monocyclic or polycyclic ring; and in a case of q = 1 or 2, $R^{10}$ and $R^{11}$, $R^{11}$ and $R^{17}$, $R^{17}$ and $R^{17}$, $R^{17}$ and $R^{12}$, $R^{12}$ and $R^{13}$, $R^{13}$ and $R^{14}$, $R^{14}$ and $R^{15}$, $R^{15}$ and $R^{16}$, $R^{16}$ and $R^{16}$, or $R^{16}$ and $R^{10}$ may be bonded to each other to form a monocyclic or polycyclic ring, where the monocyclic ring or the polycyclic ring may have a double bond and the monocyclic ring or the polycyclic ring may be an aromatic ring;

[2] A molded product obtained by using the cyclic olefin-based resin composition.
[3] An optical component including the molded product.

## ADVANTAGEOUS EFFECTS OF INVENTION

According to the present invention, a cyclic olefin-based resin composition that can realize an optical component having transparency and a high refractive index can be provided.

## DESCRIPTION OF EMBODIMENTS

Hereinafter, the present invention will be described based on example embodiments. In the present embodiment, the expression "A to B" indicating a numerical value range means, unless stated otherwise, equal to or more than A and equal to or less than B.

### [Cyclic olefin-based resin composition]

First, the cyclic olefin-based resin composition of the embodiments according to the present invention will be described.

The cyclic olefin-based resin composition according to the present embodiment includes a cyclic olefin-based copolymer (A) and inorganic fine particles (B) having a surface modified by a modifier. The modifier is one kind or two or more kinds selected from the group consisting of a phosphoric acid ester and a carboxylic acid, and the inorganic fine particles (B) exist in a state of being dispersed in the cyclic olefin-based copolymer (A),

the inorganic fine particles (B) have an average particle size $D_{50}$ of equal to or more than 1 nm and equal to or less than 100 nm, and
the cyclic olefin-based copolymer (A) includes one kind or two or more kinds selected from the following [A-1] and [A-4]:

[A-1] a random copolymer of an olefin selected from the group comprising ethylene and $\alpha$-olefins having 3 to 20 carbon atoms and a cyclic olefin represented by the following Formula [I], [II], [III], [IV], or [V]; and
[A-4] a graft-modification product of the item [A-1]

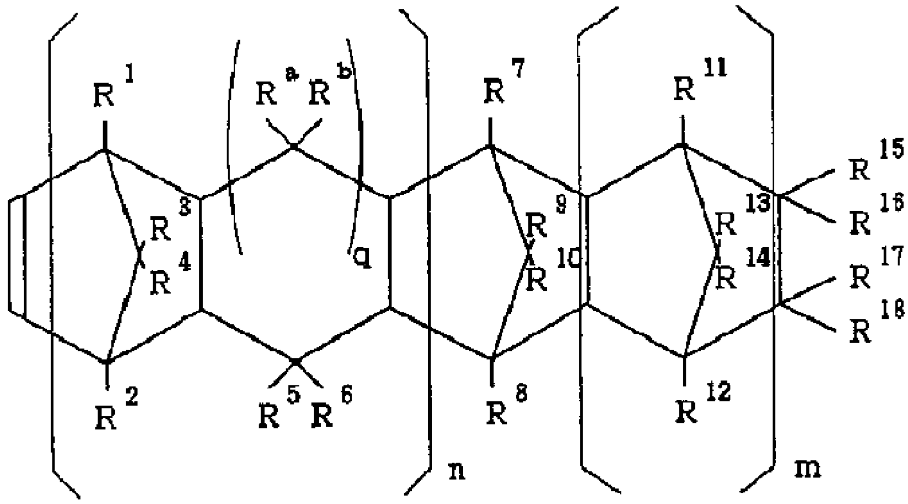

··· [I]

in the Formula [I], n represents 0 or 1; m represents 0 or a positive integer; q represents 0 or 1; $R^1$ to $R^{18}$, $R^a$, and $R^b$ each independently represent a hydrogen atom, a halogen atom, a carboxyl group, a hydroxyl group, a sulfonic acid group, an acid anhydride group, an epoxy group, an amino group, or a hydrocarbon group which may be substituted with a halogen atom, a carboxyl group, a hydroxyl group, a sulfonic acid group, an acid anhydride group, an epoxy group, or an amino group; and $R^{15}$ to $R^{18}$ may be bonded to each other to form a monocyclic or polycyclic ring, where the monocyclic or polycyclic ring may have a double bond and may form an alkylidene group with $R^{15}$ and $R^{16}$ or with $R^{17}$ and $R^{18}$,

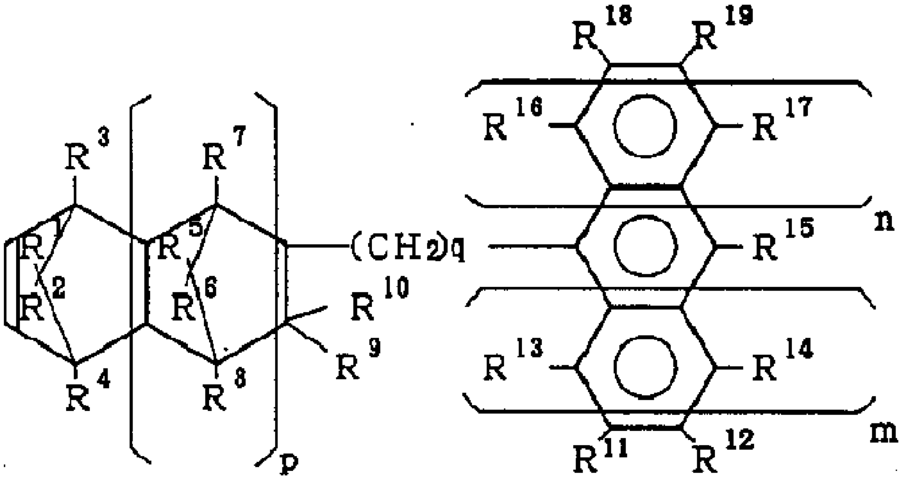

··· [II]

in the Formula [II], p and q each represent 0 or a positive integer; m and n each represent 0, 1, or 2; $R^1$ to $R^{19}$ each independently represent a hydrogen atom, a halogen atom, a carboxyl group, a hydroxyl group, a sulfonic acid

group, an acid anhydride group, an epoxy group, an amino group, or a hydrocarbon group or an alkoxy group, which may be substituted with a halogen atom, a carboxyl group, a hydroxyl group, a sulfonic acid group, an acid anhydride group, an epoxy group, or an amino group; a carbon atom to which $R^9$ and $R^{10}$ are bonded may be bonded to a carbon atom to which $R^{13}$ is bonded or to a carbon atom to which $R^{11}$ is bonded, directly or through an alkylene group having 1 to 3 carbon atoms; and in a case of n = m = 0, $R^{15}$ and $R^{12}$ or $R^{15}$ and $R^{19}$ may be bonded to each other to form a monocyclic or polycyclic aromatic ring,

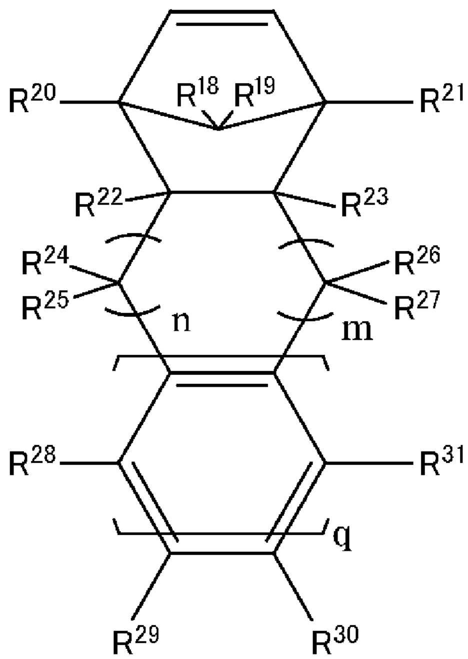

··· [III]

in the Formula [III], n and m each independently represent 0, 1, or 2; q represents 1, 2, or 3; $R^{18}$ to $R^{31}$ each independently represent a hydrogen atom, a halogen atom, a carboxyl group, a hydroxyl group, a sulfonic acid group, an acid anhydride group, an epoxy group, an amino group, or a hydrocarbon group having 1 to 20 carbon atoms which may be substituted with a halogen atom, a carboxyl group, a hydroxyl group, a sulfonic acid group, an acid anhydride group, an epoxy group, or an amino group; and in a case of q = 1, $R^{28}$ and $R^{29}$, $R^{29}$ and $R^{30}$, or $R^{30}$ and $R^{31}$ may be bonded to each other to form a monocyclic or polycyclic ring; in a case of q = 2 or 3, $R^{28}$ and $R^{28}$, $R^{28}$ and $R^{29}$, $R^{29}$ and $R^{30}$, $R^{30}$ and $R^{31}$, or $R^{31}$ and $R^{31}$ may be bonded to each other to form a monocyclic or polycyclic ring, where the monocyclic ring or the polycyclic ring may have a double bond and the monocyclic ring or the polycyclic ring may be an aromatic ring,

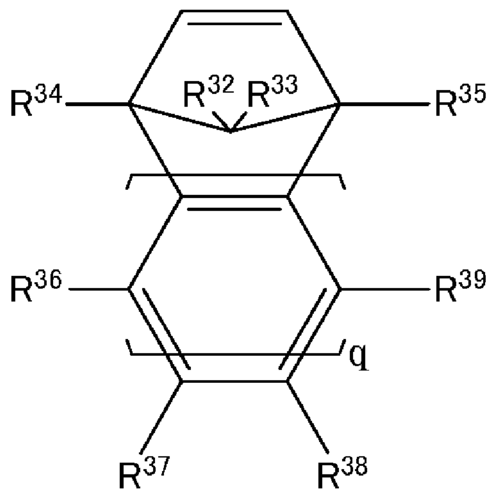

··· [IV]

in the Formula [IV], q represents 1, 2, or 3; $R^{32}$ to $R^{39}$ each independently represent a hydrogen atom, a halogen atom, a carboxyl group, a hydroxyl group, a sulfonic acid group, an acid anhydride group, an epoxy group, an

amino group, or a hydrocarbon group having 1 to 20 carbon atoms which may be substituted with a halogen atom, a carboxyl group, a hydroxyl group, a sulfonic acid group, an acid anhydride group, an epoxy group, or an amino group; in a case of q = 1, $R^{36}$ and $R^{37}$, $R^{37}$ and $R^{38}$, or $R^{38}$ and $R^{39}$ may be bonded to each other to form a monocyclic or polycyclic ring; and in a case of q = 2 or 3, $R^{36}$ and $R^{36}$, $R^{36}$ and $R^{37}$, $R^{37}$ and $R^{38}$, $R^{38}$ and $R^{39}$, or $R^{39}$ and $R^{39}$ may be bonded to each other to form a monocyclic or polycyclic ring, where the monocyclic ring or the polycyclic ring may have a double bond and the monocyclic ring or the polycyclic ring may be an aromatic ring, or

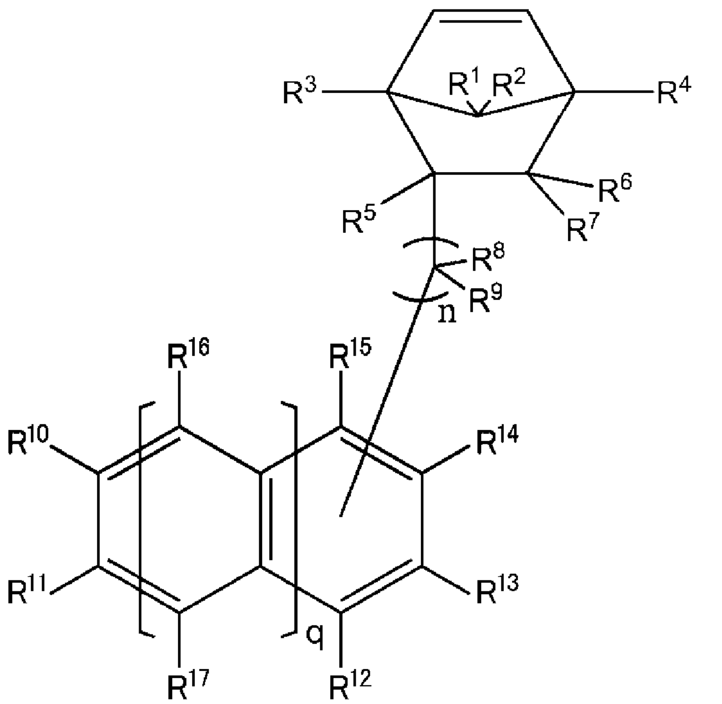

... [V]

in the Formula [V], n and q each independently represent 0, 1, or 2; $R^1$ to $R^{17}$ each independently represent a hydrogen atom, a halogen atom, a carboxyl group, a hydroxyl group, a sulfonic acid group, an acid anhydride group, an epoxy group, an amino group, or a hydrocarbon group having 1 to 20 carbon atoms which may be substituted with a halogen atom, a carboxyl group, a hydroxyl group, a sulfonic acid group, an acid anhydride group, an epoxy group, or an amino group; one of $R^{10}$ to $R^{17}$ represents a linking bond; in a case of q = 0, $R^{10}$ and $R^{11}$, $R^{11}$ and $R^{12}$, $R^{12}$ and $R^{13}$, $R^{13}$ and $R^{14}$, $R^{14}$ and $R^{15}$, or $R^{15}$ and $R^{10}$ may be bonded to each other to form a monocyclic or polycyclic ring; and in a case of q = 1 or 2, $R^{10}$ and $R^{11}$, $R^{11}$ and $R^{17}$, $R^{17}$ and $R^{17}$, $R^{17}$ and $R^{12}$, $R^{12}$ and $R^{13}$, $R^{13}$ and $R^{14}$, $R^{14}$ and $R^{15}$, $R^{15}$ and $R^{16}$, $R^{16}$ and $R^{16}$, or $R^{16}$ and $R^{10}$ may be bonded to each other to form a monocyclic or polycyclic ring, where the monocyclic ring or the polycyclic ring may have a double bond and the monocyclic ring or the polycyclic ring may be an aromatic ring.

Here, the phrase that the inorganic fine particles (B) exist in a state of dispersed in the cyclic olefin-based copolymer (A) implies, for example, a state in which the inorganic fine particles (B) are scattered in a sea (matrix) of the cyclic olefin-based copolymer (A). More specifically, for example, the phrase means a state in which the average aggregated particle size (secondary particle size) of the scattered inorganic fine particles (B) is equal to or less than 500 nm, preferably equal to or less than 200 nm, and more preferably equal to or less than 100 nm. The average aggregated particle size (secondary particle size) of the inorganic fine particles (B) can be measured using, for example, an electron microscope.

As the cyclic olefin-based resin composition of the embodiments according to the present invention includes the cyclic olefin-based copolymer (A) and the inorganic fine particles (B) modified by the above-mentioned modifier, and the dispersibility of the inorganic fine particles (B) in the matrix can be improved by an interaction between the two. This makes it possible to realize excellent transparency and a high refractive index in an obtainable molded product and an optical component.

The content of the inorganic fine particles (B) in the cyclic olefin-based resin composition according to the present embodiment is preferably equal to or more than 5% by mass, and more preferably equal to or more than 10% by mass, when the total amount of the cyclic olefin-based resin composition is designated as 100% by mass, from the viewpoint of further increasing the refractive index of an obtainable optical component, and the content is preferably equal to or less than 60% by mass, more preferably equal to or less than 50% by mass, and even more preferably equal to or less than 40%

by mass, from the viewpoint of further enhancing the transparency, refractive index, and mechanical characteristics of an obtainable optical component, and further enhancing the dispersibility of the inorganic fine particles (B).

The total content of the polar group-containing cyclic olefin-based copolymer (A) and the inorganic fine particles (B) in the cyclic olefin-based resin composition according to the present embodiment is preferably equal to or more than 50% by mass and equal to or less than 100% by mass, more preferably equal to or more than 70% by mass and equal to or less than 100% by mass, even more preferably equal to or more than 80% by mass and equal to or less than 100% by mass, and particularly preferably equal to or more than 90% by mass and equal to or less than 100% by mass, when the total amount of the cyclic olefin-based resin composition is designated as 100% by mass, from the viewpoint of further enhancing the performance balance between transparency and the refractive index of an obtainable molded product.

With regard to the cyclic olefin-based resin composition according to the present embodiment, when a film having a film thickness of equal to or more than 100 μm and equal to or less than 300 μm is produced using the cyclic olefin-based resin composition, the refractive index (nD) of the film at a wavelength of 589 nm is preferably equal to or higher than 1.545, more preferably equal to or higher than 1.550, even more preferably equal to or higher than 1.554, and particularly preferably equal to or higher than 1.560. When the refractive index (nD) is within the above-described range, the thickness can be made thinner while maintaining satisfactory optical characteristics of an obtainable optical component.

With regard to the cyclic olefin-based resin composition according to the present embodiment, it is preferable that when a molded product is produced using the cyclic olefin-based resin composition, the molded product has solvent resistance. Solvent resistance can be evaluated by, for example, using the insoluble fraction (% by mass), and the insoluble fraction (% by mass) can be adjusted to be equal to or higher than the content percentage of the inorganic fine particles (B) in the cyclic olefin-based resin composition.

The insoluble fraction (% by mass) can be determined, for example, as follows. A film having a film thickness of 100 μm is produced using the cyclic olefin-based resin composition according to the present embodiment, and 0.3 g of the film is introduced into a flask and precisely weighed (Y (g)), toluene is added thereto to obtain a 1 mass% solution, and the film is immersed for 24 hours at 25°C. After 24 hours, the solvent containing the film is filtered through a membrane filter (pore size 10 μm) to capture insoluble matter, the insoluble matter is dried for 48 hours at 25°C, subsequently the mass of the insoluble matter (Z (g)) is measured, and the insoluble fraction can be calculated by the following formula.

$$\text{Insoluble fraction (\% by mass)} = (Z / Y) \times 100$$

With regard to the cyclic olefin-based resin composition according to the present embodiment, it is preferable that when a molded product is produced using the cyclic olefin-based resin composition, the molded product has abrasion resistance. Specifically, the abrasion resistance can be evaluated as follows. First, a film having a film thickness of 100 μm is produced by using the cyclic olefin-based resin composition according to the present embodiment. Subsequently, the film is scratched under a load of 200 g using a sapphire needle having a diameter of 0.3 mm, and evaluation is performed based on the depth of the abraded site. At this time, it is preferable that the depth of the abraded site (scratch) is less than 10 μm, and more preferably less than 5 μm.

The depth of the abraded site can be measured with, for example, a surface roughness meter.

Hereinafter, the various components will be specifically described.

(Cyclic olefin-based copolymer (A))

The cyclic olefin-based copolymer (A) according to the present embodiment includes one kind or two or more kinds selected from the following [A-1] and [A-4]:

[A-1] a random copolymer of an α-olefin having 2 to 20 carbon atoms and a cyclic olefin represented by the following Formula [I], [II], [III], [IV], or [V],
[A-4] a graft-modification product of the above-described item [A-1].

With regard to [A-1], the α-olefin having 2 to 20 carbon atoms in the random copolymer of an α-olefin having 2 to 20 carbon atoms and a cyclic olefin represented by the following Formula [I], [II], [III], [IV], or [V] may be a linear olefin or a branched olefin. Examples of such an α-olefin include linear α-olefins each having 2 to 20 carbon atoms, such as ethylene, propylene, 1-butene, 1-pentene, 1-hexene, 1-octene, 1-decene, 1-dodecene, 1-tetradecene, 1-hexadecene, 1-octadecene, and 1-eicosene; and branched α-olefins each having 4 to 20 carbon atoms 4-methyl-1-pentene, 3-methyl-1-pentene, and 3-methyl-1-butene. Among these, a linear α-olefin having 2 to 4 carbon atoms is preferred, and ethylene is particularly preferred. Such α-olefins may be used singly or may be used in combination of two or more kinds thereof.

With regard to [A-1], when the sum of all the constituent units constituting the random copolymer of an α-olefin having 2 to 20 carbon atoms and a cyclic olefin represented by the following Formula [I], [II], [III], [IV], or [V] is designated as

100 mol%, the content of a constituent unit derived from the α-olefin having 2 to 20 carbon atoms is preferably equal to or more than 30 mol% and equal to or less than 88 mol%, and more preferably equal to or more than 40 mol% and equal to or less than 78 mol%.

When the content of the α-olefin-derived constituent unit is equal to or more than the above-described lower limit value, the heat resistance and dimensional stability of an obtainable optical component can be enhanced. Furthermore, when the content of the α-olefin-derived constituent unit is equal to or less than the above-described upper limit value, transparency and the like of an obtainable optical component can be enhanced.

The cyclic olefins represented by Formula [I], [II], [III], [IV], or [V] will be shown below.

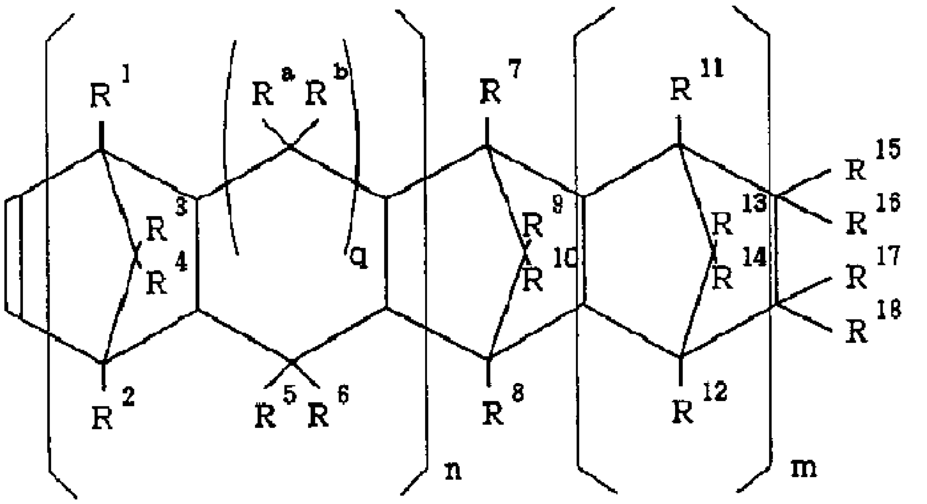

··· [I]

In the Formula [I], n represents 0 or 1; m represents 0 or a positive integer; and q represents 0 or 1. When q is 1, $R^a$ and $R^b$ each independently represent the following atom or hydrocarbon group, and when q represents 0, the respective linking bonds are bonded to form a 5-membered ring.

$R^1$ to $R^{18}$ and $R^a$ and $R^b$ each independently represent a hydrogen atom, a halogen atom, a carboxyl group, a hydroxyl group, a sulfonic acid group, an acid anhydride group, an epoxy group, an amino group, or a hydrocarbon group which may be substituted with a halogen atom, a carboxyl group, a hydroxyl group, a sulfonic acid group, an acid anhydride group, an epoxy group, or an amino group. Here, the halogen atom is a fluorine atom, a chlorine atom, a bromine atom, or an iodine atom.

Furthermore, the hydrocarbon groups may be each independently, for example, an alkyl group having 1 to 20 carbon atoms, a cycloalkyl group having 3 to 15 carbon atoms, or an aromatic hydrocarbon group. More specifically, examples of the alkyl group include a methyl group, an ethyl group, a propyl group, an isopropyl group, an amyl group, a hexyl group, an octyl group, a decyl group, a dodecyl group, and an octadecyl group; examples of the cycloalkyl group include a cyclohexyl group; and examples of the aromatic hydrocarbon group include a phenyl group and a naphthyl group. These hydrocarbon groups may be each substituted with a halogen atom, a carboxyl group, a hydroxyl group, a sulfonic acid group, an acid anhydride group, an epoxy group, or an amino group.

In addition, with regard to the above-described Formula [I], $R^{15}$ to $R^{18}$ may be bonded to each other (in cooperation with each other) to form a monocyclic or polycyclic ring, and a monocyclic or polycyclic ring thus formed may have a double bond. Here, specific examples of the monocyclic or polycyclic ring to be formed will be shown below.

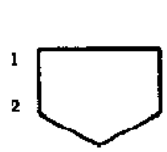
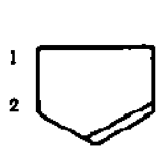
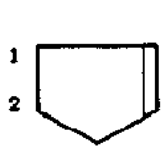
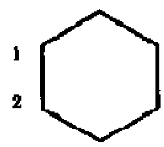
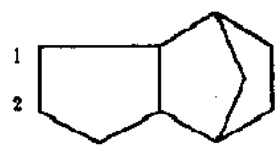

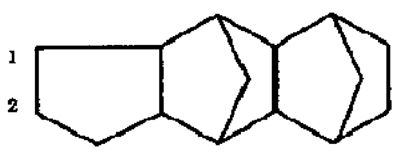
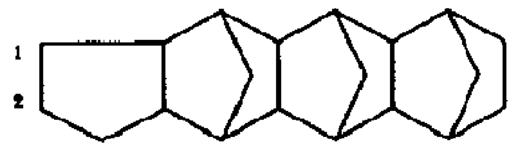

In the above-described examples, the carbon atoms assigned with number 1 or 2 represent carbon atoms to

which $R^{15}$ ($R^{16}$) or $R^{17}$ ($R^{18}$) is bonded, respectively, in the Formula [I]. Furthermore, $R^{15}$ and $R^{16}$, or $R^{17}$ and $R^{18}$ may form an alkylidene group.

Such an alkylidene group is, for example, an alkylidene group having 2 to 20 carbon atoms, and specific examples of such an alkylidene group include an ethylidene group, a propylidene group, and an isopropylidene group.

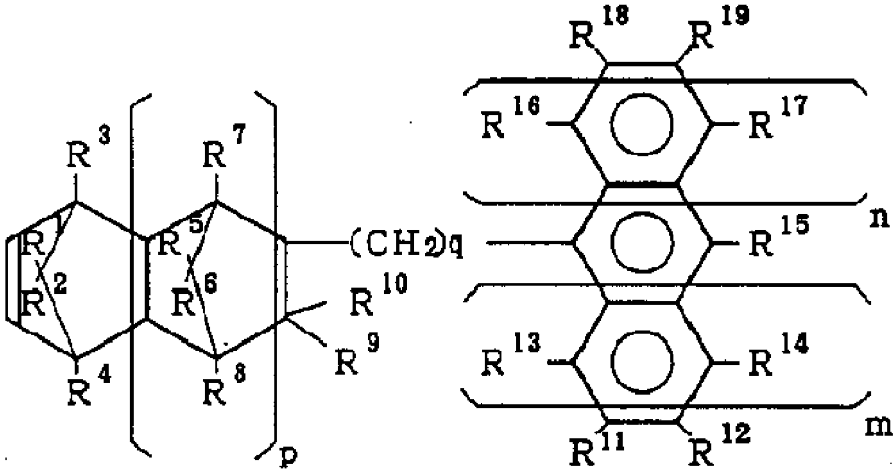

··· [II]

In the Formula [II], p and q each represent 0 or a positive integer, and m and n each represent 0, 1, or 2. Furthermore, $R^1$ to $R^{19}$ each independently represent a hydrogen atom, a halogen atom, a carboxyl group, a hydroxyl group, a sulfonic acid group, an acid anhydride group, an epoxy group, an amino group, or a hydrocarbon group or an alkoxy group, both of which may be substituted with a halogen atom, a carboxyl group, a hydroxyl group, a sulfonic acid group, an acid anhydride group, an epoxy group, or an amino group.

The halogen atom has the same meaning as the halogen atom for the above-described Formula [I]. The hydrocarbon groups may be each independently, for example, an alkyl group having 1 to 20 carbon atoms, an alkyl halide group having 1 to 20 carbon atoms, a cycloalkyl group having 3 to 15 carbon atoms, or an aromatic hydrocarbon group. More specifically, examples of the alkyl group include a methyl group, an ethyl group, a propyl group, an isopropyl group, an amyl group, a hexyl group, an octyl group, a decyl group, a dodecyl group, and an octadecyl group; examples of the cycloalkyl group include a cyclohexyl group; and examples of the aromatic hydrocarbon group include an aryl group and an aralkyl group, specifically such as a phenyl group, a tolyl group, a naphthyl group, a benzyl group, and a phenylethyl group. Examples of the alkoxy group include a methoxy group, an ethoxy group, and a propoxy group. These hydrocarbon group and alkoxy group may be each substituted with a halogen atom, a carboxyl group, a hydroxyl group, a sulfonic acid group, an acid anhydride group, an epoxy group, or an amino group.

Here, the carbon atom to which $R^9$ and $R^{10}$ are bonded may be bonded to the carbon atom to which $R^{13}$ is bonded or to the carbon atom to which $R^{11}$ is bonded, directly or through an alkylene group having 1 to 3 carbon atoms. That is, in a case in which the above-described two carbon atoms are bonded through an alkylene group, the groups represented by $R^9$ and $R^{13}$ or the groups represented by $R^{10}$ and $R^{11}$ form, in cooperation with each other, any one alkylene group of a methylene group ($-CH_2-$), an ethylene group ($-CH_2CH_2-$) or a propylene group ($-CH_2CH_2CH_2-$). Furthermore, in a case of n = m = 0, $R^{15}$ and $R^{12}$ or $R^{15}$ and $R^{19}$ may be bonded to each other to form a monocyclic or polycyclic aromatic ring. Examples of the monocyclic or polycyclic aromatic ring in this case include groups in which $R^{15}$ and $R^{12}$ further form an aromatic ring on the occasion of n = m = 0, as described below.

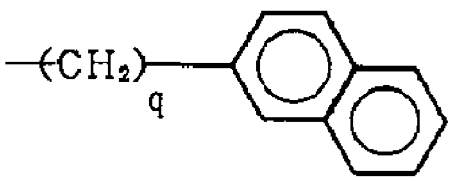

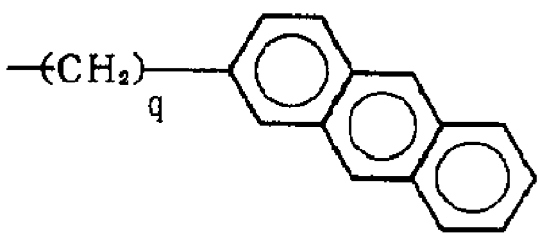

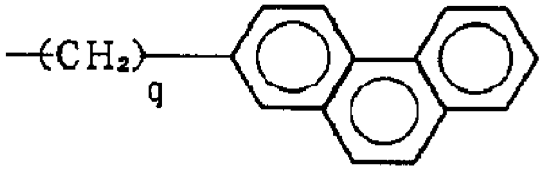

Here, q has the same meaning as q for the above-described Formula [II] .

Examples of the cyclic olefin represented by Formula [I] or [II] as described above include:

Bicyclo[2.2.1]-2-heptene (= norbornene) represented by 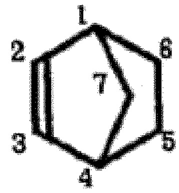

(in the formula, numbers 1 to 7 represent carbon position numbers) and derivatives obtained by substituting a hydrocarbon group into this bicyclo[2.2.1]-2-heptene. Examples of this hydrocarbon group include 5-methyl, 5,6-dimethyl, 1-methyl, 5-ethyl, 5-n-butyl, 5-isobutyl, 7-methyl, 5-phenyl, and 5-methyl-5-phenyl, 5-benzyl, 5-tolyl, 5-(ethylphenyl), 5-(isopropylphenyl), 5-(biphenyl), 5-(β-naphthyl), 5-(α-naphthyl), 5-(anthracenyl), and 5,6-diphenyl.

Furthermore, examples of the cyclic olefin represented by the Formula [I] or [II] include bicyclo[2.2.1]-2-heptene derivatives such as a cyclopentadiene-acenaphthylene adduct, 1,4-methano-1,4,4a,9a-tetrahydrofluorene, and 1,4-methano-1,4,4a,5,10,10a-hexahydroanthracene.

Furthermore, examples of the cyclic olefin represented by the Formula [I] or [II] include tricyclo[4.3.0.$1^{2,5}$]-3-decene derivatives such as tricyclo[4.3.0.$1^{2,5}$]-3-decene, 2-methyltricyclo[4.3.0.$1^{2,5}$]-3-decene, and 5-methyltricyclo [4.3.0.$1^{2,5}$]-3-decene; tricyclo[4.4.0.$1^{2,5}$]-3-undecene derivatives such as tricyclo[4.4.0.$1^{2,5}$]-3-undecene and 10-methyltricyclo[4.4.0.$1^{2,5}$]-3-undecene;

Tetracyclo[4.4.0.$1^{2,5}$.$1^{7,10}$]-3-dodecene represented by 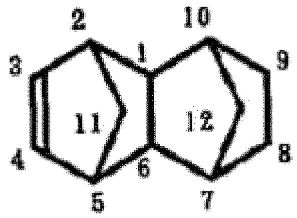

(in the formula, numbers 1 to 12 represent carbon position numbers), and derivatives obtained by substituting a hydrocarbon group into tetracyclo[4.4.0.$1^{2,5}$.$1^{7,10}$]-3-dodecene. Examples of this hydrocarbon group include 8-methyl, 8-ethyl, 8-propyl, 8-butyl, 8-isobutyl, 8-hexyl, 8-cyclohexyl, 8-stearyl, 5,10-dimethyl, 2,10-dimethyl, 8,9-dimethyl, 8-ethyl-9-methyl, 11,12-dimethyl, 2,7,9-trimethyl, 2,7-dimethyl-9-ethyl, 9-isobutyl-2,7-dimethyl, 9,11,12-trimethyl, 9-ethyl-11,12-dimethyl, 9-isobutyl-11,12-dimethyl, 5,8,9,10-tetramethyl, 8-ethylidene, 8-ethylidene-9-methyl, 8-ethylidene-9-ethyl, 8-ethylidene-9-isopropyl, 8-ethylidene-9-butyl, 8-n-propylidene, 8-n-propylidene-9-methyl, 8-n-propylidene-9-ethyl, 8-n-propylidene-9-isopropyl, 8-n-propylidene-9-butyl, 8-isopropylidene, 8-isopropylidene-9-methyl, 8-isopropylidene-9-ethyl, 8-isopropylidene-9-isopropyl, 8-isopropylidene-9-butyl, 8-chloro, 8-bromo, 8-fluoro, 8,9-dichloro, 8-phenyl, 8-methyl-8-phenyl, 8-benzyl, 8-tolyl, 8-(ethylphenyl), 8-(isopropylphenyl), 8,9-diphenyl, 8-(biphenyl), 8-(β-naphthyl), 8-(α-naphthyl), 8-(anthracenyl), and 5,6-diphenyl.

Furthermore, examples of the cyclic olefin represented by the Formula [I] or [II] include pentacyclopentadecadiene compounds such as an adduct of (a cyclopentadiene-acenaphthylene adduct) and cyclopentadiene, pentacyclo [6.5.1.$1^{3-6}$.$0^{2,7}$.$0^{9,13}$]-4-pentadecene and derivatives thereof, pentacyclo[7.4.0.$1^{2,5}$.$1^{9,12}$.$0^{8,13}$]-3-pentadecene and derivatives thereof, and pentacyclo[6.5.1.$1^{3,6}$.$0^{2,7}$.$0^{9,13}$]-4,10-pentadecadiene; pentacyclo[8.4.0.$1^{2,5}$.$1^{9,12}$.$0^{8,13}$]-3-hexadecene and derivatives thereof, pentacyclo[6.6.1.$1^{3,6}$.$0^{2,7}$.$0^{9,14}$]-4-hexadecene and derivatives thereof, hexacyclo [6.6.1.$1^{3,6}$.$1^{10,13}$.$0^{2,7}$.$0^{9,14}$]-4-heptadecene and derivatives thereof, heptacyclo[8.7.0.$1^{2,9}$.$1^{4,7}$.$1^{11,17}$.$0^{3,8}$.$0^{12,16}$]-5-eicosene and derivatives thereof, heptacyclo[8.8.0.$1^{2,9}$.$1^{4,7}1^{11,18}$.$0^{3,8}$.$0^{12,17}$]-5-heneicosene and derivatives thereof, octacyclo[8.8.0.$1^{2,9}$.$1^{4,7}$.$1^{11,18}$.$1^{13,16}$.$0^{3,8}$.$0^{12,17}$]-5-docosene and derivatives thereof, nonacyclo [10.9.1.$1^{4,7}$.$1^{13,20}$.$1^{15,18}$.$0^{2,10}$.$0^{3,8}$.$0^{12,21}$.$0^{14,19}$]-5-pentacosen e and derivatives thereof, and nonacyclo [10.10.1.$1^{5,8}$.$1^{14,21}$.$1^{16,19}$.$0^{2,11}$.$0^{4,9}$.$0^{13,22}$.$0^{15,20}$]-6-hexacosen e and derivatives thereof.

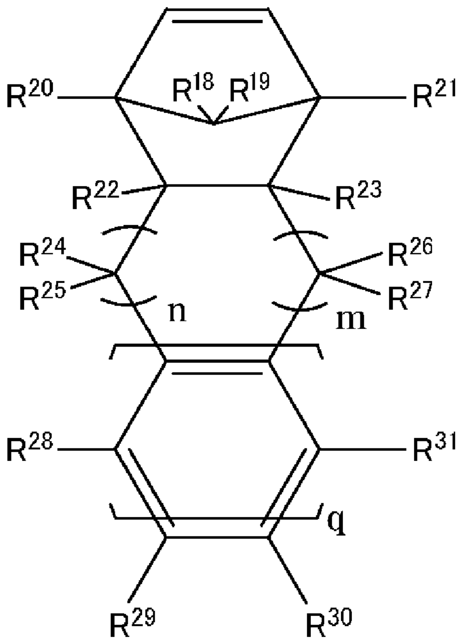

... [III]

In the Formula [III], n and m each independently represent 0, 1, or 2, and q represents 1, 2, or 3. m is preferably 0 or 1, and more preferably 1. n is preferably 0 or 1, and more preferably 0. q is preferably 1 or 2, and more preferably 1.

$R^{18}$ to $R^{31}$ each independently represent a hydrogen atom, a halogen atom, a carboxyl group, a hydroxyl group, a sulfonic acid group, an acid anhydride group, an epoxy group, an amino group, or a hydrocarbon group having 1 to 20 carbon atoms which may be substituted with a halogen atom, a carboxyl group, a hydroxyl group, a sulfonic acid group, an acid anhydride group, an epoxy group, or an amino group, and it is preferable that $R^{18}$ to $R^{31}$ each independently represent a hydrogen atom or a hydrocarbon group having 1 to 20 carbon atoms, and more preferably a hydrogen atom.

Furthermore, in a case of q = 1, $R^{28}$ and $R^{29}$, $R^{29}$ and $R^{30}$, or $R^{30}$ and $R^{31}$ may be bonded to each other to form a monocyclic or polycyclic ring, and in a case of q = 2 or 3, $R^{28}$ and $R^{28}$, $R^{28}$ and $R^{29}$, $R^{29}$ and $R^{30}$, $R^{30}$ and $R^{31}$, or $R^{31}$ and $R^{31}$ may be bonded to each other to form a monocyclic or polycyclic ring. The monocyclic ring or the polycyclic ring may have a double bond, and the monocyclic ring or the polycyclic ring may be an aromatic ring.

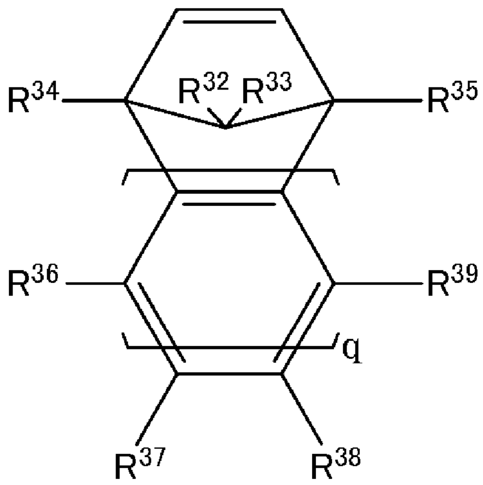

... [IV]

In the Formula [IV], q represents 1, 2, or 3, preferably 1 or 2, and more preferably 1.

$R^{32}$ to $R^{39}$ each independently represent a hydrogen atom, a halogen atom, a carboxyl group, a hydroxyl group, a sulfonic acid group, an acid anhydride group, an epoxy group, an amino group, or a hydrocarbon group having 1 to 20 carbon atoms which may be substituted with a halogen atom, a carboxyl group, a hydroxyl group, a sulfonic acid group, an acid anhydride group, an epoxy group, or an amino group, and it is preferable that $R^{32}$ to $R^{39}$ each independently represent a hydrogen atom or a hydrocarbon group having 1 to 20 carbon atoms, and more preferably a hydrogen atom.

Furthermore, in a case of q = 1, $R^{36}$ and $R^{37}$, $R^{37}$ and or $R^{38}$ and $R^{39}$ may be bonded to each other to form a monocyclic or polycyclic ring, and in a case of q = 2 or 3, $R^{36}$ and $R^{36}$, $R^{36}$ and $R^{37}$, $R^{37}$ and $R^{38}$, $R^{38}$ and $R^{39}$, or $R^{39}$ and $R^{39}$

may be bonded to each other to form a monocyclic or polycyclic ring. The monocyclic ring or the polycyclic ring may have a double bond, and the monocyclic ring or the polycyclic ring may be an aromatic ring.

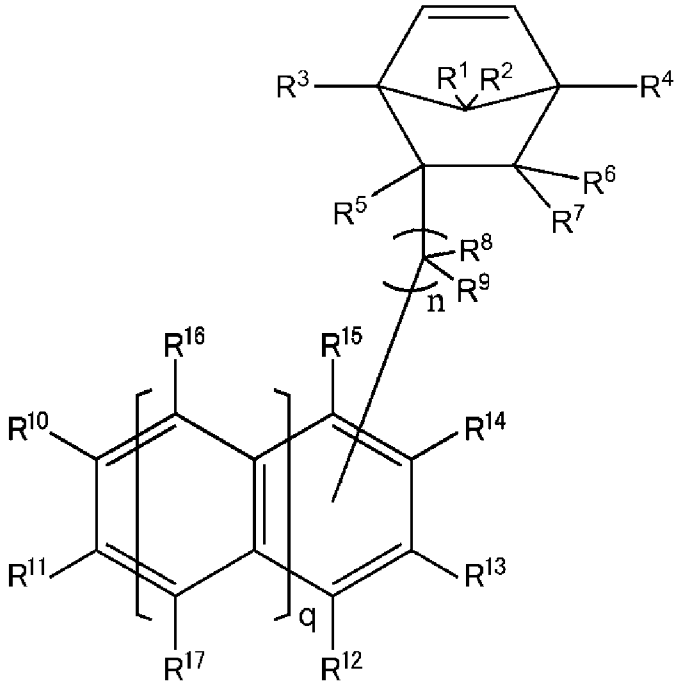

$\cdots$ [V]

In the Formula [V], n and q each independently represent 0, 1, or 2. n is preferably 0 or 1, and more preferably 0. q is preferably 0 or 1, and more preferably 0.

$R^1$ to $R^{17}$ each independently represent a hydrogen atom, a halogen atom, a carboxyl group, a hydroxyl group, a sulfonic acid group, an acid anhydride group, an epoxy group, an amino group, or a hydrocarbon group having 1 to 20 carbon atoms which may be substituted with a halogen atom, a carboxyl group, a hydroxyl group, a sulfonic acid group, an acid anhydride group, an epoxy group, or an amino group, and one of $R^{10}$ to $R^{17}$ is a linking bond, while it is preferable that $R^{15}$ is a linking bond.

It is preferable that $R^1$ to $R^{17}$ each independently represent a hydrogen atom or a hydrocarbon group having 1 to 20 carbon atoms, and more preferably a hydrogen atom.

In a case of q = 0, $R^{10}$ and $R^{11}$, $R^{11}$ and $R^{12}$, $R^{12}$ and $R^{13}$, $R^{13}$ and $R^{14}$, $R^{14}$ and $R^{15}$, or $R^{15}$ and $R^{10}$ may be bonded to each other to form a monocyclic or polycyclic ring, and in a case of q = 1 or 2, $R^{10}$ and $R^{11}$, $R^{11}$ and $R^{17}$, $R^{17}$ and $R^{17}$, $R^{17}$ and $R^{12}$, $R^{12}$ and $R^{13}$, $R^{13}$ and $R^{14}$, $R^{14}$ and $R^{15}$, $R^{15}$ and $R^{16}$, $R^{16}$ and $R^{16}$, or $R^{16}$ and $R^{10}$ may be bonded to each other to form a monocyclic or polycyclic ring. The monocyclic ring or the polycyclic ring may have a double bond, and the monocyclic ring or the polycyclic ring may be an aromatic ring.

Among compounds of the Formula [V], a compound represented by the following Formula [V-1A] is preferable.

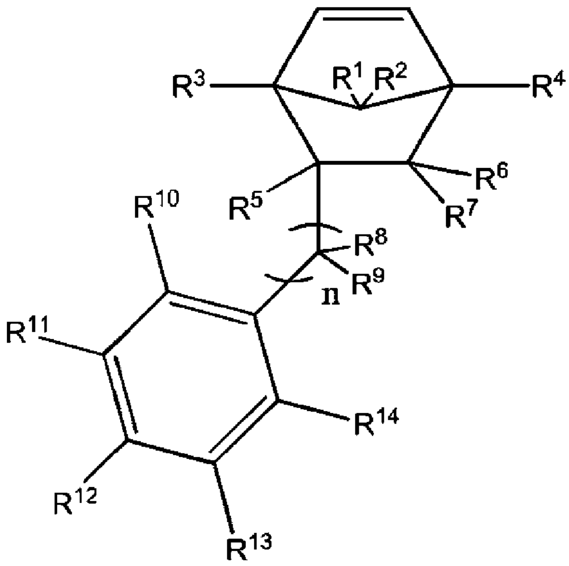

$\cdots$ [ V-1A ]

In the Formula [V-1A], n represents 0, 1, or 2. n is preferably 0 or 1, and more preferably 0. Furthermore, in the Formula [V-1A], $R^1$ to $R^{14}$ each independently represent a hydrogen atom, a halogen atom, a carboxyl group, a hydroxyl group, a sulfonic acid group, an acid anhydride group, an epoxy group, an amino group, or a hydrocarbon group having 1 to 20 carbon atoms which may be substituted with a halogen atom, a carboxyl group, a hydroxyl group, a sulfonic acid group, an acid anhydride group, an epoxy group, or an amino group.

In the Formulae [V] and [V-1A], the hydrocarbon groups having 1 to 20 carbon atoms may be each independently, for example, an alkyl group having 1 to 20 carbon atoms, a cycloalkyl group having 3 to 15 carbon atoms, and an aromatic hydrocarbon group. More specifically, examples of the alkyl group include a methyl group, an ethyl group, a propyl group, an isopropyl group, an amyl group, a hexyl group, an octyl group, a decyl group, a dodecyl group, and an octadecyl group; examples of the cycloalkyl group include a cyclohexyl group; and examples of the aromatic hydrocarbon group include aryl groups or aralkyl groups, such as a phenyl group, a tolyl group, a naphthyl group, a benzyl group, and a phenylethyl group. These hydrocarbon groups may be each substituted with a halogen atom except for a fluorine atom, a carboxyl group, a hydroxyl group, a sulfonic acid group, an acid anhydride group, or an amino group.

It is preferable that the cyclic olefin-derived constituent unit according to the present embodiment preferabliy includes a repeating unit derived from at least one compound selected from bicyclo[2.2.1]-2-heptene, a bicyclo[2.2.1]-2-heptene derivative, tetracyclo [$4.4.0.1^{2,5}.1^{7,10}$]-3-dodecene, a tetracyclo[$4.4.0.1^{2,5}.1^{7,10}$]-3-dodecene derivative, hexacyclo[$6.6.1.1^{3,6}.1^{10,13}.0^{2,7}.0^{9,14}$]-4-heptadecene, a hexacyclo[$6.6.1.1^{3,6}.1^{10,13}.0^{2,7}.0^{9,14}$]-4-heptadecene derivative, benzonorbornadiene, indene norbornene, and methyl phenyl norbornene, and it is more preferable that the cyclic olefin-derived constituent unit includes a repeating unit derived from at least one compound selected from bicyclo [2.2.1]-2-heptene and tetracyclo [$4.4.0.1^{2,5}.1^{7,10}$]-3-dodecene. From the viewpoint of further increasing the refractive index of the optical component according to the present embodiment, it is even more preferable that the cyclic olefin-derived constituent unit includes a repeating unit derived from tetracyclo[$4.4.0.1^{2,5}.1^{7,10}$]-3-dodecene.

Specific examples of the cyclic olefin represented by the above-described Formula [I], [II], [III], [IV], or [V] have been shown above; however, more specific structural examples of these compounds include the structural examples of cyclic olefins described in paragraphs [0038] to [0058] of Japanese Unexamined Patent Publication No. H06-228380, the structural examples of cyclic olefins described in paragraphs [0027] to [0029] of Japanese Unexamined Patent Publication No. 2005-330465, and the structural examples of cyclic olefins described in paragraphs [0032] to [0054] of Japanese Unexamined Patent Publication No. H07-145213. The random copolymer (A1) according to the present embodiment may contain two or more units derived from the above-described cyclic olefins.

The cyclic olefin represented by the above-described Formula [I], [II], [III], [IV], or [V] can be produced by, for example, subjecting olefins having a structure corresponding to cyclopentadiene to a Diels-Alder reaction.

With regard to the random copolymer (A1) according to the present embodiment, at least some of the cyclic olefin represented by the Formula [I], [II], [III], [IV], or [V] is considered to constitute a repeating unit represented by the following Formula [VI], [VII], [VIII], [IX], or [X].

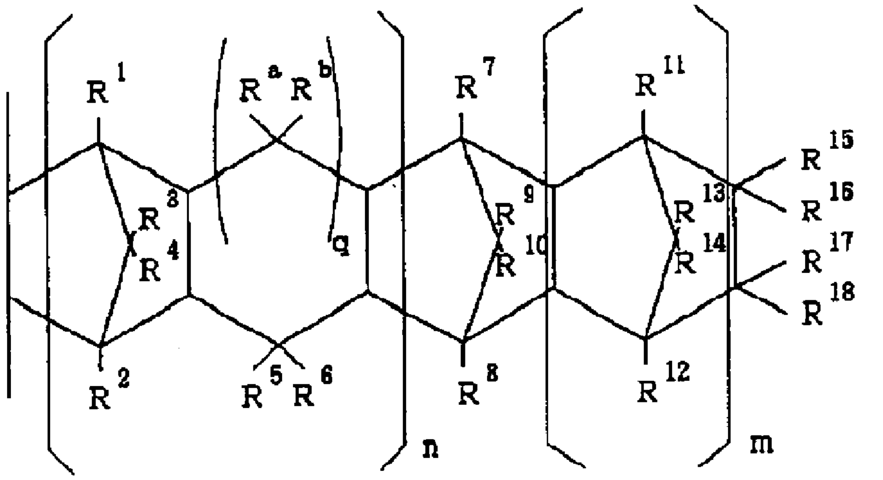

···[VI]

In the Formula [VI], n, m, q, $R^1$ to $R^{18}$, $R^a$, and $R^b$ have the same meanings as those in the Formula [I].

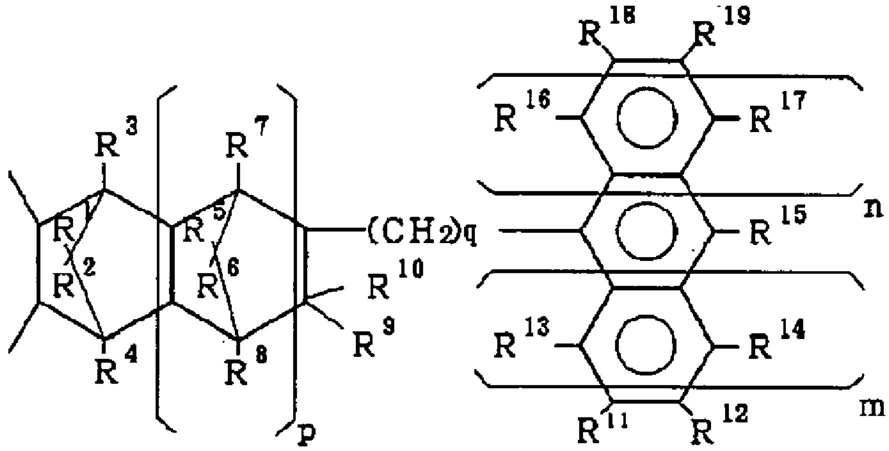

···[VII]

In the Formula [VII], n, m, p, q, and $R^1$ to $R^{19}$ have the same meanings as those in the Formula [II].

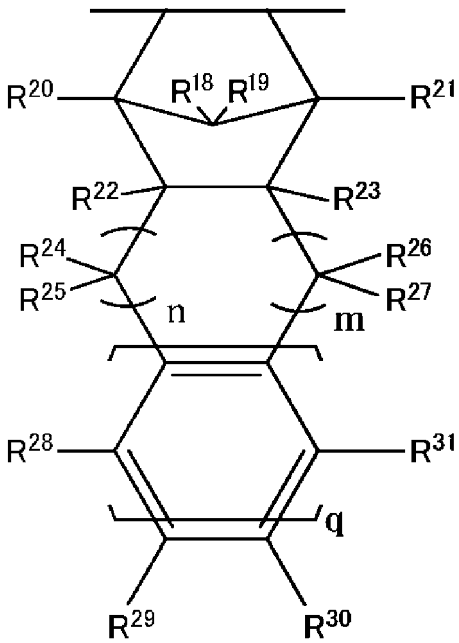

····[VIII]

In the Formula [VIII], n, m, q, and $R^{18}$ to $R^{31}$ have the same meanings as those in the Formula [III].

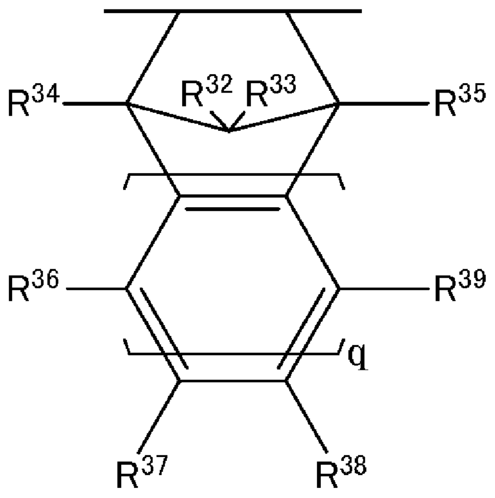

···[IX]

In the Formula [IX], q and $R^{32}$ to $R^{39}$ have the same meanings as those in the Formula [IV].

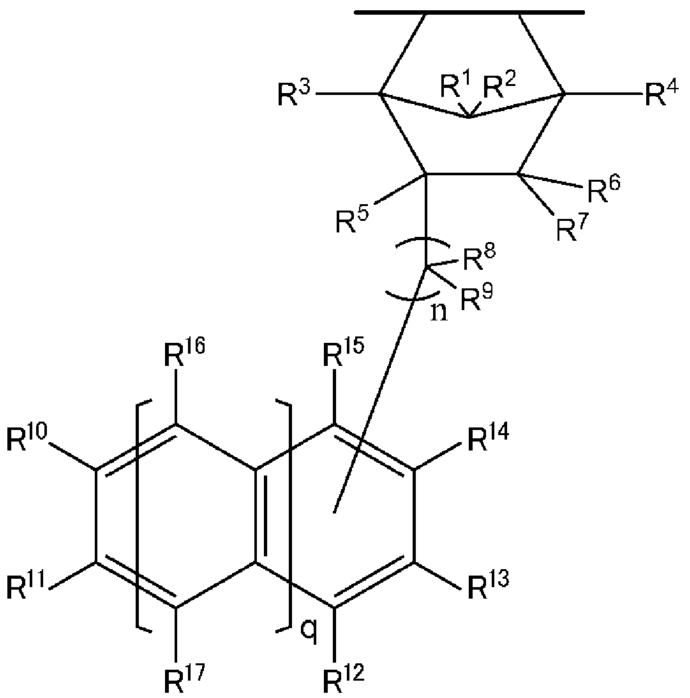

···[X]

In the Formula [X], n, q, and $R^1$ to $R^{17}$ have the same meanings as those in the Formula [V].

The cyclic olefin-based copolymer of the present embodiment includes one kind or two or more kinds selected from: [A-1] a random copolymer of an $\alpha$-olefin having 2 to 20 carbon atoms and a cyclic olefin represented by the above-described Formula [I], [II], [III], [IV], or [V]; and [A-4] a graft-modification product of the above-described item [A-1]. From the viewpoint of enhancing the heat resistance and dimensional stability of an obtainable optical component, it is preferable that the cyclic olefin-based copolymer of the present embodiment includes [A-1] a random copolymer of an $\alpha$-olefin having 2 to 20 carbon atoms and a cyclic olefin represented by the Formula [I], [II], [III], [IV], or [V].

With regard to the above-described random copolymer, when the sum of all the constituent units constituting the random copolymer is designated as 100 mol%, the content of the constituent unit derived from a cyclic olefin represented by the Formula [I], [II], [III], [IV], or [V] is preferably equal to or more than 10 mol% and equal to or less than 60 mol%, and more preferably equal to or more than 20 mol% and equal to or less than 50 mol%.

When the content of the constituent unit derived from a cyclic olefin represented by the Formula [I], [II], [III], [IV] or [V] is equal to or more than the lower limit value described above, transparency and the like of an obtainable optical component can be enhanced. Furthermore, when the content of the constituent unit derived from a cyclic olefin represented by the Formula [I], [II], [III], [IV], or [V] is equal to or less than the upper limit value described above, heat resistance and dimensional stability of an obtainable optical component can be enhanced.

The glass transition temperature of the cyclic olefin-based copolymer (A) according to the present embodiment is preferably 110°C to 200°C, more preferably 115°C to 190°C, and even more preferably 120°C to 180°C, from the viewpoint of further enhancing heat resistance while maintaining satisfactory transparency and refractive index of an obtainable optical component.

The limiting viscosity [η] (in decalin at 135°C) of the cyclic olefin-based copolymer (A) according to the present embodiment is, for example, 0.05 to 5.0 dl/g, preferably 0.2 to 4.0 dl/g, more preferably 0.3 to 2.0 dl/g, and particularly preferably 0.4 to 2.0 dl/g.

When the limiting viscosity [η] is equal to or higher than the above-described lower limit value, the mechanical strength of an obtainable molded product can be enhanced. Furthermore, when the limiting viscosity [η] is equal to or lower than the above-described upper limit value, the moldability of the cyclic olefin-based resin composition according to the present embodiment can be enhanced.

It is preferable that the cyclic olefin-based copolymer (A) according to the present embodiment includes a polar group-containing cyclic olefin-based copolymer (A-a) including a constituent unit (a3) derived from a monomer having a polar group, and it is preferable that the polar group is one kind or two or more kinds selected from a carboxyl group, a hydroxyl group, a sulfonic acid group, an acid anhydride group, an epoxy group, and an amino group. Furthermore, it is preferable that the constituent unit (a3) derived from a monomer having a polar group is located within the main chain or in a side chain of the polymer chain of the cyclic olefin-based copolymer (A) . As the cyclic olefin-based copolymer (A), which is a matrix, has the above-mentioned polar group within the main chain or in a side chain of the polymer chain, the dispersibility of the inorganic fine particles (B) in the matrix can be made more satisfactory as a result of an interaction between the polar group and the inorganic fine particles (B). This makes it possible to realize higher transparency and a higher refractive index for an obtainable optical component.

Also from the viewpoints of solvent resistance and abrasion resistance obtainable when a molded product is produced using the cyclic olefin-based resin composition according to the present embodiment, it is preferable that the cyclic olefin-based copolymer (A) according to the present embodiment has the above-mentioned polar group. The reason why the solvent resistance and abrasion resistance obtainable when a molded product is produced using a cyclic olefin-based resin composition including the cyclic olefin-based copolymer (A) are enhanced as the cyclic olefin-based copolymer (A) according to the present embodiment has the polar group described above, is not necessarily clearly understood; however, it is speculated that the modifier that modifies the cyclic olefin-based copolymer (A) and the inorganic fine particles (B) forms a network.

From the viewpoint of enhancing the dispersibility of the cyclic olefin-based copolymer (A) in the matrix and further enhancing the transparency of an obtainable optical component, the content of the constituent unit (a3) derived from a monomer having the above-described polar group in the polar group-containing cyclic olefin-based copolymer (A-a) is preferably equal to or more than 0.1 mol%, more preferably equal to or more than 0.2 mol%, and even more preferably equal to or more than 0.5 mol%, when the sum of all the constituent units constituting the polar group-containing cyclic olefin-based copolymer (A-a) is designated as 100 mol%, and from the viewpoint of further enhancing the refractive index, moisture resistance, and heat resistance of an obtainable optical component, the content is preferably equal to or less than 20 mol%, more preferably equal to or less than 10 mol%, even more preferably equal to or less than 5 mol%, and particularly preferably equal to or less than 2 mol%.

It is preferable that the polar group-containing cyclic olefin-based copolymer (A-a) includes one kind or two or more kinds selected from a random copolymer (A1) of a monomer having the above-described polar group and a cyclic olefin, and a graft copolymer (A2) obtained by grafting or graft-polymerizing a monomer having the above-described polar group into a cyclic olefin-based polymer.

Here, the term "grafting" means introducing a monomer having a polar group into a stem polymer that serves as a main chain. The term "graft-polymerizing" means introducing a branch polymer composed of a polymer different from the main chain, into a stem polymer that serves as the main chain.

<Random copolymer (A1)>

It is preferable that the polar group-containing cyclic olefin-based copolymer (A-a) includes a random copolymer (A1) having: a constituent unit (a1) derived from an α-olefin having 2 to 20 carbon atoms; a constituent unit (a2) derived from a cyclic olefin represented by the above-described Formula [I], [II], [III], [IV], or [V]; and a constituent unit (a3) derived from a monomer having the above-described polar group.

The α-olefin having 2 to 20 carbon atoms according to the present embodiment may be a linear olefin or a branched olefin. Examples of such an α-olefin include linear α-olefins each having 2 to 20 carbon atoms, such as ethylene, propylene, 1-butene, 1-pentene, 1-hexene, 1-octene, 1-decene, 1-dodecene, 1-tetradecene, 1-hexadecene, 1-octadecene, and 1-eicosene; and branched α-olefins each having 4 to 20 carbon atoms, such as 4-methyl-1-pentene, 3-methyl-1-pentene, and 3-methyl-1-butene. Among these, a linear α-olefin having 2 to 4 carbon atoms is preferred, and ethylene is particularly preferred. It is preferable that the constituent unit (a1) derived from an α-olefin in the random

copolymer (A1) includes a repeating unit derived from ethylene. Such α-olefins may be used singly or may be used in combination of two or more kinds thereof.

When the sum of all the constituent units constituting the random copolymer (A1) according to the present embodiment is designated as 100 mol%, the content of the α-olefin-derived constituent unit (a1) is preferably equal to or more than 30 mol% and equal to or less than 88 mol%, and more preferably equal to or more than 40 mol% and equal to or less than 78 mol%.

When the content of the α-olefin-derived constituent unit (a1) is equal to or more than the above-described lower limit value, the heat resistance and dimensional stability of an obtainable optical component can be enhanced. Furthermore, when the content of the α-olefin-derived constituent unit (a1) is equal to or less than the above-described upper limit value, transparency and the like of an obtainable optical component can be enhanced.

When the sum of all the constituent units constituting the random copolymer (A1) according to the present embodiment is designated as 100 mol%, the content of the α-olefin-derived constituent unit (a1) is preferably equal to or more than 30 mol% and equal to or less than 88 mol%, and more preferably equal to or more than 40 mol% and equal to or less than 78 mol%.

When the content of the α-olefin-derived constituent unit (a1) is equal to or more than the above-described lower limit value, the heat resistance and dimensional stability of an obtainable optical component can be enhanced. Furthermore, when the content of the α-olefin-derived constituent unit (a1) is equal to or less than the above-described upper limit value, transparency and the like of an obtainable optical component can be enhanced.

It is preferable that the cyclic olefin-derived constituent unit (a2) according to the present embodiment is a constituent unit having an alicyclic structure and derived from a cyclic olefin represented by the Formula [I], [II], [III], [IV], or [V].

Specific examples of the cyclic olefin represented by the Formula [I], [II], [III], [IV], or [V] are also as described above, and it is particularly preferable that the cyclic olefin-derived constituent unit (a2) in the random copolymer (A1) includes a repeating unit derived from one kind or two or more kinds of compounds selected from bicyclo[2.2.1]-2-heptene and tetracyclo[4.4.0.$1^{2,5}$.$1^{7,10}$]-3-dodecene.

It is preferable that the constituent unit (a3) derived from a monomer having a polar group according to the present embodiment is a constituent unit derived from a monomer having at least one polar group selected from a carboxyl group, a hydroxyl group, a sulfonic acid group, an acid anhydride group, and an amino group.

The monomer having a polar group is not particularly limited as long as it is a monomer having the above-described polar group; however, examples thereof include a monomer represented by the following Formula (10).

$$CH_2=CH-R^1-Xp \qquad (10)$$

In the Formula (10), p represents a positive integer of equal to or more than 1 and equal to or less than 3, and is preferably 1.

$R^1$ is a hydrocarbon group having equal to or more than 0 carbon atoms, preferably a hydrocarbon group having equal to or more than 2 carbon atoms, more preferably a hydrocarbon group having equal to or more than 3 and equal to or fewer than 20 carbon atoms, and more preferably a hydrocarbon group having equal to or more than 5 and equal to or fewer than 15 carbon atoms.

X is at least one polar group selected from a carboxyl group, a hydroxyl group, a sulfonic acid group, an acid anhydride group, an epoxy group, and an amino group; more preferably at least one polar group selected from a carboxyl group, a hydroxyl group, and an acid anhydride group; and even more preferably at least one polar group selected from a carboxyl group and a hydroxyl group.

Specific examples of the monomer having a polar group include compounds having at least one polar group selected from a carboxyl group, a hydroxyl group, a sulfonic acid group, an acid anhydride group, an epoxy group, and an amino group, among the compounds described on pages 11 to 17 of Japanese Unexamined Patent Publication No. H02-51510.

Regarding the monomers having these polar groups, one kind thereof may be used alone, or two or more kinds thereof may be used in combination.

Among these, from the viewpoint of having excellent copolymerizability with cyclic olefins, it is preferable that the monomer having a polar group includes at least one selected from acrylic acid, 3-butenoic acid, 4-pentenoic acid, 5-hexenoic acid, 6-heptenoic acid, 7-octenoic acid, 8-nonenoic acid, 9-decenoic acid, 10-undecenoic acid (undecylenic acid), 11-dodecenoic acid, 2-propen-1-ol, 3-buten-1-ol, 4-penten-1-ol, 5-hexen-1-ol, 6-hepten-1-ol, 7-octen-1-ol, 8-nonen-1-ol, undecenol, and 11-dodecen-1-ol; more preferably at least one selected from acrylic acid, 4-pentenoic acid, 6-heptenoic acid, 9-decenoic acid, 10-undecenol, and undecylenic acid; and particularly preferably at least one selected from 10-undecenol and undecylenic acid.

With regard to the random copolymer (A1) according to the present embodiment, in a case where a sum of entire constituent units constituting the random copolymer (A1) is designated as 100 mol%, the content of the constituent unit

(a3) derived from a monomer having a polar group is preferably equal to or more than 0.1 mol%, more preferably equal to or more than 0.2 mol%, and even more preferably equal to or more than 0.5 mol%, from the viewpoint of enhancing the dispersibility of the random copolymer (A1) in the matrix and further enhancing the transparency of an obtainable optical component, and the content is preferably equal to or less than 20 mol%, more preferably equal to or less than 10 mol%, even more preferably equal to or less than 5 mol%, and particularly preferably equal to or less than 2 mol%, from the viewpoint of further enhancing the refractive index, moisture resistance, and heat resistance of an obtainable optical component.

The random copolymer (A1) according to the present embodiment can be produced by, for example, the production methods described in Japanese Unexamined Patent Publication No. H02-51510, Japanese Patent No. 3817015, and Japanese Patent No. 5594712, using an α-olefin having 2 to 20 carbon atoms, a cyclic olefin represented by the Formula [I], [II], [III], [IV], or [V], and a monomer having the above-described polar group.

<Graft copolymer (A2)>

It is preferable that the polar group-containing cyclic olefin-based copolymer (A-a) includes a graft copolymer (A2) obtained by grafting or graft-polymerizing a monomer having the above-described polar group into a cyclic olefin-based polymer having a constituent unit (a2) derived from a cyclic olefin represented by the Formula [I], [II], [III], [IV], or [V]. Furthermore, the cyclic olefin-based polymer having the constituent unit (a2) derived from a cyclic olefin may be a ring-opening polymer of a cyclic olefin represented by the Formula [I], [II], [III], [IV], or [V], or may be a random copolymer of an α-olefin having 2 to 20 carbon atoms and a cyclic olefin represented by the Formula [I], [II], [III], [IV], or [V].

As the cyclic olefin represented by the Formula [I], [II], [III], [IV], or [V], the same olefin as the α-olefin described for the above-described random copolymer (A1) can be used. Therefore, further description thereof will not be repeated here.

It is particularly preferable that the cyclic olefin-derived constituent unit (a2) in the graft copolymer (A2) includes a repeating unit derived from one kind or two or more kinds of compounds selected from bicyclo[2.2.1]-2-heptene and tetracyclo[4.4.0.$1^{2,5}$.$1^{7,10}$]-3-dodecene.

When the sum of all the constituent units constituting the graft copolymer (A2) according to the present embodiment is designated as 100 mol%, the content of the cyclic olefin-derived constituent unit (a2) is preferably equal to or more than 10 mol% and equal to or less than 60 mol%, and more preferably equal to or more than 20 mol% and equal to or less than 50 mol%.

When the content of the cyclic olefin-derived constituent unit (a2) is equal to or more than the above-described lower limit value, transparency and the like of an obtainable optical component can be enhanced. Furthermore, when the content of the cyclic olefin-derived constituent unit (a2) is equal to or less than the above-described upper limit value, the heat resistance and dimensional stability of an obtainable optical component can be enhanced.

It is preferable that the graft copolymer (A2) further has a constituent unit (a1) derived from an α-olefin having 2 to 20 carbon atoms.

As the α-olefin having 2 to 20 carbon atoms, the same α-olefin as the α-olefin described for the above-described random copolymer (A1) can be used. Therefore, further description thereof will not be repeated here.

When the sum of all the constituent units constituting the graft copolymer (A2) according to the present embodiment is designated as 100 mol%, the content of the α-olefin-derived constituent unit (a1) is preferably equal to or more than 30 mol% and equal to or less than 88 mol%, and more preferably equal to or more than 40 mol% and equal to or less than 78 mol%.

When the content of the α-olefin-derived constituent unit (a1) is equal to or more than the above-described lower limit value, the heat resistance and dimensional stability of an obtainable optical component can be enhanced. Furthermore, when the content of the α-olefin-derived constituent unit (a1) is equal to or less than the above-described upper limit value, transparency and the like of an obtainable optical component can be enhanced.

With regard to the graft copolymer (A2) according to the present embodiment, the constituent unit (a3) derived from a monomer having a polar group is a constituent unit derived from a monomer having at least one polar group selected from a carboxyl group, a hydroxyl group, a sulfonic acid group, an acid anhydride group, an epoxy group, and an amino group.

The monomer having a polar group in the graft copolymer (A2) according to the present embodiment is not particularly limited as long as it is a monomer having the above-described polar group; however, examples thereof include a monomer having the above-described polar group described for the random copolymer (A1), acrylic acid, methacrylic acid, maleic acid, and maleic anhydride.

Regarding the monomers having these polar groups, one kind thereof may be used alone, or two or more kinds thereof may be used in combination.

Among these, it is preferable that the monomer includes at least one selected from acrylic acid, methacrylic acid, maleic acid, and maleic anhydride, from the viewpoint of the ease of grafting to the cyclic olefin-based polymer.

With regard to the graft copolymer (A2) according to the present embodiment, when the sum of all the constituent

units constituting the graft copolymer (A2) is designated as 100 mol%, the content of the constituent unit (a3) derived from a monomer having a polar group is preferably equal to or more than 0.1 mol%, more preferably equal to or more than 0.2 mol%, and even more preferably equal to or more than 0.5 mol%, from the viewpoint of enhancing the dispersibility of the graft copolymer (A2) in the matrix and further enhancing the transparency of an obtainable optical component, and the content is preferably equal to or less than 20 mol%, more preferably equal to or less than 10 mol%, even more preferably equal to or less than 5 mol%, and particularly preferably equal to or less than 2 mol%, from the viewpoint of further enhancing the refractive index, moisture resistance, and heat resistance of an obtainable optical component.

The graft copolymer (A2) according to the present embodiment can be obtained by, for example, grafting or graft-polymerizing a monomer having the above-described polar group by a method described in, for example, Japanese Unexamined Patent Publication No. 2016-056318, International Publication No. WO 2008/059938, International Publication No. WO 2010/050437, or the like, to a cyclic olefin-based polymer produced by a production method described in Japanese Unexamined Patent Publication No. H05-320258, Japanese Examined Patent Publication No. H07-13084, or the like.

(Inorganic fine particles (B))

The cyclic olefin-based resin composition according to the present embodiment includes inorganic fine particles (B) having a surface modified by a modifier, and the modifier is one kind or two or more kinds selected from the group consisting of a phosphoric acid ester and a carboxylic acids.

It is preferable that the modifier is a compound represented by the following Formula (1).

$R^1$-X (1)

In the Formula (1), $R^1$ represents a hydrocarbon group having 3 to 18 carbon atoms. Examples of the hydrocarbon group having 3 to 18 carbon atoms include a linear or branched alkyl group, a linear or branched alkenyl group, a linear or branched alkynyl group, a hydrocarbon group having an alicyclic structure, and a hydrocarbon group having an aromatic ring structure. From the viewpoint of obtaining a resin composition having excellent transparency by particularly improving the dispersibility of the modified inorganic particles in the cyclic olefin-based copolymer (A), among these, a chain-like hydrocarbon group having 3 to 18 carbon atoms which does not include a ring structure is preferred, a linear hydrocarbon group having 3 to 18 carbon atoms is more preferred, and a linear hydrocarbon group having 12 to 18 carbon atoms is particularly preferred.

X represents a functional group that produces bonding with the surface of the inorganic fine particles (B), or an atomic group having the functional group.

When the modifier has a functional group that produces bonding with the surface of the inorganic fine particles (B), a condensation reaction occurs between these groups and a functional group existing on the surface of the inorganic particles (for example, a hydroxyl group or a mercapto group), and the surface is modified by the modifier.

Here, the functional group that produces bonding with the surface of the inorganic fine particles (B) is a carboxyl group.

Furthermore, the atomic group having a functional group that produces bonding with the surface of the inorganic particles is an atomic group represented by the following Formula (2):

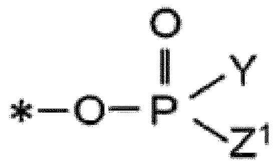

(2)

In Formula (2), Y represents a hydroxyl group; and $Z^1$ represents a hydroxyl group or a hydrocarbon oxy group having 1 to 18 carbon atoms. Symbol * represents a linking bond to $R^1$.

Examples of the hydrocarbon group having 1 to 18 carbon atoms of $Z^1$ include a group represented by $R^1$; and a hydrocarbon group having 1 to 18 carbon atoms, such as a methyl group, an ethyl group, an n-propyl group, an isopropyl group, a vinyl group, an allyl group, or a phenyl group.

Examples of the hydrocarbon oxy group having 1 to 18 carbon atoms of $Z^1$ include a group represented by -O$R^1$; and a hydrocarbon oxy group having 1 to 18 carbon atoms, such as a methoxy group, an ethoxy group, a vinyloxy group, an allyloxy group, or a phenoxy group.

Furthermore, in order to satisfactorily disperse the modified inorganic particles in the transparent resin, it is preferable that the modifier modifies the inorganic particles in a bidentate conformation or a tridentate conformation. Therefore, it is more preferable that $Z^1$ in the Formulae (2) represents a hydroxyl group.

Specific examples of a compound that is used as the modifier according to the present embodiment include butanoic acid, hexanoic acid, heptanoic acid, octanoic acid, nonanoic acid, decanoic acid, dodecanoic acid, tetradecanoic acid, pentadecanoic acid, hexadecanoic acid, heptadecanoic acid, octadecanoic acid, oleic acid, linoleic acid, cyclohexanecarboxylic acid, 1-adamantanecarboxylic acid; phosphoric acid esters such as dodecenyl phosphate, tridecenyl phosphate, tetradecenyl phosphate, pentadecenyl phosphate, hexadecenyl phosphate, heptadecenyl phosphate, octadecenyl phosphate, oleyl phosphate, octadecadienyl phosphate, octadecatrienyl phosphate, and dioleyl phosphate.

The compounds used as the modifier can be used singly or in combination of two or more kinds thereof.

The modifier includes one kind or two or more kinds selected from phosphoric acid esters and carboxylic acids, and it is particularly preferable that the modifier includes one kind or two or more kinds selected from phosphoric acid esters including a hydrocarbon group having 12 to 18 carbon atoms, and carboxylic acids including a hydrocarbon group having 12 to 18 carbon atoms. By including the cyclic olefin-based copolymer (A) and inorganic fine particles (B) modified by a modifier including one kind or two or more kinds selected from phosphoric acid esters including a hydrocarbon group having 12 to 18 carbon atoms and carboxylic acids including a hydrocarbon group having 12 to 18 carbon atoms, the dispersibility of the inorganic fine particles (B) in the matrix can be further improved by an interaction between the two.

The inorganic fine particles (B) according to the present embodiment are not particularly limited as long as they are finely dispersed in the matrix of the cyclic olefin-based copolymer (A); however, from the viewpoint of having an excellent effect of increasing the refractive index of an obtainable optical component, examples include zirconia; titania; alumina; oxides or nitrides of Zr, Ti, Hf, Al, Zn, and lanthanoids; oxides or nitrides of composite metals; and the like. Among these, zirconia, titania, and alumina are preferred. These may be used singly or in combination of two or more kinds thereof. Among these, zirconia and titania are preferred from the viewpoint of being much superior in the effect of increasing the refractive index, and zirconia is more preferred from the viewpoint that deterioration of the cyclic olefin-based copolymer (A), particularly the polar group-containing cyclic olefin-based copolymer (A), can be prevented.

The average particle size $D_{50}$ of the inorganic fine particles (B) is preferably equal to or less than 100 nm, more preferably equal to or less than 80 nm, even more preferably equal to or less than 60 nm, and particularly preferably equal to or less than 20 nm, from the viewpoint of enhancing the dispersibility in the matrix of the cyclic olefin-based copolymer (A) and further enhancing the transparency of an obtainable optical component.

The average particle size $D_{50}$ of the inorganic fine particles (B) is not particularly limited; however, for example, the average particle size is equal to or more than 1 nm.

The average particle size $D_{50}$ of the inorganic fine particles (B) can be measured by, for example, a dynamic light scattering method.

The method for producing inorganic fine particles (B) having a surface modified by a modifier is not particularly limited; however, the inorganic fine particles can be obtained by, for example, the following method.

First, an aqueous dispersion of inorganic fine particles (B), in which the inorganic fine particles (B) are dispersed in water, is obtained. Subsequently, the aqueous dispersion of the inorganic fine particles (B) and the above-described surface modifier are mixed. At this time, the surface modifier can be added as a simple substance of the surface modifier, or a surface modifier that has been mixed in advance with an organic solvent can be added.

Here, the amount of modification of the modifier that modifies the surface of the inorganic fine particles (B) can be adjusted by adjusting the blending ratio of the inorganic fine particles (B) and the surface modifier. The amount of modification of the modifier that modifies the surface of the inorganic fine particles (B) is not particularly limited; however, when the amount of the inorganic fine particles (B) is designated as 100 % by mass, the amount of modification is preferably equal to or more than 20% by mass and equal to or less than 40% by mass, and more preferably equal to or more than 20% by mass and equal to or less than 30% by mass.

By setting the amount of modification of the modifier that modifies the surface of the inorganic fine particles (B) to be in the above-described value range, the dispersibility of the inorganic fine particles (B) in the matrix can be further improved, and an effect of increasing the refractive index by dispersing the inorganic fine particles (B) can be sufficiently obtained.

Subsequently, water is removed by any method from the obtained mixed solution including the aqueous dispersion of the inorganic fine particles (B) and the surface modifier, and the water is replaced with an organic solvent. In a case in which water is removed by a rotary evaporator or the like, a process of adding an organic solvent to the obtained mixed solution including the aqueous dispersion of the inorganic fine particles (B) and the surface modifier, and removing the dispersing medium by evaporation, is repeated as necessary, and a dispersion solution of the inorganic fine particles (B), in which the inorganic fine particles (B) are dispersed in an organic solvent, can be obtained.

(Other ingredients)

In the cyclic olefin-based resin composition according to the present embodiment, if necessary, a phenol-based stabilizer, a higher fatty acid metal salt, an antioxidant, an ultraviolet absorber, a hindered amine-based light stabilizer, a hydrochloric acid absorber, a metal inactivator, an antistatic agent, an antifogging agent, a lubricant, a slip agent, a

nucleating agent, a plasticizer, a flame retardant, a phosphorus-based stabilizer, and the like can be incorporated to the extent that the object of the present invention is not impaired, and the mixing proportions thereof are adequate amounts.

(Method for preparing cyclic olefin-based resin composition)

The cyclic olefin-based resin composition according to the present embodiment can be obtained by methods such as a method of kneading the cyclic olefin-based copolymer (A) and the inorganic fine particles (B) using known kneading apparatuses such as an extruder and a Banbury mixer; and a method of dissolving or dispersing the cyclic olefin-based copolymer (A) and the inorganic fine particles (B) in a common solvent, mixing them, and then evaporating the solvent.
Among these, from the viewpoint of further improving the transparency of an obtainable optical component, a method of dissolving or dispersing the cyclic olefin-based copolymer (A) and the inorganic fine particles (B) in a common solvent, mixing them, and then evaporating the solvent, is preferred.

[Molded product and optical component]

Next, a molded product according to embodiments of the present invention will be described.
The molded product according to the present embodiment is molded using the cyclic olefin-based resin composition according to the present embodiment.
Since the molded product according to the present embodiment is formed of the cyclic olefin-based resin composition according to the present embodiment, the molded product has transparency and a high refractive index. Therefore, the molded product can be suitably used as an optical component in an optical system that needs to identify an image with high accuracy. Optical components are components used in optical equipment and the like, and specific examples include spectacle lenses, fθ lenses, pickup lenses, imaging lenses, sensor lenses such as lenses used for image sensors, prisms, projector lenses, light guiding plates, and in-vehicle camera lenses. The optical component according to the present embodiment can be suitably used particularly as an imaging lens.
In the case of using the molded product according to the present embodiment in optical use applications, since it is essential for the molded product to transmit light rays, it is preferable that the light transmittance is satisfactory. The light transmittance is defined as the spectral light transmittance or the total light transmittance depending on the use application.
In a case in which use for total light rays or in a plurality of wavelength regions, it is necessary that the total light transmittance is high, and the total light transmittance in a state in which an antireflection film is not provided on the surface is equal to or higher than 85%, and preferably 88% to 93%. When the total light transmittance is equal to or higher than 85%, the required amount of light can be secured. Regarding the method for measuring the total light transmittance, any known method can be applied, and the measuring apparatus and the like are not limited; however, for example, a method of molding the cyclic olefin-based resin composition according to the present embodiment into a sheet having a thickness of 3 mm according to ASTM D1003, and measuring the total light transmittance of the sheet obtainable by molding the cyclic olefin-based resin composition according to the present embodiment using a haze meter, and the like may be mentioned.
Furthermore, in the case of an optical system to be utilized only in a specific wavelength region, for example, a laser optical system, the molded product can be used, even if the total light transmittance is not high, as long as the spectral light transmittance in the wavelength region is satisfactory. In this case, the spectral light transmittance at the usage wavelength in a state in which an antireflection film is not provided on the surface is preferably equal to or higher than 85%, and more preferably 86% to 93%. When the spectral light transmittance is equal to or higher than 85%, the required amount of light can be secured. Furthermore, regarding the measurement method and the apparatus, any known method can be applied, and specifically, a spectrophotometer can be mentioned as an example.
In addition, the molded product according to the present embodiment has excellent light transmittance for light having a wavelength of 450 nm to 800 nm.
In the case of using the molded product as an optical component, the light transmittance can be further increased by providing a known antireflection film on the surface.
The molded product according to the present embodiment can be used in various forms such as a spherical shape, a rod shape, a plate shape, a columnar shape, a cylindrical shape, a tubular shape, a fibrous shape, and a film or sheet shape.
The method for molding the cyclic olefin-based resin composition according to the present embodiment to obtain a molded product is not particularly limited, and any known method can be used. Depending on the use application and shape, for example, extrusion molding, injection molding, inflation molding, blow molding, extrusion blow molding, injection blow molding, press molding, vacuum molding, powder slush molding, calender molding, foam molding, and the like can be applied. Among these, an injection molding method is preferred from the viewpoints of moldability and productivity. The molding conditions are appropriately selected depending on the purpose of use or the molding method;

however, for example, the resin temperature in injection molding is appropriately selected in the range of usually 150°C to 400°C, preferably 200°C to 350°C, and more preferably 230°C to 330°C.

The embodiments of the present invention have been described above; however, these are only examples of the present invention, and various configurations other than the above-described configurations can be adopted.

Furthermore, the present invention is not limited to the above-described embodiments, and modifications, improvements, and the like to the extent that the object of the present invention can be achieved are to be included in the present invention.

[Examples]

Hereinafter, the present invention will be described in more detail by way of Examples; however, the present invention is not intended to be limited by these.

<Synthesis of catalyst>

(Cyclopentadienyl)titanium (di-t-butylketimido)dichloride ($CpTiNCtBu_2Cl_2$) was synthesized according to Japanese Patent No. 4245801.

<Production of cyclic olefin-based copolymer (A)>

[Production Example 1]

Nitrogen as an inert gas was allowed to flow into a glass reaction vessel having a volume of 2,000 ml and equipped with a stirring apparatus for 30 minutes at a flow rate of 100 NL/h, subsequently cyclohexane (an amount with which the sum of cyclohexane, tetracyclo [4.4.0.$1^{2,5}$.$1^{7,10}$]-3-dodecene, and undecylenic acid becomes 1,000ml), tetracyclo [4.4.0.$1^{2,5}$.$1^{7,10}$]-3-dodecene (hereinafter, also referred to as tetracyclododecene), and undecylenic acid were introduced therein at the proportions described in Table 1, and then a toluene solution of triisobutylaluminum (26.4 mmol, concentration 1.0 mM/mL) was added thereto. Next, the solvent temperature was raised to 50°C while the polymerization solvent was stirred at a speed of rotation of 600 rpm. After the solvent temperature reached a predetermined temperature, the flowing gas was switched from nitrogen to ethylene, and ethylene was allowed to flow into the reaction vessel at a supply rate of 100 NL/h. After 10 minutes had passed, a toluene solution of (cyclopentadienyl)titanium (di-t-butyl ketimido) dichloride (0.040 mmol) and a toluene solution of methylaluminoxane (12 mmol) were introduced into the glass reaction vessel to initiate polymerization.

After 20 minutes had passed, 5 ml of methanol and acetylacetic acid were added thereto such that the amount of acetylacetic acid would be 20 equivalents with respect to the aluminum concentration, to terminate polymerization, and a polymerization solution including a copolymer of ethylene, tetracyclododecene, and undecylenic acid was obtained. Subsequently, 500 ml of a 1.0 mol/L aqueous solution of hydrochloric acid was added to the reaction vessel, and the mixture was stirred for 1 hour at 600 rpm at 50°C. An oil layer and an aqueous layer were separated, subsequently the oil layer was introduced under stirring into a beaker containing acetone, the amount of acetone being about 3 times the volume of the oil layer, to precipitate a copolymer, and the precipitated copolymer was separated from a filtrate by filtration. The obtained polymer including the solvent was dried under reduced pressure at 130°C for 10 hours, and 3.79 g of a white powdered ethylene-tetracyclodecene-undecylenic acid copolymer (cyclic olefin-based copolymer containing a polar group (A-1)) was obtained.

Table 1

| Polar group-containing cyclic olefin-based copolymer (A) | | A-1 |
|---|---|---|
| $CpTiNCtBu_2Cl_2$ | mmol | 0.040 |
| PMAO | mmol | 12 |
| TIBAL | mmol | 26.4 |
| Total amount of reaction liquid | ml | 1000 |
| TD | mmol | 153 |
| Undecylenic acid | mmol | 12 |
| Polymer yield | g | 3.79 |

(continued)

| Polar group-containing cyclic olefin-based copolymer (A) | | | A-1 |
|---|---|---|---|
| Composition | Ethylene | mol% | 62.3 |
| | TD | mol% | 36.5 |
| | Undecylenic acid | mol% | 1.2 |
| | Glass transition temperature (Tg) | °C | 132 |
| Remarks)<br>* CpTiNCtBu2Cl2: (Cyclopentadienyl)titanium (di-t-butylketimido)dichloride<br>* PMAO: Methylaluminoxane<br>* TIBAL: Triisobutylaluminum<br>* Tetracyclododecene | | | |

[Production Example 2]

APL6015T (100 parts by mass) manufactured by Mitsui Chemicals, Inc. was blended with a solution obtained by dissolving 1.5 parts by mass of maleic anhydride (manufactured by Wako Pure Chemical Industries, Ltd.) and 1.5 parts by mass of t-butyl peroxybenzoate (manufactured by NOF Corporation, trade name PERBUTYL Z) in acetone. Subsequently, the mixture was subjected to melt degeneration using a twin-screw extruder (manufactured by Technovel Corporation, KZW15) at a resin temperature of 250°C, a speed of screw rotation of 200 rpm, and a discharge rate of 25 g/min. Upon extrusion, the radical initiator, the solvent, and unreacted maleic anhydride were degassed in a vacuum. The extruded strands in a molten state were pelletized after cooling, and thus a cyclic olefin-based copolymer (A-2) containing a polar group was obtained.

<Production of surface-modified zirconia>

Surface-modified zirconia having a surface modified by butanoic acid, lauric acid, palmitic acid, or dodecyl phosphoric acid was produced by the following method.

In a 200-mL eggplant-shaped flask loaded with a stirrer tip, each of various hydrophobizing surface modifiers in an amount equivalent to 23% by mass with respect to the zirconia to be treated was taken and mixed with 42 mL of toluene as a water-insoluble organic solvent and 30 mL of methanol as an amphiphilic organic solvent, and the mixture was mixed with 3 mL of an aqueous dispersion liquid of zirconia fine particles (zirconia content: 30% by mass) added thereto. As the aqueous dispersion liquid of zirconia fine particles, (SZR-W) manufactured by Sakai Chemical Industry Co., Ltd. was used. In the mixed solution thus obtained, toluene as a water-insoluble organic solvent and water were dissolved in methanol as an amphiphilic organic solvent to form a uniform liquid phase, and white clouding occurred, which was considered to be attributed to zirconia fine particles.

The mixed liquid obtained as described above was stirred for one hour at room temperature, and then the dispersing medium was evaporated and removed using a rotary evaporator until the volume reached about 3 to 5 mL. Evaporation and removal of the dispersing medium was carried out by reducing the pressure of the atmosphere to a pressure that did not cause bumping in the liquid phase while maintaining the mixed liquid at room temperature.

The mixed liquid remaining in the eggplant-shaped flask exhibited white clouding after the evaporation and removal of the dispersing medium of a first time, and the liquid phase was separated into two phases. The mixed liquid was subjected to an operation of further adding 30 mL of methanol and 42 mL of toluene to the mixed liquid to obtain a cloudy dispersion liquid having no interface again, and performing evaporation again until the amount reached about 3 to 5 mL. By repeating this operation approximately several times, the dispersion liquid could be changed from a cloudy state to a colorless and transparent state, depending on the type and amount of the surface modifier used, and the remaining liquid phase could be made into a single phase. In the present Example, the mixed solvent of water / methanol / toluene was replaced with a solvent containing toluene only by performing the operation 5 to 6 times, and thereby a toluene dispersion liquid of zirconia fine particles was obtained.

Toluene was removed from the toluene dispersion liquid of zirconia fine particles by evaporation, subsequently the residue was vacuum dried for 24 hours at 25°C, and white solid zirconia fine particles were obtained. The zirconia fine particles thus obtained were redispersed in toluene, and the particle size was measured by dynamic light scattering (DLS). The average particle size of lauric acid-modified zirconia fine particles was 18.4 nm.

<Examples and Comparative Examples>

A cyclic olefin-based polymer / zirconia nanoparticle compositized film was produced by the following method. Furthermore, various physical properties were measured or evaluated by the following methods. The obtained results are shown in Table 2.

[Production of cyclic olefin-based polymer / zirconia nanoparticle compositized film]

The cyclic olefin-based copolymers A-1 and A-2 synthesized in Production Examples 1 and 2 and APL6509T (cyclic olefin-based copolymer A-3 containing no polar group) manufactured by Mitsui Chemicals, Inc. were each dissolved in cyclohexane, and 5 mass% solutions were respectively prepared. To this, a 5 mass% cyclohexane solution prepared by using the surface-modified zirconia having a surface modified by butanoic acid, lauric acid, palmitic acid, or dodecyl phosphoric acid, which had been obtained by the above-described method, was added such that the amount of the zirconia nanoparticles would be the proportion shown in Table 2 with respect to the amount of the polymer. The mixture was stirred with a magnetic stirrer at room temperature for 1 hour and was flow cast on a glass plate and bar-coated. The mixture was dried for 24 hours at 25°C, the solvent was removed by vacuum drying for 15 hours at 80°C, and a cyclic olefin-based polymer / zirconia nanoparticle compositized film having a film thickness of 100 μm was obtained for each case.

[Total light transmittance]

The total light transmittance was measured according to JIS K-7105 using a double beam type haze computer HZ-2 manufactured by Suga Test Instruments Co., Ltd., and the total light transmittance was evaluated according to the following criteria.

Evaluation of total light transmittance

AA: Equal to or higher than 90%
A: Equal to or higher than 80% and lower than 90%
B: Lower than 80%

[Glass transition temperature Tg (°C)]

Measurement was performed in an $N_2$ (nitrogen) atmosphere using DSC-6220 manufactured by Shimadzu Scientific Instruments, Inc. The temperature was raised from normal temperature to 200°C at a rate of temperature increase of 10°C/min and then was maintained for 5 minutes, and subsequently the temperature was lowered to -20°C at a rate of temperature decrease of 10°C/min and then was maintained for 5 minutes. Then, the glass transition temperature (Tg) of the polar group-containing cyclic olefin-based copolymer was determined from an endothermic curve obtained at the time of raising the temperature to 200°C at a rate of temperature increase of 10°C/min.

[Refractive index]

The refractive index (nD) at a wavelength of 589 nm was measured using a refractive index / film thickness measuring apparatus (manufactured by Metricon Corporation, PRISM COUPLER Model 2010/M) .

[Evaluation of solvent resistance (toluene)]

0.3 g of each of the cyclic olefin-based polymer / zirconia nanoparticle compositized films having a film thickness of 100 μm, which had been obtained in the Examples and Comparative Examples, was placed in a flask and precisely weighed (Y (g)), toluene was added thereto to obtain a 1 mass% solution, and the film was immersed therein for 24 hours at 25°C. Insoluble matter was captured by filtering the mixture through a membrane filter (pore size 10 μm) and dried for 48 hours at 25°C, and then the mass (Z (g)) of the insoluble matter was measured. The insoluble fraction was calculated by the following formula and was evaluated according to the following criteria.

$$\text{Insoluble fraction (\% by mass)} = (Z / Y) \times 100$$

Evaluation of insoluble fraction (% by mass)

A: Insoluble fraction ≥ percentage content of zirconia (% by mass)
B: Insoluble fraction < percentage content of zirconia (% by mass)

Here, the insoluble matter is considered to include zirconia that has formed a network with the resin. That is, the rating A (insoluble fraction ≥ percentage content of zirconia (mass%)) indicates that the resin and zirconia did not pass through the filter because they sufficiently formed a network, and the rating B (insoluble fraction < percentage content of zirconia (mass%)) indicates that the resin and zirconia passed through the filter because the resin and zirconia did not sufficiently form a network. It was confirmed that the cyclic olefin-based polymer alone and the zirconia nanoparticles alone passed through the membrane filter (pore size 10 μm), and there was no captured insoluble matter.

[Evaluation of abrasion resistance]

Each of the cyclic olefin-based polymer / zirconia nanoparticle compositized films having a film thickness of 100 μm, which had been obtained in the Examples and Comparative Examples, was scratched under a load of 200 g with a sapphire needle having a diameter of 0.3 mm, the depth of an abraded site was measured with a surface roughness meter, and thereby abrasion resistance (scratch resistance) was evaluated.

Evaluation of abrasion resistance (scratch resistance)

A: Less than 5 μm
BB: Equal to or more than 5 μm and less than 10 μm
B: Equal to or more than 10 μm

[Comprehensive evaluation]

For each of the evaluation items of light transmittance, refractive index, solvent resistance, and abrasion resistance, AA was given 3 points, A was given 2 points, BB was given 1 point, and B was given 0 points, and the total scores were calculated. Comprehensive evaluation was carried out according to the following criteria.

Comprehensive evaluation (total score)

A: Equal to or more than 5 points
B: Less than 5 points

[Table 2]

| | | | Example 1 | Example 2 | Example 3 | Example 4 | Example 5 | Example 6 | Example 7 | Example 8 | Example 9 | Comparative Example 1 | Comparative Example 2 |
|---|---|---|---|---|---|---|---|---|---|---|---|---|---|
| Cyclic olefin-based polymer | A-1 | wt% | 67 | 91 | 67 | 50 | 67 | 67 | - | - | - | 100 | - |
| | A-2 | wt% | - | - | - | - | - | - | 67 | 67 | - | - | - |
| | A-3 | wt% | - | - | - | - | - | - | - | - | 91 | - | 91 |
| Surface modifier | No surface modification | | - | - | - | - | - | - | - | - | - | - | Yes |
| | Butanoic acid | | Yes | - | - | - | - | - | Yes | - | - | - | - |
| | Lauric acid | | - | Yes | Yes | Yes | - | - | - | Yes | Yes | - | - |
| | Palmitic acid | | - | - | - | - | - | Yes | - | - | - | - | - |
| | Dodecyl phosphoric acid | | - | - | - | - | Yes | - | - | - | - | - | - |
| | Surface-modified zirconia | wt% | 33 | 9 | 33 | 50 | 33 | 33 | 33 | 33 | 9 | 0 | 9 |
| Light transmittance | | Evaluation | A | AA | AA | AA | AA | AA | A | AA | A | AA | B |
| Refractive index (589 nm) | | | 1.567 | 1.553 | 1.568 | 1.597 | 1.566 | 1.563 | 1.568 | 1.567 | 1.552 | 1.540 | 1.553 |
| | | Evaluation | A | A | A | A | A | A | A | A | A | B | A |
| Solvent resistance | | Evaluation | A | A | A | A | A | A | A | A | B | B | B |
| Abrasion resistance (scratch resistance) | | Evaluation | A | A | A | A | A | A | A | A | BB | B | B |
| Comprehensive evaluation | | Score | 8 | 9 | 9 | 9 | 9 | 9 | 8 | 9 | 5 | 3 | 2 |
| | | Evaluation | A | A | A | A | A | A | A | A | A | B | B |

## Claims

**1.** A cyclic olefin-based resin composition comprising:

a cyclic olefin-based copolymer (A); and
inorganic fine particles (B) having a surface modified by a modifier,
wherein the modifier is one kind or two or more kinds selected from the group consisting of a phosphoric acid ester and a carboxylic acid,
the inorganic fine particles (B) exist in a state of being dispersed in the cyclic olefin-based copolymer (A),
the inorganic fine particles (B) have an average particle size $D_{50}$ of equal to or more than 1 nm and equal to or less than 100 nm, and
the cyclic olefin-based copolymer (A) includes one kind or two or more kinds selected from the following [A-1] and [A-4]:

[A-1] a random copolymer of

an olefin selected from the group comprising ethylene and α-olefins having 3 to 20 carbon atoms and a cyclic olefin represented by the following Formula [I], [II], [III], [IV], or [V]; and

[A-4] a graft-modification product of the item [A-1]

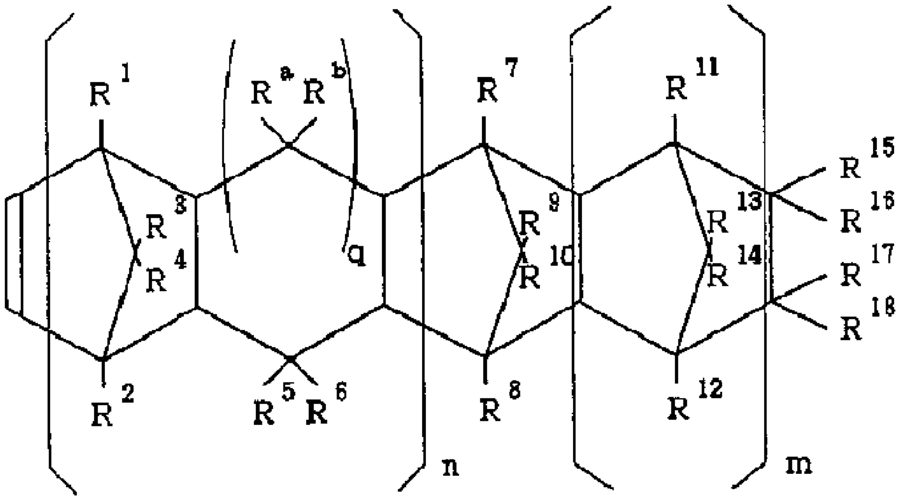

··· [I]

in the Formula [I], n represents 0 or 1; m represents 0 or a positive integer; q represents 0 or 1; $R^1$ to $R^{18}$, $R^a$, and $R^b$ each independently represent a hydrogen atom, a halogen atom, a carboxyl group, a hydroxyl group, a sulfonic acid group, an acid anhydride group, an epoxy group, an amino group, or a hydrocarbon group which may be substituted with a halogen atom, a carboxyl group, a hydroxyl group, a sulfonic acid group, an acid anhydride group, an epoxy group, or an amino group; and $R^{15}$ to $R^{18}$ may be bonded to each other to form a monocyclic or polycyclic ring, where the monocyclic or polycyclic ring may have a double bond and may form an alkylidene group with $R^{15}$ and $R^{16}$ or with $R^{17}$ and $R^{18}$,

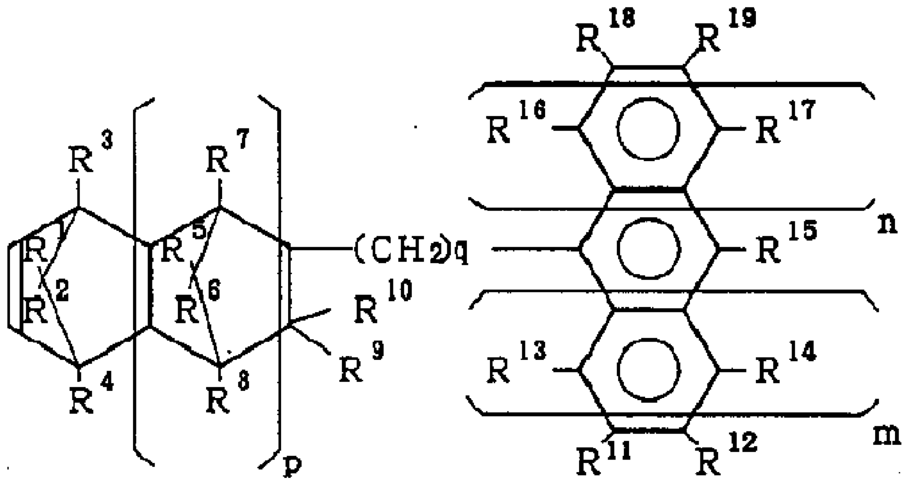

··· [II]

in the Formula [II], p and q each represent 0 or a positive integer; m and n each represent 0, 1, or 2; $R^1$ to $R^{19}$ each independently represent a hydrogen atom, a halogen atom, a carboxyl group, a hydroxyl group, a sulfonic acid group, an acid anhydride group, an epoxy group, an amino group, or a hydrocarbon group or an alkoxy group, which may be substituted with a halogen atom, a carboxyl group, a hydroxyl group, a sulfonic acid group, an acid anhydride group, an epoxy group, or an amino group; a carbon atom to which $R^9$ and $R^{10}$ are bonded may be bonded to a carbon atom to which $R^{13}$ is bonded or to a carbon atom to which $R^{11}$ is bonded, directly or through an alkylene group having 1 to 3 carbon atoms; and in a case of n = m = 0, $R^{15}$ and $R^{12}$ or $R^{15}$ and $R^{19}$ may be bonded to each other to form a monocyclic or polycyclic aromatic ring,

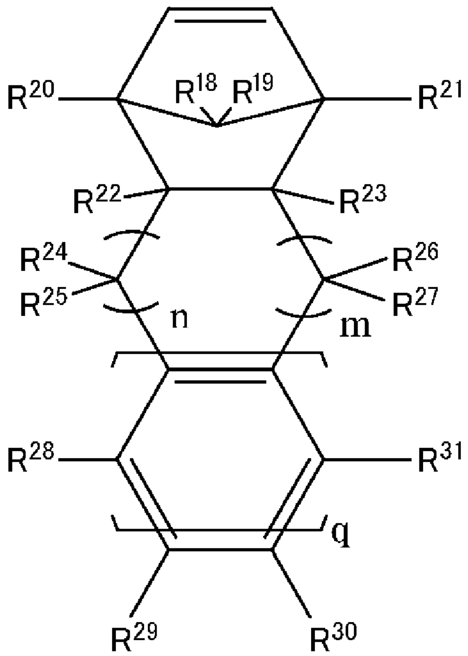

· · · [III]

in the Formula [III], n and m each independently represent 0, 1, or 2; q represents 1, 2, or 3; $R^{18}$ to $R^{31}$ each independently represent a hydrogen atom, a halogen atom, a carboxyl group, a hydroxyl group, a sulfonic acid group, an acid anhydride group, an epoxy group, an amino group, or a hydrocarbon group having 1 to 20 carbon atoms which may be substituted with a halogen atom, a carboxyl group, a hydroxyl group, a sulfonic acid group, an acid anhydride group, an epoxy group, or an amino group; and in a case of q = 1, $R^{28}$ and $R^{29}$, $R^{29}$ and $R^{30}$, or $R^{30}$ and $R^{31}$ may be bonded to each other to form a monocyclic or polycyclic ring; in a case of q = 2 or 3, $R^{28}$ and $R^{28}$, $R^{28}$ and $R^{29}$, $R^{29}$ and $R^{30}$, $R^{30}$ and $R^{31}$, or $R^{31}$ and $R^{32}$ may be bonded to each other to form a monocyclic or polycyclic ring, where the monocyclic ring or the polycyclic ring may have a double bond and the monocyclic ring or the polycyclic ring may be an aromatic ring,

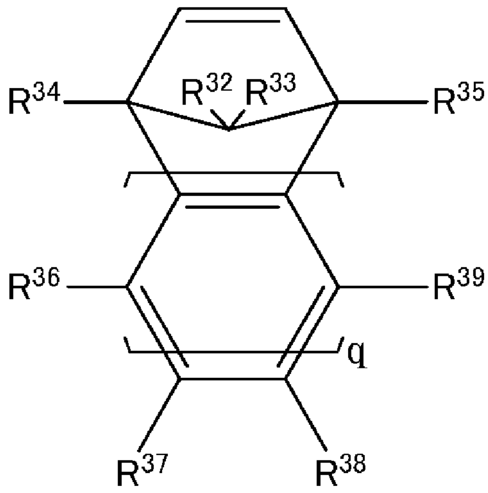

···[IV]

in the Formula [IV], q represents 1, 2, or 3; $R^{32}$ to $R^{39}$ each independently represent a hydrogen atom, a halogen atom, a carboxyl group, a hydroxyl group, a sulfonic acid group, an acid anhydride group, an epoxy group, an amino group, or a hydrocarbon group having 1 to 20 carbon atoms which may be substituted with a halogen atom, a carboxyl group, a hydroxyl group, a sulfonic acid group, an acid anhydride group, an epoxy group, or an amino group; in a case of q = 1, $R^{36}$ and $R^{37}$, $R^{37}$ and $R^{38}$, or $R^{38}$ and $R^{39}$ may be bonded to each other to form a monocyclic or polycyclic ring; and in a case of q = 2 or 3, $R^{36}$ and $R^{36}$, $R^{36}$ and $R^{37}$, $R^{37}$ and $R^{38}$, $R^{38}$ and $R^{39}$, or $R^{39}$ and $R^{39}$ may be bonded to each other to form a monocyclic or polycyclic ring, where the monocyclic ring or the polycyclic ring may have a double bond and the monocyclic ring or the polycyclic ring may be an aromatic ring, or

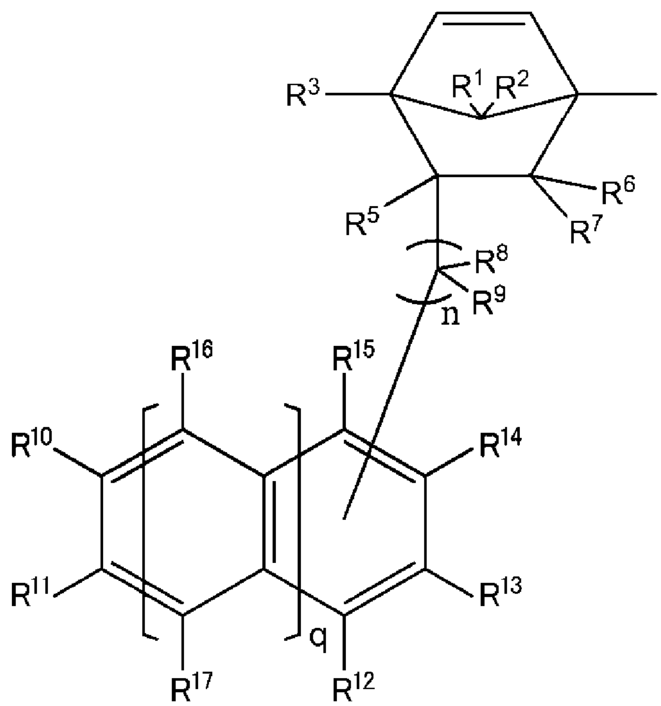

···[V]

in the Formula [V], n and q each independently represent 0, 1, or 2; $R^1$ to $R^{17}$ each independently represent a hydrogen atom, a halogen atom, a carboxyl group, a hydroxyl group, a sulfonic acid group, an acid anhydride group, an epoxy group, an amino group, or a hydrocarbon group having 1 to 20 carbon atoms which may be substituted with a halogen atom, a carboxyl group, a hydroxyl group, a sulfonic acid group, an acid anhydride group, an epoxy group, or an amino group; one of $R^{10}$ to $R^{17}$ represents a linking bond; in a case of q = 0, $R^{10}$ and $R^{11}$, $R^{11}$ and $R^{12}$, $R^{12}$ and $R^{13}$, $R^{13}$ and $R^{14}$, $R^{14}$ and $R^{15}$, or $R^{15}$ and $R^{10}$ may be bonded to each other to form a monocyclic or polycyclic ring; and in a case of q = 1 or 2, $R^{10}$ and $R^{11}$, $R^{11}$ and $R^{17}$, $R^{17}$ and $R^{17}$, $R^{17}$ and $R^{12}$, $R^{12}$ and $R^{13}$, $R^{13}$ and $R^{14}$, $R^{14}$ and $R^{15}$, $R^{15}$ and $R^{16}$, $R^{16}$ and $R^{16}$, or $R^{16}$ and $R^{10}$ may be bonded to each

other to form a monocyclic or polycyclic ring, where the monocyclic ring or the polycyclic ring may have a double bond and the monocyclic ring or the polycyclic ring may be an aromatic ring.

2. The cyclic olefin-based resin composition according to claim 1, wherein the modifier is one kind or two or more kinds selected from the group consisting of a phosphoric acid ester and a carboxylic acid represented by the following Formula (1):

$$R^1\text{-}X \qquad (1)$$

in the formula, $R^1$ represents a hydrocarbon group having 3 to 18 carbon atoms; and X represents a functional group that produces bonding with the surface of the inorganic fine particles (B), or an atomic group having the functional group.

3. The cyclic olefin-based resin composition according to claim 1 or 2,
wherein the modifier includes one kind or two or more kinds selected from a phosphoric acid ester including a hydrocarbon group having 12 to 18 carbon atoms and a carboxylic acid including a hydrocarbon group having 12 to 18 carbon atoms.

4. The cyclic olefin-based resin composition according to any one of claims 1 to 3,

wherein the cyclic olefin-based copolymer (A) includes a polar group-containing cyclic olefin-based copolymer (A-a) including a constituent unit (a3) derived from a monomer having a polar group, and
the polar group is one kind or two or more kinds selected from a carboxyl group, a hydroxyl group, a sulfonic acid group, an acid anhydride group, an epoxy group, and an amino group.

5. The cyclic olefin-based resin composition according to claim 4,
wherein a content of the constituent unit (a3) derived from a monomer having a polar group in the polar group-containing cyclic olefin-based copolymer (A-a) is equal to or more than 0.1 mol% and equal to or less than 20 mol% in a case where a sum of entire constituent units constituting the polar group-containing cyclic olefin-based copolymer (A-a) is designated as 100 mol%.

6. The cyclic olefin-based resin composition according to claim 4 or 5,
wherein the polar group-containing cyclic olefin-based copolymer (A-a) includes one kind or two or more kinds selected from a random copolymer (A1) of the monomer having a polar group and a cyclic olefin, and a graft copolymer (A2) obtained by grafting or graft-polymerizing the monomer having a polar group into a cyclic olefin-based polymer.

7. The cyclic olefin-based resin composition according to claim 6,

wherein the polar group-containing cyclic olefin-based copolymer (A-a) includes a random copolymer (A1) having: a constituent unit (a1) derived from an olefin selected from the group comprising ethylene and an α-olefin having 3 to 20 carbon atoms; a constituent unit (a2) derived from a cyclic olefin represented by the following Formula [I], [II], [III], [IV], or [V] ; and a constituent unit (a3) derived from a monomer having the above-described polar group:

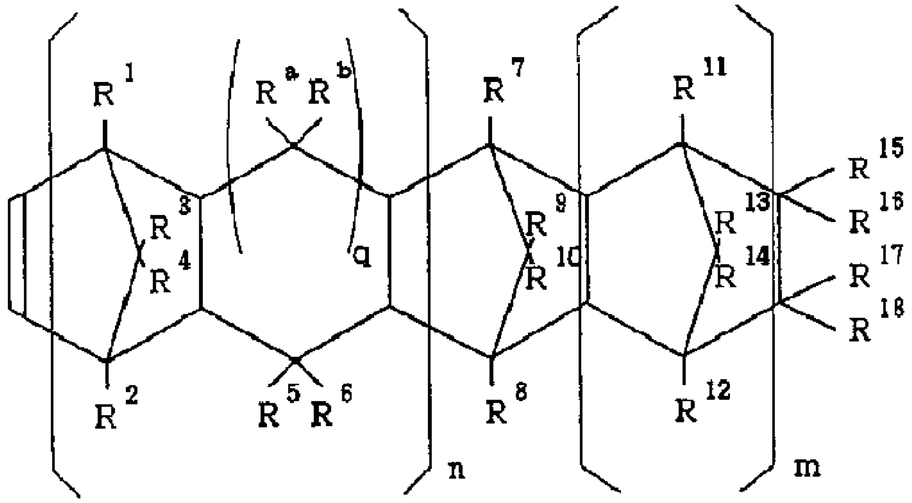

··· [I]

in the Formula [I], n represents 0 or 1; m represents 0 or a positive integer; q represents 0 or 1; $R^1$ to $R^{18}$, $R^a$, and $R^b$ each independently represent a hydrogen atom, a halogen atom, a carboxyl group, a hydroxyl group, a sulfonic acid group, an acid anhydride group, an epoxy group, an amino group, or a hydrocarbon group or an alkoxy group, both of which may be substituted with a halogen atom, a carboxyl group, a hydroxyl group, a sulfonic acid group, an acid anhydride group, an epoxy group, or an amino group; $R^{15}$ to $R^{18}$ may be bonded to each other to form a monocyclic or polycyclic ring; and the monocyclic or polycyclic ring may have a double bond and may form an alkylidene group with $R^{15}$ and $R^{16}$ or with $R^{17}$ and $R^{18}$,

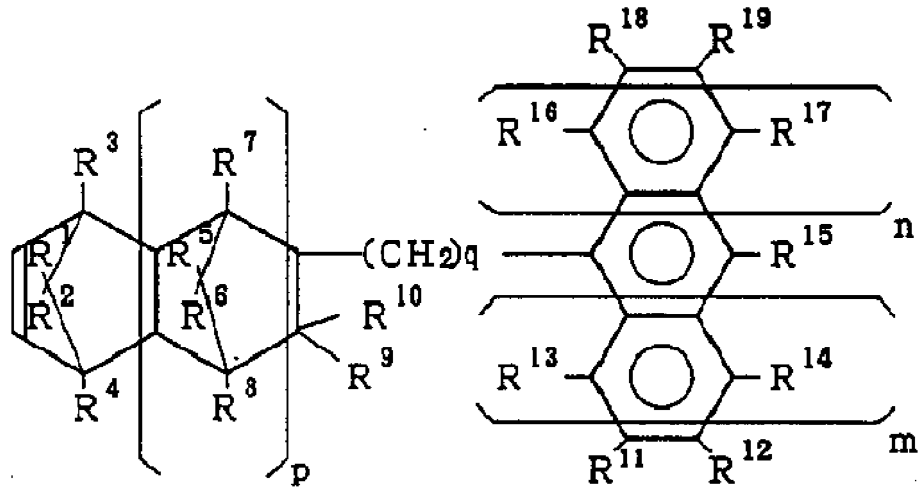

··· [II]

in the Formula [II], p and q each represent 0 or a positive integer; m and n each represent 0, 1, or 2; $R^1$ to $R^{19}$ each independently represent a hydrogen atom, a halogen atom, a carboxyl group, a hydroxyl group, a sulfonic acid group, an acid anhydride group, an epoxy group, an amino group, or a hydrocarbon group or an alkoxy group, both of which may be substituted with a halogen atom, a carboxyl group, a hydroxyl group, a sulfonic acid group, an acid anhydride group, an epoxy group, or an amino group; a carbon atom to which $R^9$ and $R^{10}$ are bonded may be bonded to a carbon atom to which $R^{13}$ is bonded or to a carbon atom to which $R^{11}$ is bonded, directly or through an alkylene group having 1 to 3 carbon atoms; and in a case of n = m = 0, $R^{15}$ and $R^{12}$ or $R^{15}$ and $R^{19}$ may be bonded to each other to form a monocyclic or polycyclic aromatic ring,

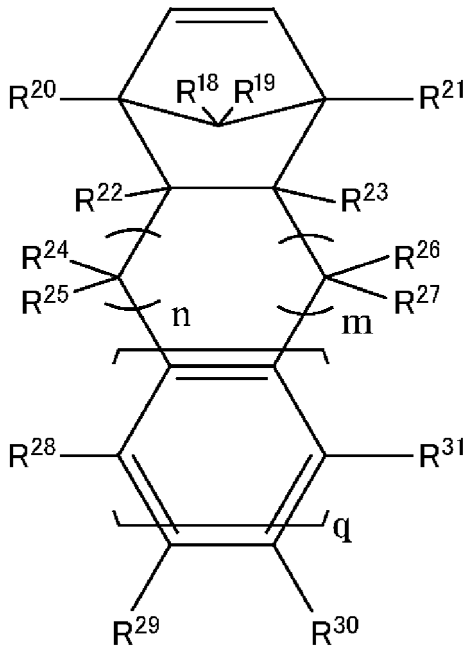

··· [III]

in the Formula [III], n and m each independently represent 0, 1, or 2; q represents 1, 2, or 3; $R^{18}$ to $R^{31}$ each independently represent a hydrogen atom, a halogen atom, a carboxyl group, a hydroxyl group, a sulfonic acid group, an acid anhydride group, an epoxy group, an amino group, or a hydrocarbon group having 1 to 20 carbon atoms which may be substituted with a halogen atom, a carboxyl group, a hydroxyl group, a sulfonic acid group, an acid anhydride group, an epoxy group, or an amino group; in a case of q = 1, $R^{28}$ and $R^{29}$, $R^{29}$ and $R^{30}$, or $R^{30}$ and $R^{31}$ may be bonded to each other to form a monocyclic or polycyclic ring; in a case of q = 2 or 3, $R^{28}$ and $R^{28}$, $R^{28}$ and $R^{29}$, $R^{29}$ and $R^{30}$, $R^{30}$ and $R^{31}$, or $R^{31}$ and $R^{31}$ may be bonded to each other to form a monocyclic or polycyclic ring; the monocyclic ring or the polycyclic ring may have a double bond; and the monocyclic ring or the polycyclic ring may be an aromatic ring,

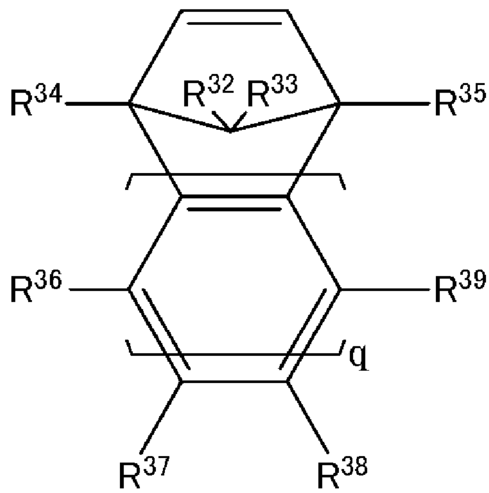

··· [IV]

in the Formula [IV], q represents 1, 2, or 3; $R^{32}$ to $R^{39}$ each independently represent a hydrogen atom, a halogen atom, a carboxyl group, a hydroxyl group, a sulfonic acid group, an acid anhydride group, an epoxy group, an amino group, or a hydrocarbon group having 1 to 20 carbon atoms which may be substituted with a halogen atom, a carboxyl group, a hydroxyl group, a sulfonic acid group, an acid anhydride group, an epoxy group, or an amino group; in a case of q = 1, $R^{36}$ and $R^{37}$, $R^{37}$ and $R^{38}$, or $R^{38}$ and $R^{39}$ may be bonded to each other to form a monocyclic or polycyclic ring; in a case of q = 2 or 3, $R^{36}$ and $R^{36}$, $R^{36}$ and $R^{37}$, $R^{37}$ and $R^{38}$, $R^{38}$ and $R^{39}$, or $R^{39}$ and $R^{39}$ may be bonded to each other to form a monocyclic or polycyclic ring; the monocyclic ring or the polycyclic ring may have a double bond; and the monocyclic ring or the polycyclic ring may be an aromatic ring,

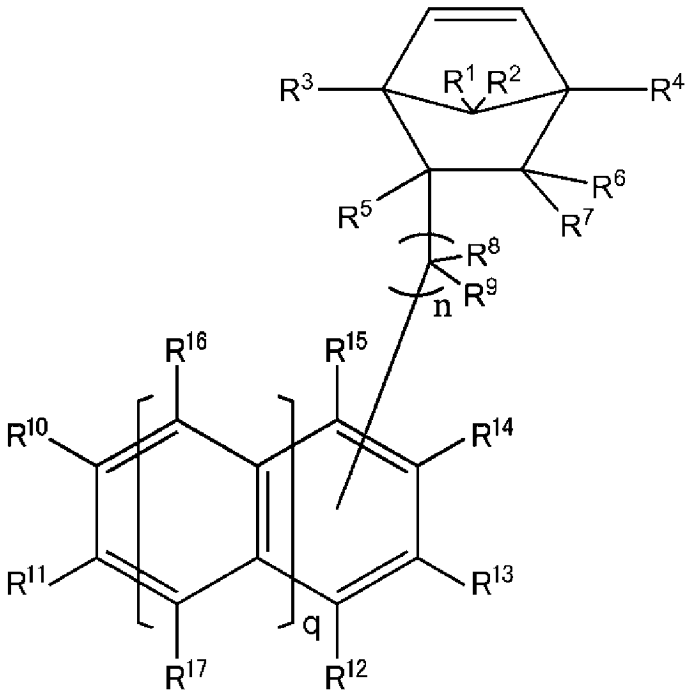

$\cdots$ [V]

in the Formula [V], n and q each independently represent 0, 1, or 2; $R^1$ to $R^{17}$ each independently represent a hydrogen atom, a halogen atom, a carboxyl group, a hydroxyl group, a sulfonic acid group, an acid anhydride group, an epoxy group, an amino group, or a hydrocarbon group having 1 to 20 carbon atoms which may be substituted with a halogen atom, a carboxyl group, a hydroxyl group, a sulfonic acid group, an acid anhydride group, an epoxy group, or an amino group; one of $R^{10}$ to $R^{17}$ represents a linking bond; in a case of q = 0, $R^{10}$ and $R^{11}$, $R^{11}$ and $R^{12}$, $R^{12}$ and $R^{13}$, $R^{13}$ and $R^{14}$, $R^{14}$ and $R^{15}$, or $R^{15}$ and $R^{10}$ may be bonded to each other to form a monocyclic or polycyclic ring; in a case of q = 1 or 2, $R^{10}$ and $R^{11}$, $R^{11}$ and $R^{17}$, $R^{17}$ and $R^{17}$, $R^{17}$ and $R^{12}$, $R^{12}$ and $R^{13}$, $R^{13}$ and $R^{14}$, $R^{14}$ and $R^{15}$, $R^{15}$ and $R^{16}$, $R^{16}$ and $R^{16}$, or $R^{16}$ and $R^{10}$ may be bonded to each other to form a monocyclic or polycyclic ring; the monocyclic ring or the polycyclic ring may have a double bond; and the monocyclic ring or the polycyclic ring may be an aromatic ring.

**8.** The cyclic olefin-based resin composition according to claim 7,
wherein the cyclic olefin-derived constituent unit (a2) in the random copolymer (A1) includes a repeating unit derived from one kind or two or more kinds of compounds selected from bicyclo[2.2.1]-2-heptene and tetracyclo [$4.4.0.1^{2,5}.1^{7,10}$]-3-dodecene.

**9.** The cyclic olefin-based resin composition according to claim 7 or 8,
wherein the olefin-derived constituent unit (a1) in the random copolymer (A1) includes a repeating unit derived from ethylene.

**10.** The cyclic olefin-based resin composition according to any one of claims 7 to 9,

wherein the monomer having a polar group includes a monomer represented by the following Formula (10):

$$CH_2=CH-R^1-Xp \qquad (10)$$

in the Formula (10), p represents a positive integer of equal to or more than 1 and equal to or less than 3; $R^1$ represents a hydrocarbon group having 0 or more carbon atoms; and X represents one kind or two or more kinds of polar groups selected from a carboxyl group, a hydroxyl group, a sulfonic acid group, an acid anhydride group, an epoxy group, and an amino group.

**11.** The cyclic olefin-based resin composition according to claim 10,
wherein the monomer having a polar group includes one kind or two or more kinds selected from undecenol and undecylenic acid.

**12.** The cyclic olefin-based resin composition according to claim 6,

wherein the polar group-containing cyclic olefin-based copolymer (A-a) includes a graft copolymer (A2) obtained by grafting or graft-polymerizing the monomer having a polar group into a cyclic olefin-based polymer having a constituent unit (a2) derived from a cyclic olefin represented by the following Formula [I], [II], [III], [IV], or [V]:

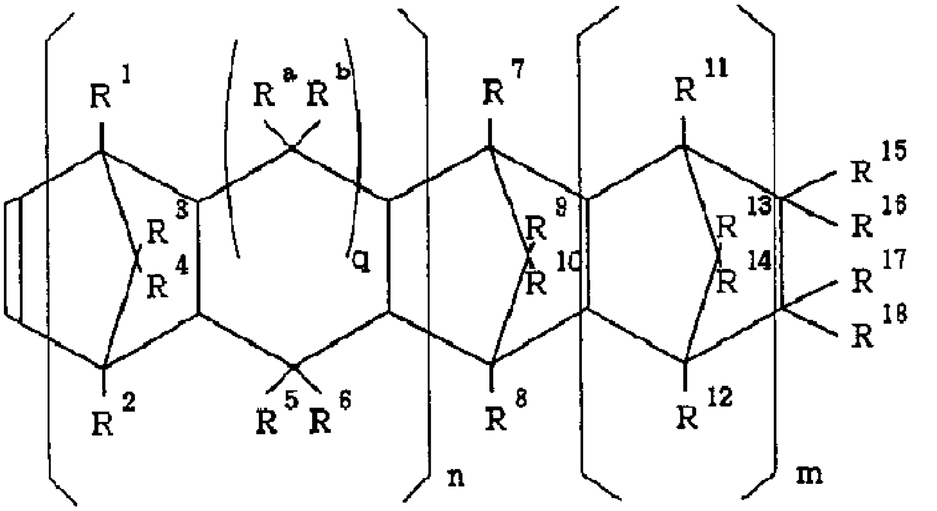

··· [I]

in the Formula [I], n represents 0 or 1; m represents 0 or a positive integer; q represents 0 or 1; $R^1$ to $R^{18}$, $R^a$, and $R^b$ each independently represent a hydrogen atom, a halogen atom, a carboxyl group, a hydroxyl group, a sulfonic acid group, an acid anhydride group, an epoxy group, an amino group, or a hydrocarbon group which may be substituted with a halogen atom, a carboxyl group, a hydroxyl group, a sulfonic acid group, an acid anhydride group, an epoxy group, or an amino group; $R^{15}$ to $R^{18}$ may be bonded to each other to form a monocyclic or polycyclic ring; and the monocyclic or polycyclic ring may have a double bond and may form an alkylidene group with $R^{15}$ and $R^{16}$ or with $R^{17}$ and $R^{18}$,

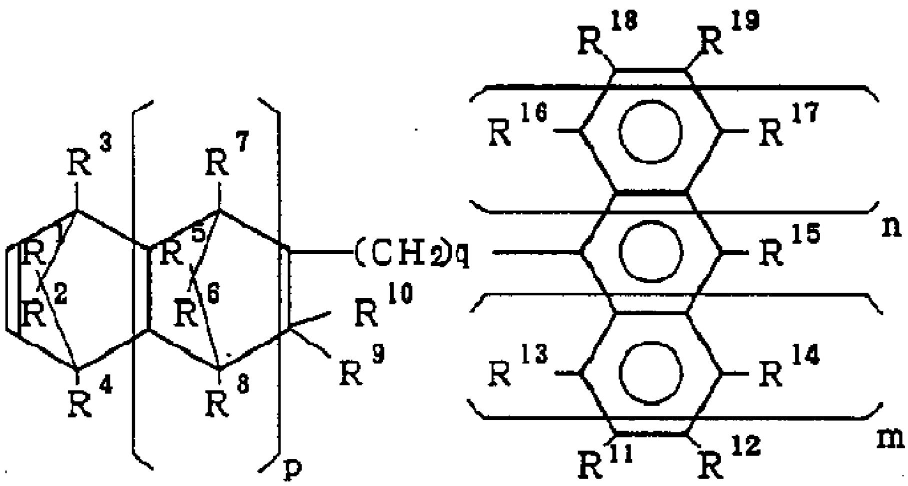

··· [II]

in the Formula [II], p and q each represent 0 or a positive integer; m and n each represent 0, 1, or 2; $R^1$ to $R^{19}$ each independently represent a hydrogen atom, a halogen atom, a carboxyl group, a hydroxyl group, a sulfonic acid group, an acid anhydride group, an epoxy group, an amino group, or a hydrocarbon group or an alkoxy group, both of which may be substituted with a halogen atom, a carboxyl group, a hydroxyl group, a sulfonic acid group, an acid anhydride group, an epoxy group, or an amino group; a carbon atom to which $R^9$ and $R^{10}$ are bonded may be bonded to a carbon atom to which $R^{13}$ is bonded or to a carbon atom to which $R^{11}$ is bonded, directly or through an alkylene group having 1 to 3 carbon atoms; and in a case of n = m = 0, $R^{15}$ and $R^{12}$ or $R^{15}$ and $R^{19}$ may be bonded to each other to form a monocyclic or polycyclic aromatic ring,

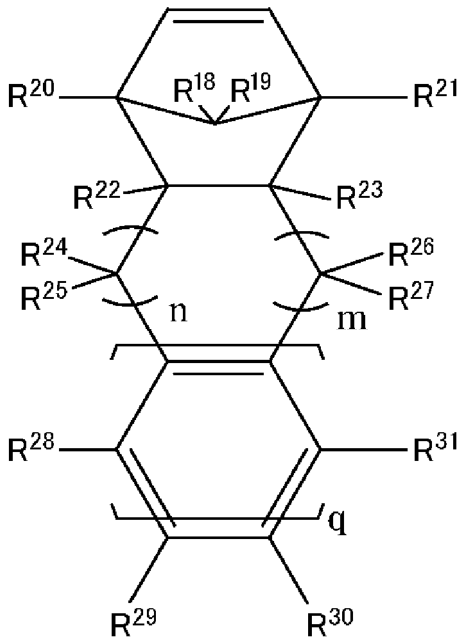

... [III]

in the Formula [III], n and m each independently represent 0, 1, or 2; q represents 1, 2, or 3; $R^{18}$ to $R^{31}$ each independently represent a hydrogen atom, a halogen atom, a carboxyl group, a hydroxyl group, a sulfonic acid group, an acid anhydride group, an epoxy group, an amino group, or a hydrocarbon group having 1 to 20 carbon atoms which may be substituted with a halogen atom, a carboxyl group, a hydroxyl group, a sulfonic acid group, an acid anhydride group, an epoxy group, or an amino group; in a case of q = 1, $R^{28}$ and $R^{29}$, $R^{29}$ and $R^{30}$, or $R^{30}$ and $R^{31}$ may be bonded to each other to form a monocyclic or polycyclic ring; in a case of q = 2 or 3, $R^{28}$ and $R^{28}$, $R^{28}$ and $R^{29}$, $R^{29}$ and $R^{30}$, $R^{30}$ and $R^{31}$, or $R^{31}$ and $R^{31}$ may be bonded to each other to form a monocyclic or polycyclic ring; the monocyclic ring or the polycyclic ring may have a double bond; and the monocyclic ring or the polycyclic ring may be an aromatic ring,

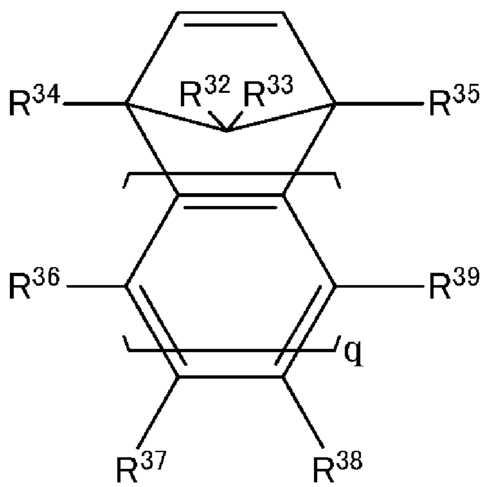

... [IV]

in the Formula [IV], q represents 1, 2, or 3; $R^{32}$ to $R^{39}$ each independently represent a hydrogen atom, a halogen atom, a carboxyl group, a hydroxyl group, a sulfonic acid group, an acid anhydride group, an epoxy group, an amino group, or a hydrocarbon group having 1 to 20 carbon atoms which may be substituted with a halogen atom, a carboxyl group, a hydroxyl group, a sulfonic acid group, an acid anhydride group, an epoxy group, or an amino group; in a case of q = 1, $R^{36}$ and $R^{37}$, $R^{37}$ and $R^{38}$, or $R^{38}$ and $R^{39}$ may be bonded to each other to form a monocyclic or polycyclic ring; in a case of q = 2 or 3, $R^{36}$ and $R^{36}$, $R^{36}$ and $R^{37}$, $R^{37}$ and $R^{38}$, $R^{38}$ and $R^{39}$, or $R^{39}$ and $R^{39}$ may be bonded to each other to form a monocyclic or polycyclic ring; the monocyclic ring or the polycyclic ring may have a double bond; and the monocyclic ring or the polycyclic ring may be an aromatic ring,

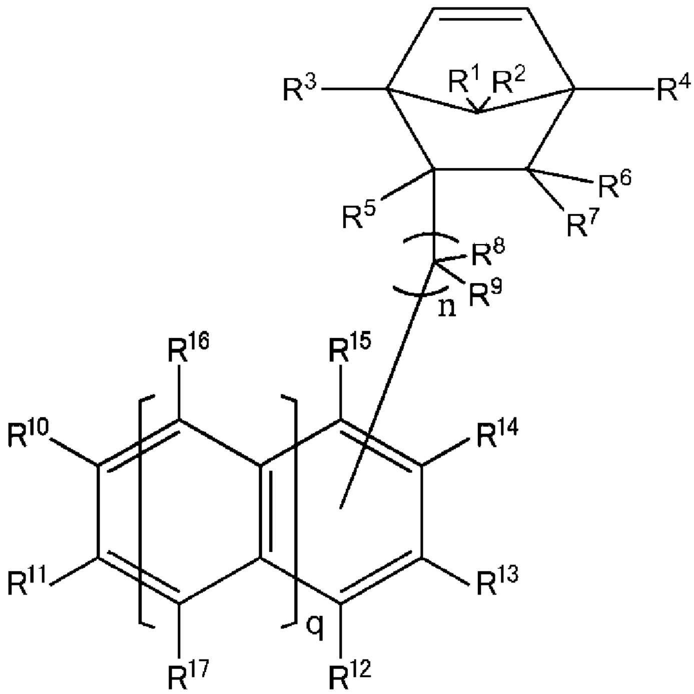

... [V]

in the Formula [V], n and q each independently represent 0, 1, or 2; $R^1$ to $R^{17}$ each independently represent a hydrogen atom, a halogen atom, a carboxyl group, a hydroxyl group, a sulfonic acid group, an acid anhydride group, an epoxy group, an amino group, or a hydrocarbon group having 1 to 20 carbon atoms which may be substituted with a halogen atom, a carboxyl group, a hydroxyl group, a sulfonic acid group, an acid anhydride group, an epoxy group, or an amino group; one of $R^{10}$ to $R^{17}$ represents a linking bond; in a case of q = 0, $R^{10}$ and $R^{11}$, $R^{11}$ and $R^{12}$, $R^{12}$ and $R^{13}$, $R^{13}$ and $R^{14}$, $R^{14}$ and $R^{15}$, or $R^{15}$ and $R^{10}$ may be bonded to each other to form a monocyclic or polycyclic ring; in a case of q = 1 or 2, $R^{10}$ and $R^{11}$, $R^{11}$ and $R^{17}$, $R^{17}$ and $R^{17}$, $R^{17}$ and $R^{12}$, $R^{12}$ and $R^{13}$, $R^{13}$ and $R^{14}$, $R^{14}$ and $R^{15}$, $R^{15}$ and $R^{16}$, $R^{16}$ and $R^{16}$, or $R^{16}$ and $R^{10}$ may be bonded to each other to form a monocyclic or polycyclic ring; the monocyclic ring or the polycyclic ring may have a double bond; and the monocyclic ring or the polycyclic ring may be an aromatic ring.

**13.** The cyclic olefin-based resin composition according to claim 12, wherein the cyclic olefin-derived constituent unit (a2) in the graft copolymer (A2) includes a repeating unit derived from one kind or two or more kinds of compounds selected from bicyclo[2.2.1]-2-heptene and tetracyclo [$4.4.0.1^{2,5}.1^{7,10}$]-3-dodecene.

**14.** The cyclic olefin-based resin composition according to claim 12 or 13, wherein the graft copolymer (A2) further has a constituent unit (a1) derived from an olefin selected from the group comprising ethylene and an $\alpha$-olefin having 3 to 20 carbon atoms.

**15.** The cyclic olefin-based resin composition according to any one of claims 12 to 14, wherein the monomer having a polar group includes one kind or two or more kinds selected from acrylic acid, methacrylic acid, maleic acid, and maleic anhydride.

**16.** The cyclic olefin-based resin composition according to any one of claims 1 to 15, wherein the inorganic fine particles (B) include one kind or two or more kinds selected from zirconia, titania, and alumina.

**17.** The cyclic olefin-based resin composition according to any one of claims 1 to 16, wherein a content of the inorganic fine particles (B) is equal to or more than 5% by mass and equal to or less than 60% by mass when a total amount of the cyclic olefin-based resin composition is designated as 100% by mass.

**18.** The cyclic olefin-based resin composition according to any one of claims 1 to 17,

wherein in a case where a film having a film thickness of equal to or more than 100 $\mu$m and equal to or less than 300

μm is produced using the cyclic olefin-based resin composition,
a refractive index (nD) of the film at a wavelength of 589 nm is equal to or higher than 1.545.

**19.** A molded product obtained by using the cyclic olefin-based resin composition according to any one of claims 1 to 18.

**20.** An optical component comprising the molded product according to claim 19.

**Patentansprüche**

**1.** Auf cyclischem Olefin basierende Harzzusammensetzung, umfassend:

ein auf cyclischem Olefin basierendes Copolymer (A); und
anorganische Feinpartikel (B), die eine Oberfläche aufweisen, die durch einen Modifikator modifiziert ist,
wobei der Modifikator eine Art oder zwei oder mehr Arten, ausgewählt aus der Gruppe, bestehend aus einem Phosphorsäureester und einer Carbonsäure, ist,
die anorganischen Feinpartikel (B) in einem Zustand vorliegen, in dem sie in dem auf cyclischem Olefin basierenden Copolymer (A) dispergiert sind,
die anorganischen Feinpartikel (B) eine durchschnittliche Partikelgröße $D_{50}$ von gleich oder mehr als 1 nm und gleich oder weniger als 100 nm aufweisen, und
das auf cyclischem Olefin basierende Copolymer (A) eine Art oder zwei oder mehr Arten umfasst, die aus den folgenden [A-1] und [A-4] ausgewählt sind:

[A-1] ein statistisches Copolymer von

einem Olefin, ausgewählt aus der Gruppe, umfassend Ethylen und α-Olefine mit 3 bis 20 Kohlenstoffatomen, und
einem cyclischen Olefin, dargestellt durch die folgende Formel [I], [II], [III], [IV] oder [V]; und

[A-4] ein Pfropfmodifikationsprodukt des Gegenstands [A-1]

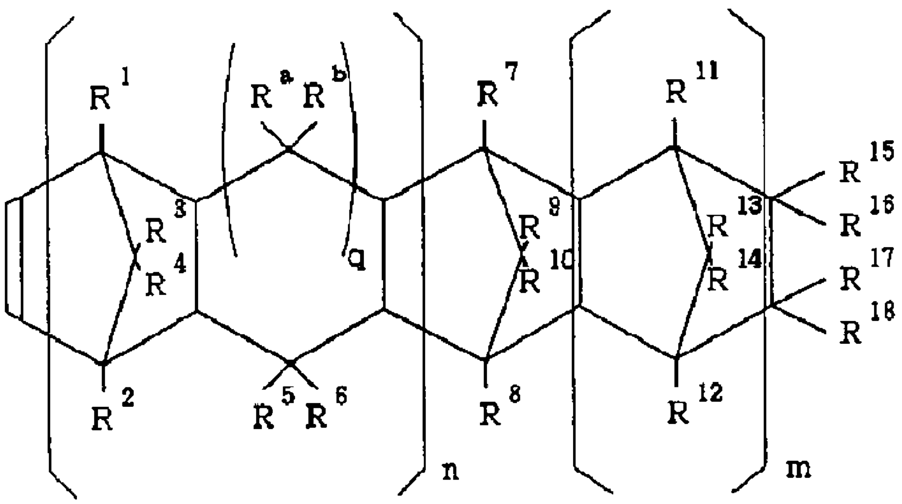

··· [I]

wobei in der Formel [I] n 0 oder 1 darstellt; m 0 oder eine positive ganze Zahl darstellt; q 0 oder 1 darstellt; $R^1$ bis $R^{18}$, $R^a$ und $R^b$ jeweils unabhängig voneinander ein Wasserstoffatom, ein Halogenatom, eine Carboxylgruppe, eine Hydroxylgruppe, eine Sulfonsäuregruppe, eine Säureanhydridgruppe, eine Epoxygruppe, eine Aminogruppe oder eine Kohlenwasserstoffgruppe, die mit einem Halogenatom, einer Carboxylgruppe, einer Hydroxylgruppe, einer Sulfonsäuregruppe, einer Säureanhydridgruppe, einer Epoxygruppe oder einer Aminogruppe substituiert sein kann, darstellen; und $R^{15}$ bis $R^{18}$ aneinander gebunden sein können, um einen monocyclischen oder polycyclischen Ring zu bilden, wobei der monocyclische oder polycyclische Ring eine Doppelbindung aufweisen kann und mit $R^{15}$ und $R^{16}$ oder mit $R^{17}$ und $R^{18}$ eine Alkylidengruppe bilden kann,

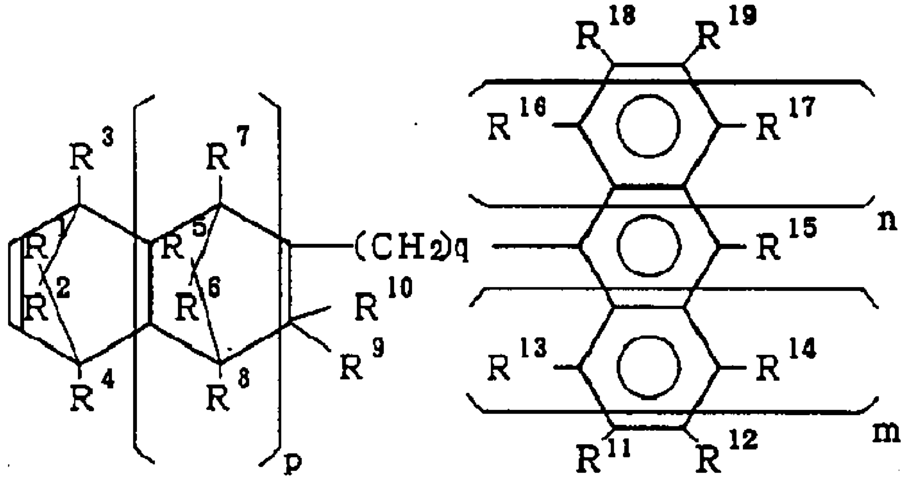

··· [II]

wobei in der Formel [II] p und q jeweils 0 oder eine positive ganze Zahl darstellen; m und n jeweils 0, 1 oder 2 darstellen; $R^1$ bis $R^{19}$ jeweils unabhängig voneinander ein Wasserstoffatom, ein Halogenatom, eine Carboxylgruppe, eine Hydroxylgruppe, eine Sulfonsäuregruppe, eine Säureanhydridgruppe, eine Epoxygruppe, eine Aminogruppe, oder eine Kohlenwasserstoffgruppe oder eine Alkoxygruppe, die mit einem Halogenatom, einer Carboxylgruppe, einer Hydroxylgruppe, einer Sulfonsäuregruppe, einer Säureanhydridgruppe, einer Epoxygruppe oder einer Aminogruppe substituiert sein können, darstellen; ein Kohlenstoffatom, an das $R^9$ und $R^{10}$ gebunden sind, an ein Kohlenstoffatom, an das $R^{13}$ gebunden ist, oder an ein Kohlenstoffatom, an das $R^{11}$ gebunden ist, direkt oder über eine Alkylengruppe mit 1 bis 3 Kohlenstoffatomen gebunden sein kann; und im Fall von n = m = 0 $R^{15}$ und $R^{12}$ oder $R^{15}$ und $R^{19}$ aneinander gebunden sein können, um einen monocyclischen oder polycyclischen aromatischen Ring zu bilden,

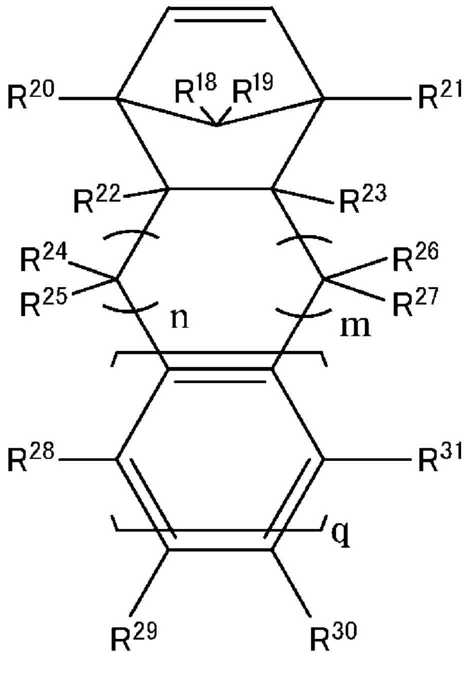

··· [III]

wobei in der Formel [III] n und m jeweils unabhängig voneinander 0, 1 oder 2 darstellen; q 1, 2 oder 3 darstellt; $R^{18}$ bis $R^{31}$ jeweils unabhängig voneinander ein Wasserstoffatom, ein Halogenatom, eine Carboxylgruppe, eine Hydroxylgruppe, eine Sulfonsäuregruppe, eine Säureanhydridgruppe, eine Epoxygruppe, eine Aminogruppe, oder eine Kohlenwasserstoffgruppe mit 1 bis 20 Kohlenstoffatomen, die mit einem Halogenatom, einer Carboxylgruppe, einer Hydroxylgruppe, einer Sulfonsäuregruppe, einer Säureanhydridgruppe, einer Epoxygruppe oder einer Aminogruppe substituiert sein kann, darstellen; und im Fall von q = 1 $R^{28}$ und $R^{29}$, $R^{29}$ und $R^{30}$ oder $R^{30}$ und $R^{31}$ aneinander gebunden sein können, um einen monocyclischen oder polycyclischen Ring zu bilden; im Fall von q = 2 oder 3 $R^{28}$ und $R^{28}$, $R^{28}$ und $R^{29}$, $R^{29}$ und $R^{30}$, $R^{30}$ und $R^{31}$ oder $R^{31}$ und $R^{31}$ aneinander gebunden sein können, um einen monocyclischen oder polycyclischen

Ring zu bilden, wobei der monocyclische Ring oder der polycyclische Ring eine Doppelbindung aufweisen kann und der monocyclische Ring oder der polycyclische Ring ein aromatischer Ring sein kann,

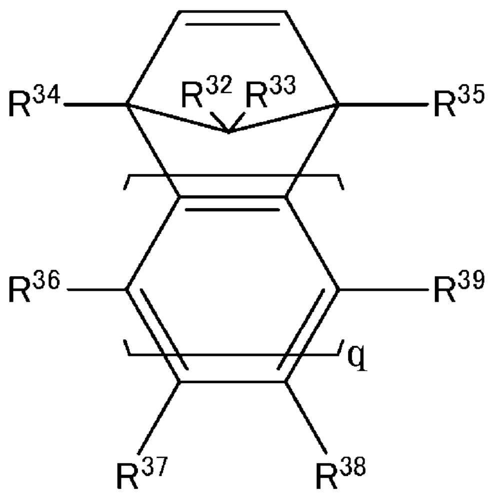

··· [IV]

wobei in der Formel [IV] q 1, 2 oder 3 darstellt; $R^{32}$ bis $R^{39}$ jeweils unabhängig voneinander ein Wasserstoffatom, ein Halogenatom, eine Carboxylgruppe, eine Hydroxylgruppe, eine Sulfonsäuregruppe, eine Säureanhydridgruppe, eine Epoxygruppe, eine Aminogruppe oder eine Kohlenwasserstoffgruppe mit 1 bis 20 Kohlenstoffatomen, die mit einem Halogenatom, einer Carboxylgruppe, einer Hydroxylgruppe, einer Sulfonsäuregruppe, einer Säureanhydridgruppe, einer Epoxygruppe oder einer Aminogruppe substituiert sein kann, darstellen; im Fall von q = 1 $R^{36}$ und $R^{37}$, $R^{37}$ und $R^{38}$ oder $R^{38}$ und $R^{39}$ aneinander gebunden sein können, um einen monocyclischen oder polycyclischen Ring zu bilden; und im Fall von q = 2 oder 3 $R^{36}$ und $R^{36}$, $R^{36}$ und $R^{37}$, $R^{37}$ und $R^{38}$, $R^{38}$ und $R^{39}$ oder $R^{39}$ und $R^{39}$ aneinander gebunden sein können, um einen monocyclischen oder polycyclischen Ring zu bilden, wobei der monocyclische Ring oder der polycyclische Ring eine Doppelbindung aufweisen kann und der monocyclische Ring oder der polycyclische Ring ein aromatischer Ring sein kann, oder

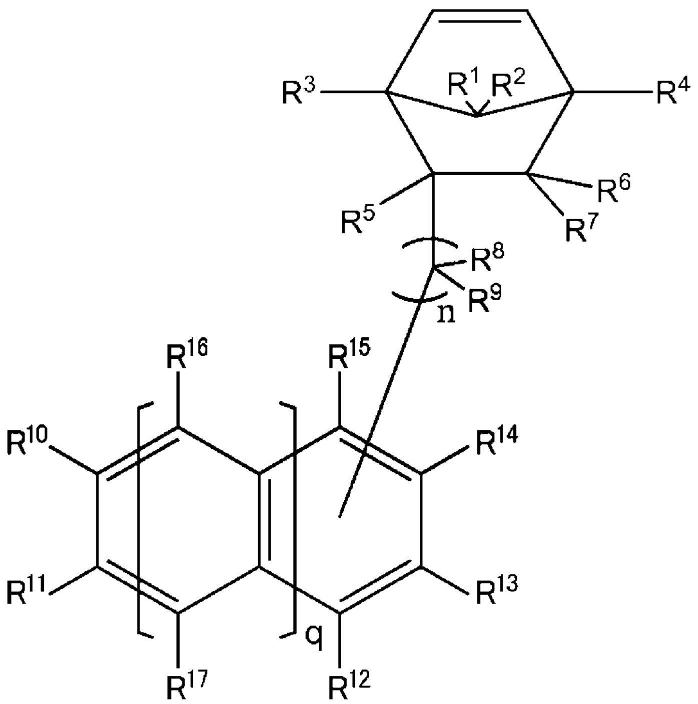

··· [V]

wobei in der Formel [V] n und q jeweils unabhängig voneinander 0, 1 oder 2 darstellen; $R^1$ bis $R^{17}$ jeweils unabhängig voneinander ein Wasserstoffatom, ein Halogenatom, eine Carboxylgruppe, eine Hydroxylgruppe, eine Sulfonsäuregruppe, eine Säureanhydridgruppe, eine Epoxygruppe, eine Aminogruppe oder

eine Kohlenwasserstoffgruppe mit 1 bis 20 Kohlenstoffatomen, die mit einem Halogenatom, einer Carboxylgruppe, einer Hydroxylgruppe, einer Sulfonsäuregruppe, einer Säureanhydridgruppe, einer Epoxygruppe oder einer Aminogruppe substituiert sein kann, darstellen; eines von $R^{10}$ bis $R^{17}$ eine verbindende Bindung darstellt; im Fall von q = 0 $R^{10}$ und $R^{11}$, $R^{11}$ und $R^{12}$, $R^{12}$ und $R^{13}$, $R^{13}$ und $R^{14}$, $R^{14}$ und $R^{15}$ oder $R^{15}$ und $R^{10}$ aneinander gebunden sein können, um einen monocyclischen oder polycyclischen Ring zu bilden; und im Fall von q = 1 oder 2 $R^{10}$ und $R^{11}$, $R^{ll}$ und $R^{17}$, $R^{17}$ und $R^{17}$, $R^{17}$ und $R^{12}$, $R^{12}$ und $R^{13}$, $R^{13}$ und $R^{14}$, $R^{14}$ und $R^{15}$, $R^{15}$ und $R^{16}$, $R^{16}$ und $R^{16}$ oder $R^{16}$ und $R^{10}$ aneinander gebunden sein können, um einen monocyclischen oder polycyclischen Ring bilden, wobei der monocyclische Ring oder der polycyclische Ring eine Doppelbindung aufweisen kann und der monocyclische Ring oder der polycyclische Ring ein aromatischer Ring sein kann.

**2.** Auf cyclischem Olefin basierende Harzzusammensetzung gemäß Anspruch 1, wobei der Modifikator eine Art oder zwei oder mehr Arten, ausgewählt aus der Gruppe, bestehend aus einem Phosphorsäureester und einer Carbonsäure, dargestellt durch die folgende Formel (1), ist:

$$R^1\text{-}X \qquad (1)$$

wobei in der Formel $R^1$ eine Kohlenwasserstoffgruppe mit 3 bis 18 Kohlenstoffatomen darstellt; und X eine funktionelle Gruppe, die eine Bindung mit der Oberfläche der anorganischen Feinpartikel (B) herstellt, oder eine Atomgruppe mit der funktionellen Gruppe darstellt.

**3.** Auf cyclischem Olefin basierende Harzzusammensetzung gemäß Anspruch 1 oder 2,
wobei der Modifikator eine Art oder zwei oder mehr Arten, ausgewählt aus einem Phosphorsäureester mit einer Kohlenwasserstoffgruppe mit 12 bis 18 Kohlenstoffatomen und einer Carbonsäure mit einer Kohlenwasserstoffgruppe mit 12 bis 18 Kohlenstoffatomen, umfasst.

**4.** Auf cyclischem Olefin basierende Harzzusammensetzung gemäß einem der Ansprüche 1 bis 3,

wobei das auf cyclischem Olefin basierende Copolymer (A) ein eine polare Gruppe enthaltendes auf cyclischem Olefin basierendes Copolymer (A-a) enthält, das eine von einem Monomer mit einer polaren Gruppe abgeleitete Struktureinheit (a3) enthält, und
die polare Gruppe eine Art oder zwei oder mehr Arten, ausgewählt aus einer Carboxylgruppe, einer Hydroxylgruppe, einer Sulfonsäuregruppe, einer Säureanhydridgruppe, einer Epoxygruppe und einer Aminogruppe, ist.

**5.** Auf cyclischem Olefin basierende Harzzusammensetzung gemäß Anspruch 4,
wobei ein Gehalt der von einem Monomer mit einer polaren Gruppe abgeleiteten Struktureinheit (a3) in dem eine polare Gruppe enthaltenden auf cyclischem Olefin basierenden Copolymer (A-a) gleich oder mehr als 0,1 Mol-% und gleich oder weniger als 20 Mol-% beträgt, wenn eine Summe aller Struktureinheiten, die das eine polare Gruppe enthaltende auf cyclischem Olefin basierende Copolymer (A-a) bilden, als 100 Mol-% bezeichnet werden.

**6.** Auf cyclischem Olefin basierende Harzzusammensetzung gemäß Anspruch 4 oder 5,
wobei das eine polare Gruppe enthaltende auf cyclischem Olefin basierende Copolymer (A-a) eine Art oder zwei oder mehr Arten, ausgewählt aus einem statistischen Copolymer (A1) von dem Monomer mit einer polaren Gruppe und einem cyclischen Olefin und einem Pfropfcopolymer (A2), erhalten durch Pfropfen oder Pfropfpolymerisieren des Monomers mit einer polaren Gruppe in ein auf cyclischem Olefin basierendes Polymer, umfasst.

**7.** Auf cyclischem Olefin basierende Harzzusammensetzung gemäß Anspruch 6,

wobei das eine polare Gruppe enthaltende auf cyclischem Olefin basierende Copolymer (A-a) ein statistisches Copolymer (A1) umfasst, das aufweist: eine Struktureinheit (a1), die von einem Olefin abgeleitet ist, das aus der Gruppe ausgewählt ist, die Ethylen und ein $\alpha$-Olefin mit 3 bis 20 Kohlenstoffatomen umfasst; eine Struktureinheit (a2), die von einem cyclischen Olefin, dargestellt durch die folgende Formel [I], [II], [III], [IV] oder [V], abgeleitet ist; und eine Struktureinheit (a3), die von einem Monomer abgeleitet ist, das die oben beschriebene polare Gruppe aufweist:

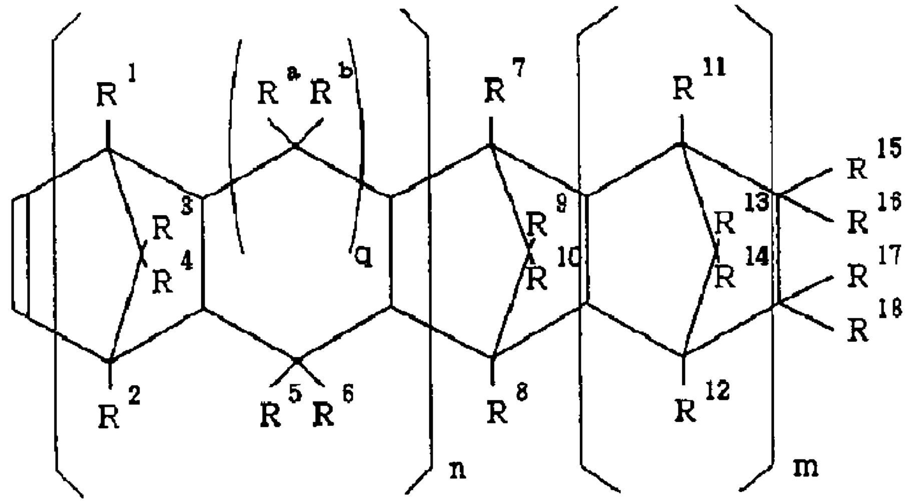

··· [I]

wobei in der Formel [I] n 0 oder 1 darstellt; m 0 oder eine positive ganze Zahl darstellt; q 0 oder 1 darstellt; $R^1$ bis $R^{18}$, $R^a$ und $R^b$ jeweils unabhängig voneinander ein Wasserstoffatom, ein Halogenatom, eine Carboxylgruppe, eine Hydroxylgruppe, eine Sulfonsäuregruppe, eine Säureanhydridgruppe, eine Epoxygruppe, eine Aminogruppe, oder eine Kohlenwasserstoffgruppe oder eine Alkoxygruppe, die mit einem Halogenatom, einer Carboxylgruppe, einer Hydroxylgruppe, einer Sulfonsäuregruppe, einer Säureanhydridgruppe, einer Epoxygruppe oder einer Aminogruppe substituiert sein können, darstellen; $R^{15}$ bis $R^{18}$ aneinander gebunden sein können, um einen monocyclischen oder polycyclischen Ring zu bilden; und der monocyclische oder polycyclische Ring eine Doppelbindung aufweisen kann und mit $R^{15}$ und $R^{16}$ oder mit $R^{17}$ und $R^{18}$ eine Alkylidengruppe bilden kann,

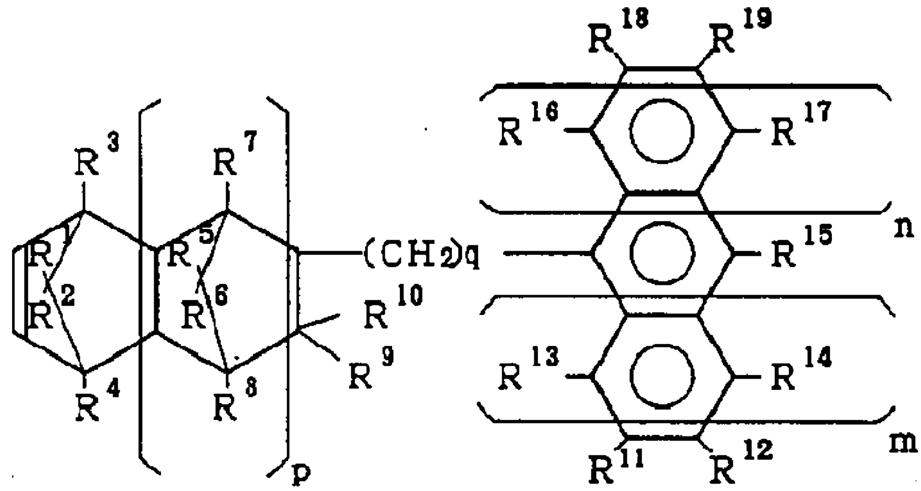

··· [II]

wobei in der Formel [II] p und q jeweils 0 oder eine positive ganze Zahl darstellen; m und n jeweils 0, 1 oder 2 darstellen; $R^1$ bis $R^{19}$ jeweils unabhängig voneinander ein Wasserstoffatom, ein Halogenatom, eine Carboxylgruppe, eine Hydroxylgruppe, eine Sulfonsäuregruppe, eine Säureanhydridgruppe, eine Epoxygruppe, eine Aminogruppe, oder eine Kohlenwasserstoffgruppe oder eine Alkoxygruppe, die mit einem Halogenatom, einer Carboxylgruppe, einer Hydroxylgruppe, einer Sulfonsäuregruppe, einer Säureanhydridgruppe, einer Epoxygruppe oder einer Aminogruppe substituiert sein können, darstellen; ein Kohlenstoffatom, an das $R^9$ und $R^{10}$ gebunden sind, an ein Kohlenstoffatom, an das $R^{13}$ gebunden ist, oder an ein Kohlenstoffatom, an das $R^{11}$ gebunden ist, direkt oder über eine Alkylengruppe mit 1 bis 3 Kohlenstoffatomen gebunden sein kann; und im Fall von n = m = 0 $R^{15}$ und $R^{12}$ oder $R^{15}$ und $R^{19}$ aneinander gebunden sein können, um einen monocyclischen oder polycyclischen aromatischen Ring zu bilden,

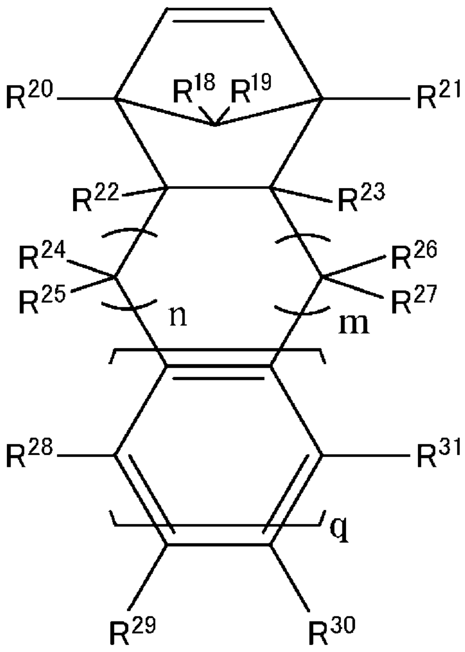

$\cdots$ [III]

wobei in der Formel [III] n und m jeweils unabhängig voneinander 0, 1 oder 2 darstellen; q 1, 2 oder 3 darstellt; $R^{18}$ bis $R^{31}$ jeweils unabhängig voneinander ein Wasserstoffatom, ein Halogenatom, eine Carboxylgruppe, eine Hydroxylgruppe, eine Sulfonsäuregruppe, eine Säureanhydridgruppe, eine Epoxygruppe, eine Aminogruppe, oder eine Kohlenwasserstoffgruppe mit 1 bis 20 Kohlenstoffatomen, die mit einem Halogenatom, einer Carboxylgruppe, einer Hydroxylgruppe, einer Sulfonsäuregruppe, einer Säureanhydridgruppe, einer Epoxygruppe oder einer Aminogruppe substituiert sein kann, darstellen; im Fall von q = 1 $R^{28}$ und $R^{29}$, $R^{29}$ und $R^{30}$ oder $R^{31}$ und $R^{31}$ aneinander gebunden sein können, um einen monocyclischen oder polycyclischen Ring zu bilden; im Fall von q = 2 oder 3 $R^{28}$ und $R^{28}$, $R^{28}$ und $R^{29}$, $R^{29}$ und $R^{30}$, $R^{30}$ und $R^{31}$ oder $R^{31}$ und $R^{31}$ aneinander gebunden sein können, um einen monocyclischen oder polycyclischen Ring zu bilden; der monocyclische Ring oder der polycyclische Ring eine Doppelbindung aufweisen kann; und der monocyclische Ring oder der polycyclische Ring ein aromatischer Ring sein kann,

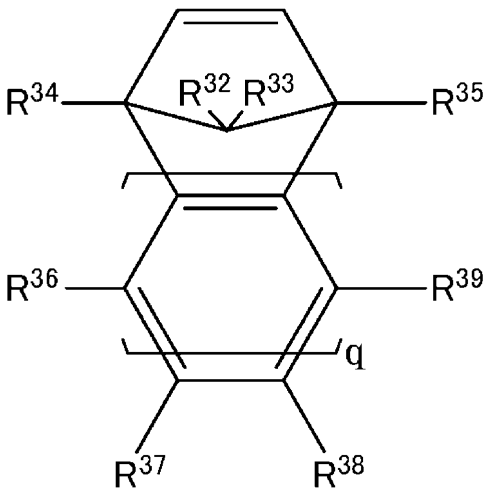

$\cdots$ [IV]

wobei in der Formel [IV] q 1, 2 oder 3 darstellt; $R^{32}$ bis $R^{39}$ jeweils unabhängig voneinander ein Wasserstoffatom, ein Halogenatom, eine Carboxylgruppe, eine Hydroxylgruppe, eine Sulfonsäuregruppe, eine Säureanhydridgruppe, eine Epoxygruppe, eine Aminogruppe oder eine Kohlenwasserstoffgruppe mit 1 bis 20 Kohlenstoffatomen, die mit einem Halogenatom, einer Carboxylgruppe, einer Hydroxylgruppe, einer Sulfonsäuregruppe, einer Säureanhydridgruppe, einer Epoxygruppe oder einer Aminogruppe substituiert sein kann, darstellen; im Fall von q = 1 $R^{36}$ und $R^{37}$, $R^{37}$ und $R^{38}$ oder $R^{38}$ und $R^{39}$ aneinander gebunden sein können, um einen monocyclischen oder polycyclischen Ring zu bilden; im Fall von q = 2 oder 3 $R^{36}$ und $R^{36}$, $R^{36}$ und $R^{37}$, $R^{37}$ und $R^{38}$, $R^{38}$ und $R^{39}$ oder $R^{39}$ und $R^{39}$ aneinander gebunden sein können, um einen monocyclischen oder

polycyclischen Ring zu bilden; der monocyclische Ring oder der polycyclische Ring eine Doppelbindung aufweisen kann; und der monocyclische Ring oder der polycyclische Ring ein aromatischer Ring sein kann,

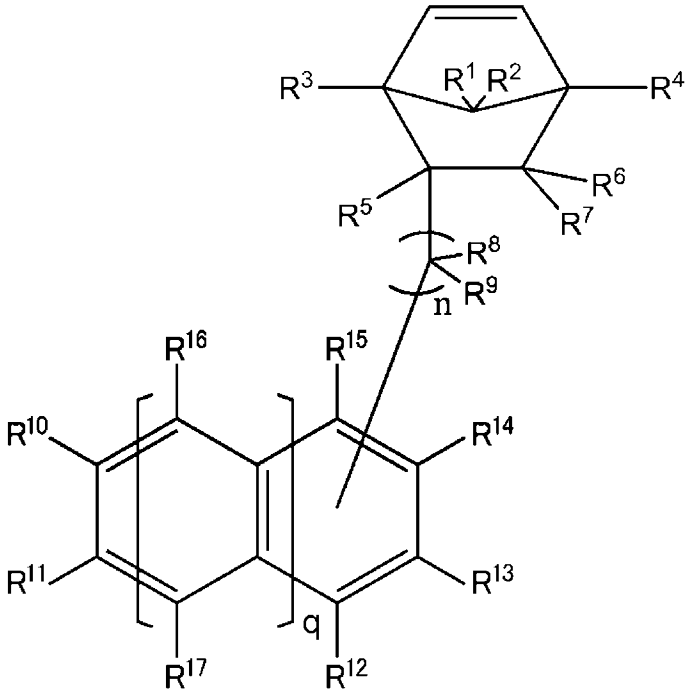

$\cdots$ [V]

wobei in der Formel [V] n und q jeweils unabhängig voneinander 0, 1 oder 2 darstellen; $R^1$ bis $R^{17}$ jeweils unabhängig voneinander ein Wasserstoffatom, ein Halogenatom, eine Carboxylgruppe, eine Hydroxylgruppe, eine Sulfonsäuregruppe, eine Säureanhydridgruppe, eine Epoxygruppe, eine Aminogruppe oder eine Kohlenwasserstoffgruppe mit 1 bis 20 Kohlenstoffatomen, die mit einem Halogenatom, einer Carboxylgruppe, einer Hydroxylgruppe, einer Sulfonsäuregruppe, einer Säureanhydridgruppe, einer Epoxygruppe oder einer Aminogruppe substituiert sein kann, darstellen; eines von $R^{10}$ bis $R^{17}$ eine verbindende Bindung darstellt; im Fall von q = 0 $R^{10}$ und $R^{11}$, $R^{11}$ und $R^{12}$, $R^{12}$ und $R^{13}$, $R^{13}$ und $R^{14}$, $R^{14}$ und $R^{15}$ oder $R^{15}$ und $R^{10}$ aneinander gebunden sein können, um einen monocyclischen oder polycyclischen Ring zu bilden; im Fall von q = 1 oder 2 $R^{10}$ und $R^{11}$, $R^{11}$ und $R^{17}$, $R^{17}$ und $R^{17}$, $R^{17}$ und $R^{12}$, $R^{12}$ und $R^{13}$, $R^{13}$ und $R^{14}$, $R^{14}$ und $R^{15}$, $R^{15}$ und $R^{16}$, $R^{16}$ und $R^{16}$ oder $R^{16}$ und $R^{10}$ aneinander gebunden sein können, um einen monocyclischen oder polycyclischen Ring bilden; der monocyclische Ring oder der polycyclische Ring eine Doppelbindung aufweisen kann; und der monocyclische Ring oder der polycyclische Ring ein aromatischer Ring sein kann.

**8.** Auf cyclischem Olefin basierende Harzzusammensetzung gemäß Anspruch 7,
wobei die von cyclischem Olefin abgeleitete Struktureinheit (a2) in dem statistischen Copolymer (A1) eine Wiederholeinheit umfasst, die von einer Art oder zwei oder mehr Arten von Verbindungen, ausgewählt aus Bicyclo[2.2.1]-2-hepten und Tetracyclo[4.4.0.$1^{2,5}$.$1^{7,10}$]-3-dodecen, abgeleitet ist.

**9.** Auf cyclischem Olefin basierende Harzzusammensetzung gemäß Anspruch 7 oder 8,
wobei die von Olefin abgeleitete Struktureinheit (a1) in dem statistischen Copolymer (A1) eine Wiederholeinheit umfasst, die von Ethylen abgeleitet ist.

**10.** Auf cyclischem Olefin basierende Harzzusammensetzung gemäß einem der Ansprüche 7 bis 9,

wobei das Monomer mit einer polaren Gruppe ein Monomer umfasst, das durch die folgende Formel (10) dargestellt wird:

$$CH_2=CH-R^1-Xp \qquad (10)$$

wobei in der Formel (10) p eine positive ganze Zahl von gleich oder mehr als 1 und gleich oder weniger als 3 darstellt; $R^1$ eine Kohlenwasserstoffgruppe mit 0 oder mehr Kohlenstoffatomen darstellt; und X eine Art oder zwei oder mehr Arten polarer Gruppen, ausgewählt aus einer Carboxylgruppe, einer Hydroxylgruppe, einer Sulfonsäuregruppe, einer Säureanhydridgruppe, einer Epoxygruppe und einer Aminogruppe, darstellt.

**11.** Auf cyclischem Olefin basierende Harzzusammensetzung gemäß Anspruch 10, wobei das Monomer mit einer polaren Gruppe eine Art oder zwei oder mehr Arten, ausgewählt aus Undecenol und Undecylensäure, umfasst.

**12.** Auf cyclischem Olefin basierende Harzzusammensetzung gemäß Anspruch 6,

wobei das polare Gruppen enthaltende auf cyclischem Olefin basierende Copolymer (A-a) ein Pfropfcopolymer (A2), erhalten durch Pfropfen oder Pfropfpolymerisieren des Monomers mit einer polaren Gruppe in ein auf cyclischem Olefin basierendes Polymer mit einer Struktureinheit (a2), abgeleitet von einem cyclischen Olefin, dargestellt durch die folgenden Formel [I], [II], [III], [IV] oder [V], umfasst:

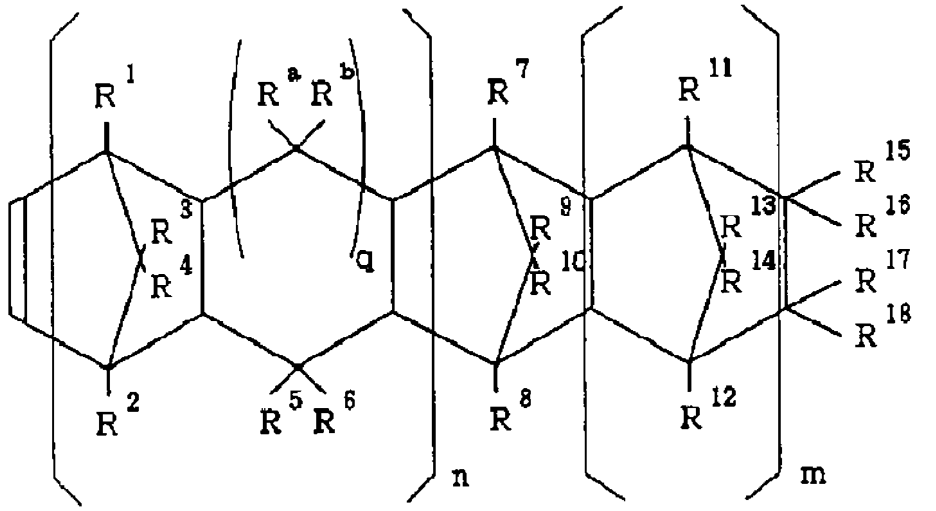

··· [I]

wobei in der Formel [I] n 0 oder 1 darstellt; m 0 oder eine positive ganze Zahl darstellt; q 0 oder 1 darstellt; $R^1$ bis $R^{18}$, $R^a$ und $R^b$ jeweils unabhängig voneinander ein Wasserstoffatom, ein Halogenatom, eine Carboxylgruppe, eine Hydroxylgruppe, eine Sulfonsäuregruppe, eine Säureanhydridgruppe, eine Epoxygruppe, eine Aminogruppe oder eine Kohlenwasserstoffgruppe, die mit einem Halogenatom, einer Carboxylgruppe, einer Hydroxylgruppe, einer Sulfonsäuregruppe, einer Säureanhydridgruppe, einer Epoxygruppe oder einer Aminogruppe substituiert sein kann, darstellen; $R^{15}$ bis $R^{18}$ aneinander gebunden sein können, um einen monocyclischen oder polycyclischen Ring zu bilden; und der monocyclische oder polycyclische Ring eine Doppelbindung aufweisen kann und mit $R^{15}$ und $R^{16}$ oder mit $R^{17}$ und $R^{18}$ eine Alkylidengruppe bilden kann,

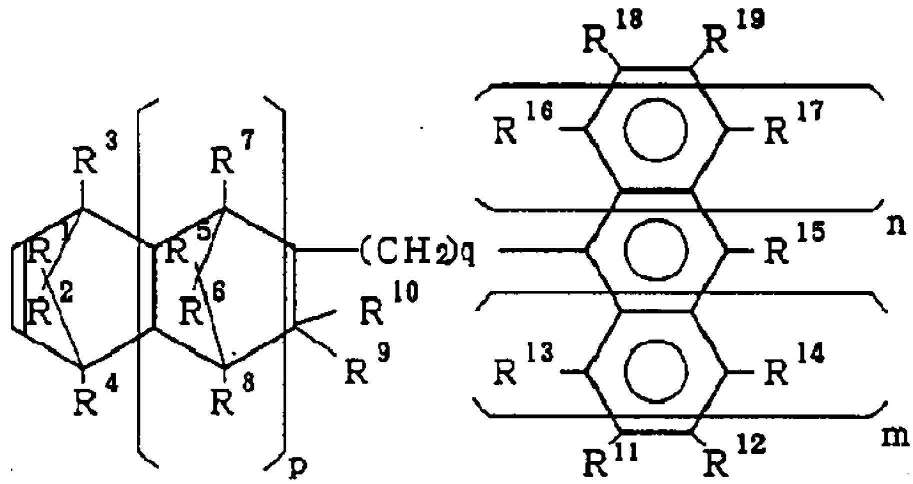

··· [II]

wobei in der Formel [II] p und q jeweils 0 oder eine positive ganze Zahl darstellen; m und n jeweils 0, 1 oder 2 darstellen; $R^1$ bis $R^{19}$ jeweils unabhängig voneinander ein Wasserstoffatom, ein Halogenatom, eine Carboxylgruppe, eine Hydroxylgruppe, eine Sulfonsäuregruppe, eine Säureanhydridgruppe, eine Epoxygruppe, eine Aminogruppe, oder eine Kohlenwasserstoffgruppe oder eine Alkoxygruppe, die mit einem Halogenatom, einer Carboxylgruppe, einer Hydroxylgruppe, einer Sulfonsäuregruppe, einer Säureanhydridgruppe, einer Epoxygruppe oder einer Aminogruppe substituiert sein können, darstellen; ein Kohlenstoffatom, an das $R^9$ und $R^{10}$ gebunden sind, an ein Kohlenstoffatom, an das $R^{13}$ gebunden ist, oder an ein Kohlenstoffatom, an das $R^{11}$ gebunden ist, direkt oder über eine Alkylengruppe mit 1 bis 3 Kohlenstoffatomen gebunden sein kann; und im Fall von n = m = 0 $R^{15}$ und $R^{12}$ oder $R^{15}$ und $R^{19}$ aneinander gebunden sein können, um einen monocyclischen oder polycyclischen aromatischen Ring zu bilden,

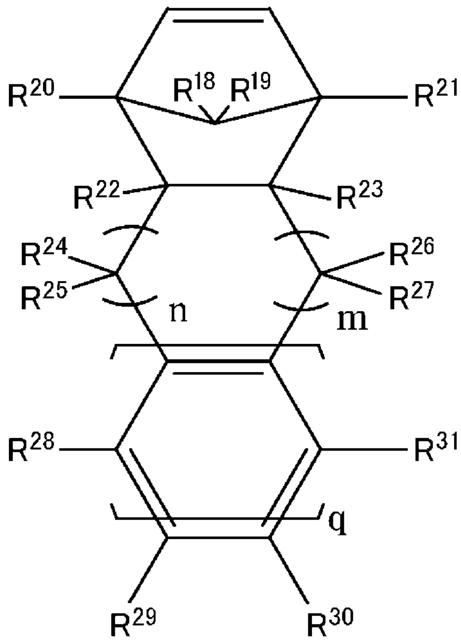

···[III]

wobei in der Formel [III] n und m jeweils unabhängig voneinander 0, 1 oder 2 darstellen; q 1, 2 oder 3 darstellt; $R^{18}$ bis $R^{31}$ jeweils unabhängig voneinander ein Wasserstoffatom, ein Halogenatom, eine Carboxylgruppe, eine Hydroxylgruppe, eine Sulfonsäuregruppe, eine Säureanhydridgruppe, eine Epoxygruppe, eine Aminogruppe, oder eine Kohlenwasserstoffgruppe mit 1 bis 20 Kohlenstoffatomen, die mit einem Halogenatom, einer Carboxylgruppe, einer Hydroxylgruppe, einer Sulfonsäuregruppe, einer Säureanhydridgruppe, einer Epoxygruppe oder einer Aminogruppe substituiert sein kann, darstellen; im Fall von q = 1 $R^{28}$ und $R^{29}$, $R^{29}$ und $R^{30}$ oder $R^{30}$ und $R^{31}$ aneinander gebunden sein können, um einen monocyclischen oder polycyclischen Ring zu bilden; im Fall von q = 2 oder 3 $R^{28}$ und $R^{28}$, $R^{28}$ und $R^{29}$, $R^{29}$ und $R^{30}$, $_{R}3^{1}$ und $R^{31}$ oder $R^{31}$ und $R^{31}$ aneinander gebunden sein können, um einen monocyclischen oder polycyclischen Ring zu bilden; der monocyclische Ring oder der polycyclische Ring eine Doppelbindung aufweisen kann; und der monocyclische Ring oder der polycyclische Ring ein aromatischer Ring sein kann,

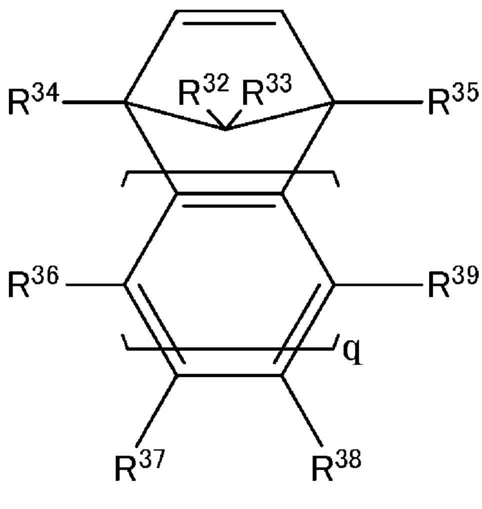

···[IV]

wobei in der Formel [IV] q 1, 2 oder 3 darstellt; $R^{32}$ bis $R^{39}$ jeweils unabhängig voneinander ein Wasserstoffatom, ein Halogenatom, eine Carboxylgruppe, eine Hydroxylgruppe, eine Sulfonsäuregruppe, eine Säureanhydridgruppe, eine Epoxygruppe, eine Aminogruppe oder eine Kohlenwasserstoffgruppe mit 1 bis 20 Kohlenstoffatomen, die mit einem Halogenatom, einer Carboxylgruppe, einer Hydroxylgruppe, einer Sulfonsäuregruppe, einer Säureanhydridgruppe, einer Epoxygruppe oder einer Aminogruppe substituiert sein kann, darstellt; im Fall von q = 1 $R^{36}$ und $R^{37}$, $R^{37}$ und $R^{38}$ oder $R^{38}$ und $R^{39}$ aneinander gebunden sein können, um einen monocyclischen oder polycyclischen Ring zu bilden; im Fall von q = 2 oder 3 $R^{36}$ und $R^{36}$, $R^{36}$ und $R^{37}$, $R^{37}$ und $R^{38}$, $R^{38}$ und $R^{39}$ oder $R^{39}$ und $R^{39}$ aneinander gebunden sein können, um einen monocyclischen oder polycyclischen Ring zu bilden; der monocyclische Ring oder der polycyclische Ring eine Doppelbindung aufweisen kann; und der monocyclische Ring oder der polycyclische Ring ein aromatischer Ring sein kann,

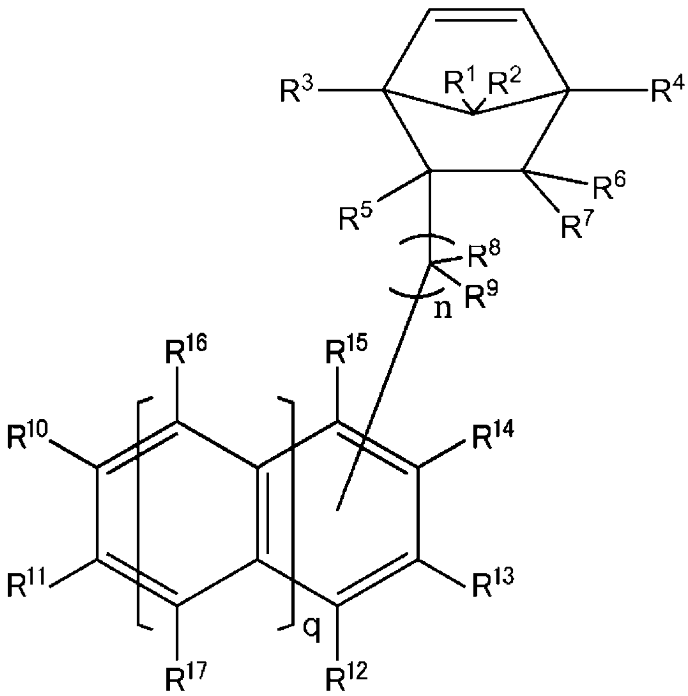

··· [V]

wobei in der Formel [V] n und q jeweils unabhängig voneinander 0, 1 oder 2 darstellen; $R^1$ bis $R^{17}$ jeweils unabhängig voneinander ein Wasserstoffatom, ein Halogenatom, eine Carboxylgruppe, eine Hydroxylgruppe, eine Sulfonsäuregruppe, eine Säureanhydridgruppe, eine Epoxygruppe, eine Aminogruppe oder eine Kohlenwasserstoffgruppe mit 1 bis 20 Kohlenstoffatomen, die mit einem Halogenatom, einer Carboxylgruppe, einer Hydroxylgruppe, einer Sulfonsäuregruppe, einer Säureanhydridgruppe, einer Epoxygruppe oder einer Aminogruppe substituiert sein kann, darstellen; eines von $R^{10}$ bis $R^{17}$ eine verbindende Bindung darstellt; im Fall von q = 0 $R^{10}$ und $R^{11}$, $R^{11}$ und $R^{12}$, $R^{12}$ und $R^{13}$, $R^{13}$ und $R^{14}$, $R^{14}$ und $R^{15}$ oder $R^{15}$ und $R^{10}$ aneinander gebunden sein können, um einen monocyclischen oder polycyclischen Ring zu bilden; im Fall von q = 1 oder 2 $R^{10}$ und $R^{11}$, $R^{11}$ und $R^{17}$, $R^{17}$ und $R^{17}$, $R^{17}$ und $R^{12}$, $R^{12}$ und $R^{13}$, $R^{13}$ und $R^{14}$, $R^{14}$ und $R^{15}$, $R^{15}$ und $R^{16}$, $R^{16}$ und $R^{16}$ oder $R^{16}$ und $R^{10}$ aneinander gebunden sein können, um einen monocyclischen oder polycyclischen Ring bilden; der monocyclische Ring oder der polycyclische Ring eine Doppelbindung aufweisen kann; und der monocyclische Ring oder der polycyclische Ring ein aromatischer Ring sein kann.

**13.** Auf cyclischem Olefin basierende Harzzusammensetzung gemäß Anspruch 12,
wobei die von cyclischem Olefin abgeleitete Struktureinheit (a2) in dem Pfropfcopolymer (A2) eine Wiederholeinheit, abgeleitet von einer Art oder zwei oder mehr Arten von Verbindungen, ausgewählt aus Bicyclo[2.2.1]-2-hepten und Tetracyclo[4.4.0.$1^{2,5}$.$1^{7,10}$]-3-dodecen, umfasst.

**14.** Auf cyclischem Olefin basierende Harzzusammensetzung gemäß Anspruch 12 oder 13,
wobei das Pfropfcopolymer (A2) ferner eine Struktureinheit (a1) aufweist, die von einem Olefin abgeleitet ist, das aus der Gruppe ausgewählt ist, die Ethylen und ein $\alpha$-Olefin mit 3 bis 20 Kohlenstoffatomen umfasst.

**15.** Auf cyclischem Olefin basierende Harzzusammensetzung gemäß einem der Ansprüche 12 bis 14,
wobei das Monomer mit einer polaren Gruppe eine Art oder zwei oder mehr Arten, ausgewählt aus Acrylsäure,

Methacrylsäure, Maleinsäure und Maleinsäureanhydrid, umfasst.

**16.** Auf cyclischem Olefin basierende Harzzusammensetzung gemäß einem der Ansprüche 1 bis 15, wobei die anorganischen Feinpartikel (B) eine Art oder zwei oder mehr Arten, ausgewählt aus Zirkoniumoxid, Titanoxid und Aluminiumoxid, umfassen.

**17.** Auf cyclischem Olefin basierende Harzzusammensetzung gemäß einem der Ansprüche 1 bis 16, wobei ein Gehalt der anorganischen Feinpartikel (B) gleich oder mehr als 5 Massen-% und gleich oder weniger als 60 Massen-% beträgt, wenn die Gesamtmenge der auf cyclischem Olefin basierenden Harzzusammensetzung als 100 Massen-% bezeichnet wird.

**18.** Auf cyclischem Olefin basierende Harzzusammensetzung gemäß einem der Ansprüche 1 bis 17,

wobei in einem Fall, in dem unter Verwendung der auf cyclischem Olefin basierenden Harzzusammensetzung ein Film mit einer Filmdicke von gleich oder mehr als 100 $\mu$m und gleich oder weniger als 300 $\mu$m hergestellt wird, ein Brechungsindex (nD) des Films bei einer Wellenlänge von 589 nm gleich oder höher als 1,545 ist.

**19.** Formteil, erhalten unter Verwendung der auf cyclischem Olefin basierenden Harzzusammensetzung gemäß einem der Ansprüche 1 bis 18.

**20.** Optisches Bauteil, umfassend das Formteil gemäß Anspruch 19.

## Revendications

**1.** Composition de résine à base d'oléfine cyclique comprenant :

un copolymère à base d'oléfine cyclique (A) ; et
des particules fines inorganiques (B) présentant une surface modifiée par un agent de modification,
dans laquelle l'agent de modification est un élément ou deux éléments voire plus choisis dans le groupe consistant en un ester d'acide phosphorique et un acide carboxylique,
les particules fines inorganiques (B) existent dans un état où elles sont dispersées dans le copolymère à base d'oléfine cyclique (A),
les particules fines inorganiques (B) présentent une taille moyenne de particules $D_{50}$ supérieure ou égale à 1 nm et inférieure ou égale à 100 nm, et
le copolymère à base d'oléfine cyclique (A) inclut un élément ou deux éléments voire plus choisis parmi les éléments [A-1] et [A-4] suivants :

[A-1] un copolymère aléatoire d'une oléfine choisie dans le groupe comprenant l'éthylène et des $\alpha$-oléfines présentant 3 à 20 atomes de carbone et une oléfine cyclique représentée par la formule [I], [II], [III], [IV], ou [V] suivante ; et
[A-4] un produit de modification de greffe de l'élément [A-1]

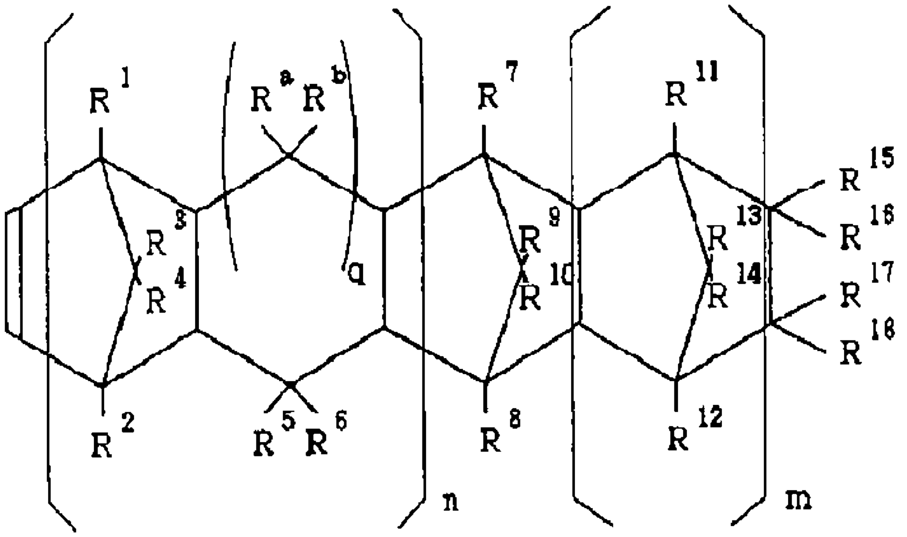

··· [I]

dans la formule [I], n représente 0 ou 1 ; m représente 0 ou un nombre entier positif ; q représente 0 ou 1 ; $R^1$ à $R^{18}$, $R^a$ et $R^b$ représentent chacun indépendamment un atome d'hydrogène, un atome d'halogène, un groupe carboxyle, un groupe hydroxyle, un groupe acide sulfonique, un groupe anhydride d'acide, un groupe époxy, un groupe amino, ou un groupe d'hydrocarbures qui peut être substitué par un atome d'halogène, un groupe carboxyle, un groupe hydroxyle, un groupe acide sulfonique, un groupe anhydride d'acide, un groupe époxy, ou un groupe amino ; et $R^{15}$ à $R^{18}$ peuvent être liés l'un à l'autre pour former un cycle monocyclique ou polycyclique, ou le cycle monocyclique ou polycyclique peut présenter une double liaison et peut former un groupe alkylidène avec $R^{15}$ et $R^{16}$ ou avec $R^{17}$ et $R^{18}$,

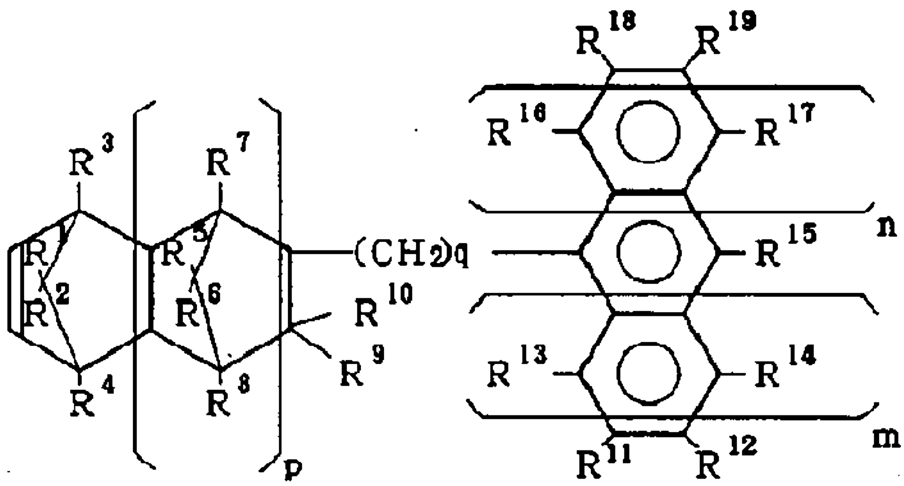

··· [II]

dans la formule [II], p et q représentent chacun 0 ou un nombre entier positif ; m et n représentent chacun 0, 1 ou 2 ; $R^1$ to $R^{19}$ représentent chacun indépendamment un atome d'hydrogène, un atome d'halogène, un groupe carboxyle, un groupe hydroxyle, un groupe acide sulfonique, un groupe anhydride d'acide, un groupe époxy, un groupe amino, ou un groupe d'hydrocarbures ou un groupe alcoxy, qui peut être substitué par un atome d'halogène, un groupe carboxyle, un groupe hydroxyle, un groupe acide sulfonique, un groupe anhydride d'acide, un groupe époxy, ou un groupe amino ; un atome de carbone auquel $R^9$ et $R^{10}$ sont liés peut être lié à un atome de carbone auquel $R^{13}$ est lié ou à un atome de carbone auquel $R^{11}$ est lié, directement ou par l'intermédiaire d'un groupe alkylène présentant 1 à 3 atomes de carbone ; et dans le cas où n = m = 0, $R^{15}$ et $R^{12}$ ou $R^{15}$ et $R^{19}$ peuvent être liés l'un à l'autre pour former un cycle aromatique monocyclique ou polycyclique,

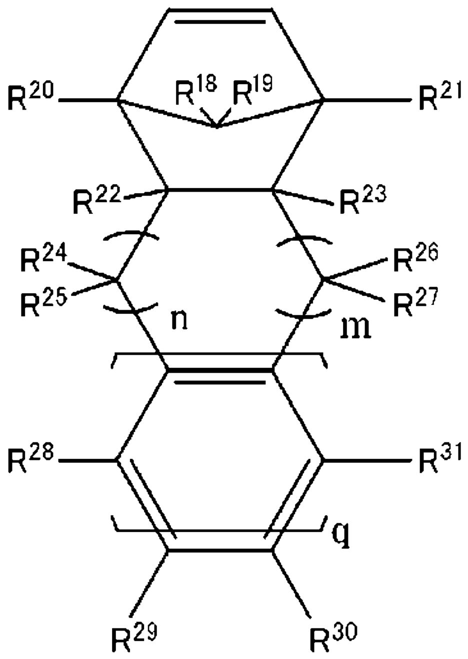

... [III]

dans la formule [III], n et m représentent chacun indépendamment 0, 1, ou 2 ; q représente 1, 2, ou 3 ; $R^{18}$ à $R^{31}$ représentent chacun indépendamment un atome d'hydrogène, un atome d'halogène, un groupe carboxyle, un groupe hydroxyle, un groupe acide sulfonique, un groupe anhydride d'acide, un groupe époxy, un groupe amino, ou un groupe d'hydrocarbures présentant 1 à 20 atomes de carbone qui peut être substitué par un atome d'halogène, un groupe carboxyle, un groupe hydroxyle, un groupe acide sulfonique, un groupe anhydride d'acide, un groupe époxy, ou un groupe amino ; et dans le cas où q = 1, $R^{28}$ et $R^{29}$, $R^{29}$ et $R^{30}$, ou $R^{30}$ et $R^{31}$ peuvent être liés l'un à l'autre pour former un cycle monocyclique ou polycyclique ; dans le cas où q = 2 ou 3, $R^{28}$ et $R^{28}$, $R^{28}$ et $R^{29}$, $R^{29}$ et $R^{30}$, $R^{30}$ et $R^{31}$, ou $R^{31}$ et $R^{31}$ peuvent être liés l'un à l'autre pour former un cycle monocyclique ou polycyclique, où le cycle monocyclique ou le cycle polycyclique peut avoir une double liaison et le cycle monocyclique ou le cycle polycyclique peut être un cycle aromatique,

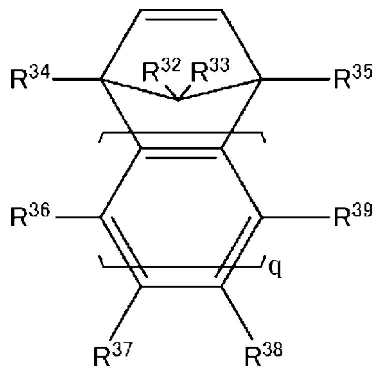

... [IV]

dans la formule [IV], q représente 1, 2, ou 3 ; $R^{32}$ to $R^{39}$ représentent chacun indépendamment un atome d'hydrogène, un atome d'halogène, un groupe carboxyle, un groupe hydroxyle, un groupe acide sulfonique, un groupe anhydride d'acide, un groupe époxy, un groupe amino, ou un groupe d'hydrocarbures présentant 1 à 20 atomes de carbone qui peut être substitué par un atome d'halogène, un groupe carboxyle, un groupe hydroxyle, un groupe acide sulfonique, un groupe anhydride d'acide, un groupe époxy, ou un groupe amino ; dans le cas où q = 1, $R^{36}$ et $R^{37}$, $R^{37}$ et $R^{38}$, ou $R^{38}$ et $R^{39}$ peuvent être liés l'un à l'autre pour former un cycle monocyclique ou polycyclique ; et dans le cas où q = 2 ou 3, $R^{36}$ et $R^{36}$, $R^{36}$ et $R^{37}$, $R^{37}$ et $R^{38}$, $R^{38}$ et $R^{39}$, ou $R^{39}$ et $R^{39}$ peuvent être liés l'un à l'autre pour former un cycle monocyclique ou polycyclique, où le cycle monocyclique ou le cycle polycyclique peut présenter une double liaison et le cycle monocyclique ou le cycle polycyclique peut être un cycle aromatique, ou

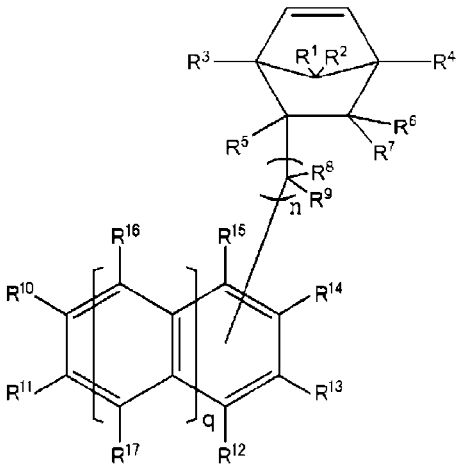

···[V]

dans la formule [V], n et q représentent chacun indépendamment 0, 1, ou 2 ; $R^1$ à $R^{17}$ représentent chacun indépendamment un atome d'hydrogène, un atome d'halogène, un groupe carboxyle, un groupe hydroxyle, un groupe acide sulfonique, un groupe anhydride d'acide, un groupe époxy, un groupe amino, ou un groupe d'hydrocarbures présentant 1 à 20 atomes de carbone qui peut être substitué par un atome d'halogène, un groupe carboxyle, un groupe hydroxyle, un groupe acide sulfonique, un groupe anhydride d'acide, un groupe époxy, ou un groupe amino ; un élément parmi $R^{10}$ à $R^{17}$ représente une liaison de couplage ; dans le cas où q = 0, $R^{10}$ et $R^{11}$, $R^{11}$ et $R^{12}$, $R^{12}$ et $R^{13}$, $R^{13}$ et $R^{14}$, $R^{14}$ et $R^{15}$, ou $R^{15}$ et $R^{10}$ peuvent être liés l'un à l'autre pour former un cycle monocyclique ou polycyclique ; et dans le cas où q = 1 ou 2, $R^{10}$ et $R^{11}$, $R^{11}$ et $R^{17}$, $R^{17}$ et $R^{17}$, $R^{17}$ et $R^{12}$, $R^{12}$ et $R^{13}$, $R^{13}$ et $R^{14}$, $R^{14}$ and $R^{15}$,$R^{15}$ et $R^{16}$, $R^{16}$ et $R^{16}$, ou $R^{16}$ et $R^{10}$ peuvent être liés l'un à l'autre pour former un cycle monocyclique ou polycyclique, où le cycle monocyclique ou le cycle polycyclique peut présenter une double liaison et le cycle monocyclique ou le cycle polycyclique peut être un cycle aromatique.

**2.** Composition de résine à base d'oléfine cyclique selon la revendication 1, dans laquelle l'agent de modification est un élément ou deux éléments voire plus, choisis dans le groupe consistant en un ester d'acide phosphorique et un acide carboxylique représenté par la formule (1) suivante :

$R^1$-X (1)

dans la formule, $R^1$ représente un groupe d'hydrocarbures présentant 3 à 18 atomes de carbone ; et X représente un groupe fonctionnel qui produit une liaison avec la surface des particules fines inorganiques (B), ou un groupe atomique présentant le groupe fonctionnel.

**3.** Composition de résine à base d'oléfine cyclique selon la revendication 1 ou 2,
dans laquelle l'agent de modification inclut un élément ou deux éléments voire plus choisis parmi un ester d'acide phosphorique incluant un groupe d'hydrocarbures présentant 12 à 18 atomes de carbone et un acide carboxylique incluant un groupe d'hydrocarbures présentant 12 à 18 atomes de carbone.

**4.** Composition de résine à base d'oléfine cyclique selon l'une quelconque des revendications 1 à 3,

dans laquelle le copolymère à base d'oléfine cyclique (A) inclut un copolymère à base d'oléfine cyclique contenant un groupe polaire (A-a) incluant une unité constitutive (a3) dérivée d'un monomère présentant un groupe polaire et
le groupe polaire est un élément ou deux éléments voire plus choisis parmi un groupe carboxyle, un groupe hydroxyle, un groupe acide sulfonique, un groupe anhydride d'acide, un groupe époxy et un groupe amino.

**5.** Composition de résine à base d'oléfine cyclique selon la revendication 4,
dans laquelle une teneur en unité constitutive (a3) dérivée d'un monomère présentant un groupe polaire dans le copolymère à base d'oléfine cyclique contenant un groupe polaire (A-a) est supérieure ou égale à 0,1 % en moles et inférieure ou égale à 20 % en moles dans un cas où une somme d'unités constitutives entières constituant le copolymère à base d'oléfine cyclique contenant un groupe polaire (A-a) est désignée comme 100 % en moles.

**6.** Composition de résine à base d'oléfine cyclique selon la revendication 4 ou 5, dans laquelle le copolymère à base d'oléfine cyclique contenant un groupe polaire (A-a) inclut un élément ou deux éléments voire plus choisis parmi un copolymère aléatoire (Al) du monomère présentant un groupe polaire et une oléfine cyclique et un copolymère greffé (A2) obtenu par greffage ou polymérisation par greffage du monomère présentant un groupe polaire dans un polymère à base d'oléfine cyclique.

**7.** Composition de résine à base d'oléfine cyclique selon la revendication 6,

dans laquelle le copolymère à base d'oléfine cyclique contenant un groupe polaire (A-a) inclut un copolymère aléatoire (Al) présentant : une unité constitutive (al) dérivée d'une oléfine choisie dans le groupe comprenant l'éthylène et une α-oléfine présentant 3 à 20 atomes de carbone ; une unité constitutive (a2) dérivée d'une oléfine cyclique représentée par la formule [I], [II], [III], [IV], ou [V] suivante ; et une unité constitutive (a3) dérivée d'un monomère présentant le groupe polaire décrit ci-dessus :

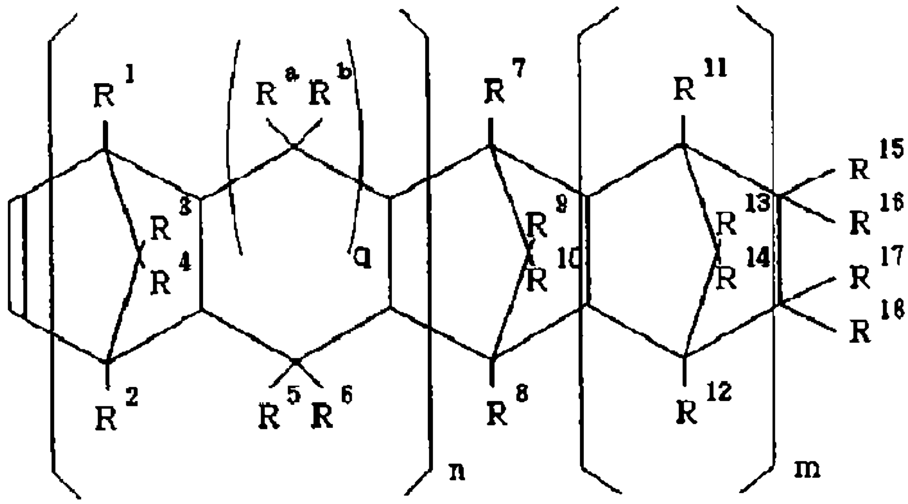

··· [I]

dans la formule [I], n représente 0 ou 1 ; m représente 0 ou un nombre entier positif ; q représente 0 ou 1 ; $R^1$ to $R^{18}$, $R^a$ et $R^b$ représentent chacun indépendamment un atome d'hydrogène, un atome d'halogène, un groupe carboxyle, un groupe hydroxyle, un groupe acide sulfonique, un groupe anhydride d'acide, un groupe époxy, un groupe amino, ou un groupe d'hydrocarbures ou un groupe alcoxy, tous deux pouvant être substitués par un atome d'halogène, un groupe carboxyle, un groupe hydroxyle, un groupe acide sulfonique, un groupe anhydride d'acide, un groupe époxy, ou un groupe amino ; $R^{15}$ to $R^{18}$ peuvent être liés l'un à l'autre pour former un cycle monocyclique ou polycyclique ; et le cycle monocyclique ou polycyclique peut présenter une double liaison et peut former un groupe alkylidène avec $R^{15}$ et $R^{16}$ ou avec $R^{17}$ et $R^{18}$,

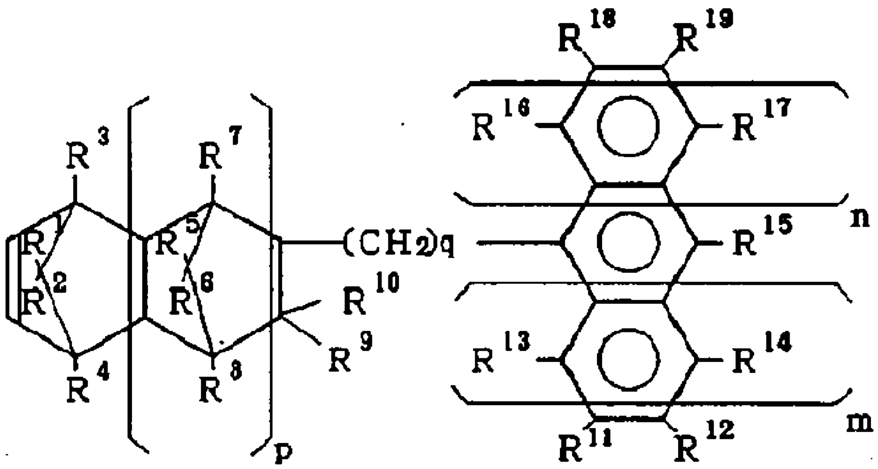

··· [II]

dans la formule [II], p et q représentent chacun 0 ou un nombre entier positif ; m et n représentent chacun 0, 1, ou 2 ; $R^1$ à $R^{19}$ représentent chacun indépendamment un atome d'hydrogène, un atome d'halogène, un groupe

carboxyle, un groupe hydroxyle, un groupe acide sulfonique, un groupe anhydride d'acide, un groupe époxy, un groupe amino, ou un groupe d'hydrocarbures ou un groupe alcoxy, tous deux pouvant être substitués par un atome d'halogène, un groupe carboxyle, un groupe hydroxyle, un groupe acide sulfonique, un groupe anhydride d'acide, un groupe époxy, ou un groupe amino ; un atome de carbone auquel $R^9$ et $R^{10}$ sont liés peut être lié à un atome de carbone auquel $R^{13}$ est lié ou à un atome de carbone auquel $R^{11}$ est lié, directement ou par l'intermédiaire d'un groupe alkylène présentant 1 à 3 atomes de carbone ; et dans le cas où n = m = 0, $R^{15}$ et $R^{12}$ ou $R^{15}$ et $R^{19}$ peuvent être liés l'un à l'autre pour former un cycle aromatique monocyclique ou polycyclique,

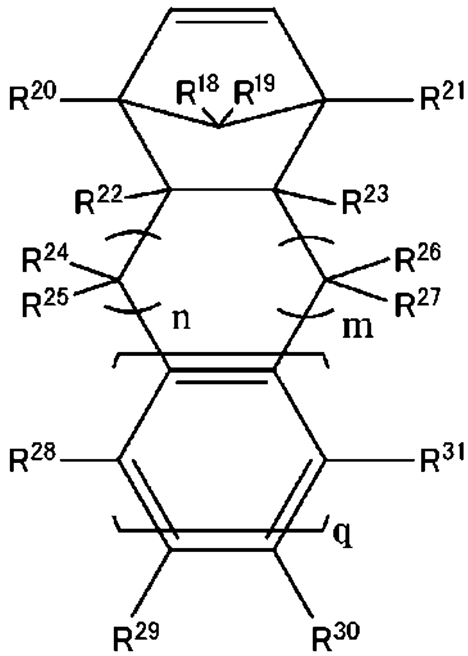

··· [III]

dans la formule [III], n et m représentent chacun indépendamment 0, 1, ou 2 ; q représente 1, 2, ou 3; $R^{18}$ à $R^{31}$ représentent chacun indépendamment un atome d'hydrogène, un atome d'halogène, un groupe carboxyle, un groupe hydroxyle, un groupe acide sulfonique, un groupe anhydride d'acide, un groupe époxy, un groupe amino, ou un groupe d'hydrocarbures présentant 1 à 20 atomes de carbone qui peut être substitué par un atome d'halogène, un groupe carboxyle, un groupe hydroxyle, un groupe acide sulfonique, un groupe anhydride d'acide, un groupe époxy, ou un groupe amino ; dans le cas où q = 1, $R^{28}$ et $R^{29}$, $R^{29}$ et $R^{30}$, ou $R^{30}$ et $R^{31}$ peuvent être liés l'un à l'autre pour former un cycle monocyclique ou polycyclique ; dans le cas où q = 2 ou 3, $R^{28}$ et $R^{28}$, $R^{28}$ et $R^{29}$, $R^{29}$ et $R^{30}$, $R^{30}$ et $R^{31}$, ou $R^{31}$ et $R^{31}$ peuvent être liés l'un à l'autre pour former un cycle monocyclique ou polycyclique ; le cycle monocyclique ou le cycle polycyclique peut présenter une double liaison ; et le cycle monocyclique ou le cycle polycyclique peut être un cycle aromatique,

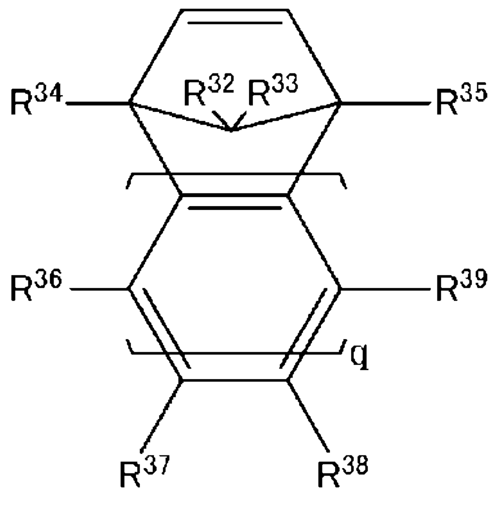

··· [IV]

dans la formule [IV], q représente 1, 2, ou 3; $R^{32}$ à $R^{39}$ représentent chacun indépendamment un atome d'hydrogène, un atome d'halogène, un groupe carboxyle, un groupe hydroxyle, un groupe acide sulfonique, un groupe anhydride d'acide, un groupe époxy, un groupe amino, ou un groupe d'hydrocarbures présentant 1 à 20 atomes de carbone qui peut être substitué par un atome d'halogène, un groupe carboxyle, un groupe hydroxyle, un groupe acide sulfonique, un groupe anhydride d'acide, un groupe époxy, ou un groupe amino ; dans le cas où q = 1, $R^{36}$ et $R^{37}$, $R^{37}$ et $R^{38}$, ou $R^{38}$ et $R^{39}$ peuvent être liés l'un à l'autre pour former un cycle monocyclique ou polycyclique ; dans le cas où q = 2 ou 3, $R^{36}$ et $R^{36}$, $R^{36}$ et $R^{37}$, $R^{37}$ et $R^{38}$, $R^{38}$ et $R^{39}$, ou $R^{39}$ et $R^{39}$ peuvent être liés l'un à l'autre pour former un cycle monocyclique ou polycyclique ; le cycle monocyclique ou le cycle polycyclique peut présenter une double liaison ; et le cycle monocyclique ou le cycle polycyclique peut être un cycle aromatique,

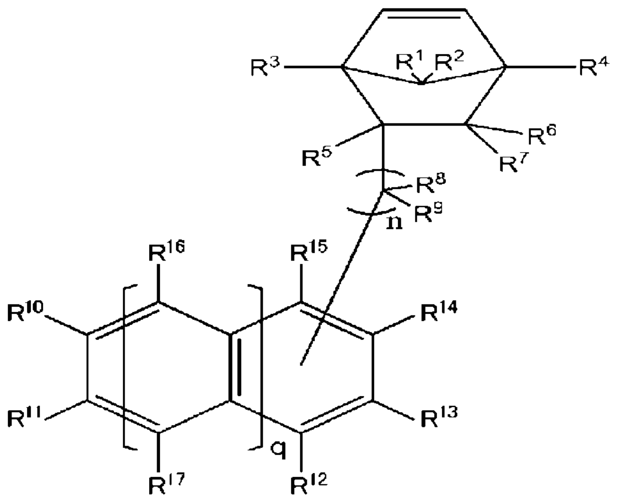

$\cdots$ [V]

dans la formule [V], n et q représentent chacun indépendamment 0, 1, ou 2 ; $R^1$ à $R^{17}$ représentent chacun indépendamment un atome d'hydrogène, un atome d'halogène, un groupe carboxyle, un groupe hydroxyle, un groupe acide sulfonique, un groupe anhydride d'acide, un groupe époxy, un groupe amino, ou un groupe d'hydrocarbures présentant 1 à 20 atomes de carbone qui peut être substitué par un atome d'halogène, un groupe carboxyle, un groupe hydroxyle, un groupe acide sulfonique, un groupe anhydride d'acide, un groupe époxy, ou un groupe amino ; un élément parmi $R^{10}$ to $R^{17}$ représente une liaison de couplage ; dans un cas où q = 0, $R^{10}$ et $R^{11}$, $R^{11}$ et $R^{12}$, $R^{12}$ et $R^{13}$, $R^{13}$ et $R^{14}$, $R^{14}$ et $R^{15}$, ou $R^{15}$ et $R^{10}$ peuvent être liés l'un à l'autre pour former un cycle monocyclique ou polycyclique ; dans le cas où q = 1 ou 2, $R^{10}$ et $R^{11}$, $R^{11}$ et $R^{17}$, $R^{17}$ et $R^{17}$, $R^{17}$ et $R^{12}$, $R^{12}$ et $R^{13}$, $R^{13}$ et $R^{14}$, $R^{14}$ et $R^{15}$ $R^{15}$ et $R^{16}$, $R^{16}$ et $R^{16}$, ou $R^{16}$ et $R^{10}$ peuvent être liés l'un à l'autre pour former un cycle monocyclique ou polycyclique ; le cycle monocyclique ou le cycle polycyclique peut présenter une double liaison ; et le cycle monocyclique ou le cycle polycyclique peut être un cycle aromatique.

**8.** Composition de résine à base d'oléfine cyclique selon la revendication 7,
dans laquelle l'unité constitutive dérivée d'oléfine cyclique (a2) dans le copolymère aléatoire (AI) inclut une unité de répétition dérivée d'un élément ou de deux éléments voire plus de composés choisis parmi le bicyclo [2.2.1]-2-heptène et le tétracyclo [4.4.0.$1^{2,5}$.$1^7$ $1^{7,10}$]-3-dodécène.

**9.** Composition de résine à base d'oléfine cyclique selon la revendication 7 ou 8,

dans laquelle l'unité constitutive
dérivée d'oléfine (a1) dans le copolymère aléatoire (AI) inclut une unité de répétition dérivée de l'éthylène.

**10.** Composition de résine à base d'oléfine cyclique selon l'une quelconque des revendications 7 à 9,

dans laquelle le monomère présentant un groupe polaire inclut un monomère représenté par la formule (10) suivante :

$$CH_2=CH-R^1-Xp \qquad (10)$$

dans la formule (10), p représente un nombre entier positif supérieur ou égal à 1 et inférieur ou égal à 3 ; $R^1$

représente un groupe d'hydrocarbures présentant 0 ou plusieurs atomes de carbone ; et X représente un élément ou deux éléments voire plus de groupes polaires choisis parmi un groupe carboxyle, un groupe hydroxyle, un groupe acide sulfonique, un groupe anhydride d'acide, un groupe époxy et un groupe amino.

**11.** Composition de résine à base d'oléfine cyclique selon la revendication 10,
dans laquelle le monomère présentant un groupe polaire inclut un élément ou deux éléments voire plus choisis parmi l'undécénol et l'acide undécylénique.

**12.** Composition de résine à base d'oléfine cyclique selon la revendication 6,

dans laquelle le copolymère à base d'oléfine cyclique contenant un groupe polaire (A-a) inclut un copolymère greffé (A2) obtenu par greffage ou polymérisation par greffage du monomère présentant un groupe polaire dans un polymère à base d'oléfine cyclique présentant une unité constitutive (a2) dérivée d'une oléfine cyclique représenté par la formule [I], [II], [III], [IV], ou [V] suivante :

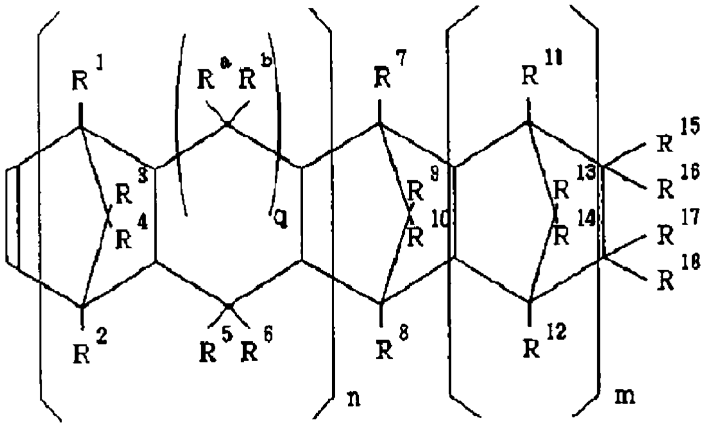

··· [I]

dans la formule [I], n représente 0 ou 1 ; m représente 0 ou un nombre entier positif ; q représente 0 ou 1 ; $R^1$ à $R^{18}$, $R^a$ et $R^b$ représentent chacun indépendamment un atome d'hydrogène, un atome d'halogène, un groupe carboxyle, un groupe hydroxyle, un groupe acide sulfonique, un groupe anhydride d'acide, un groupe époxy, un groupe amino, ou un groupe d'hydrocarbures qui peut être substitué par un atome d'halogène, un groupe carboxyle, un groupe hydroxyle, un groupe acide sulfonique, un groupe anhydride d'acide, un groupe époxy, ou un groupe amino ; $R^{15}$ à $R^{18}$ peuvent être liés l'un à l'autre pour former un cycle monocyclique ou polycyclique ; et le cycle monocyclique ou polycyclique peut présenter une double liaison et peut former un groupe alkylidène avec $R^{15}$ et $R^{16}$ ou avec $R^{17}$ et $R^{18}$,

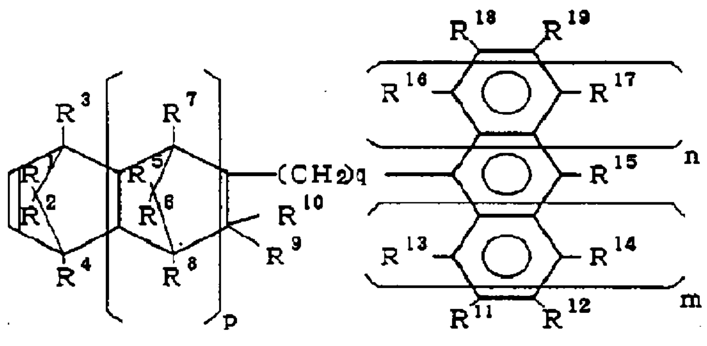

··· [II]

dans la formule [II], p et q représentent chacun 0 ou un nombre entier positif ; m et n représentent chacun 0, 1, ou 2 ; $R^1$ à $R^{19}$ représentent chacun indépendamment un atome d'hydrogène, un atome d'halogène, un groupe carboxyle, un groupe hydroxyle, un groupe acide sulfonique, un groupe anhydride d'acide, un groupe époxy, un groupe amino, ou un groupe d'hydrocarbures ou un groupe alcoxy, tous deux pouvant être substitués par un atome d'halogène, un groupe carboxyle, un groupe hydroxyle, un groupe acide sulfonique, un groupe anhydride d'acide, un groupe époxy, ou un groupe amino ; un atome de carbone auquel $R^9$ et $R^{10}$ sont liés peut être lié à un atome de carbone auquel $R^{13}$ est lié ou à un atome de carbone auquel $R^{11}$ est lié, directement ou par l'intermédiaire d'un groupe alkylène présentant 1 à 3 atomes de carbone ; et dans le cas où n = m = 0, $R^{15}$

et $R^{12}$ ou $R^{15}$ et $R^{19}$ peuvent être liés l'un à l'autre pour former un cycle aromatique monocyclique ou polycyclique,

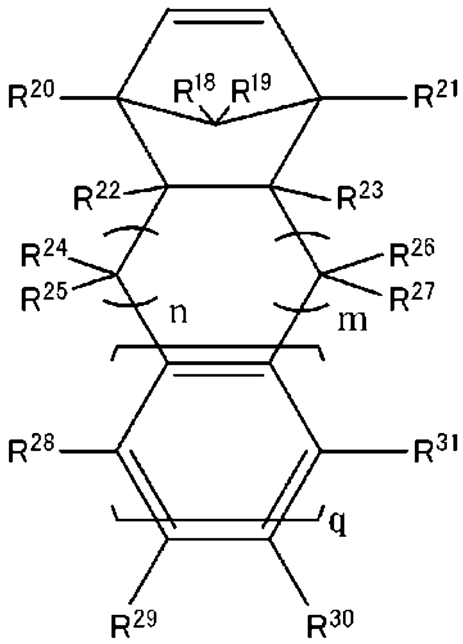

···[III]

dans la formule [III], n et m représentent chacun indépendamment 0, 1, ou 2 ; q représente 1, 2, ou 3; $R^{18}$ à $R^{31}$ représentent chacun indépendamment un atome d'hydrogène, un atome d'halogène, un groupe carboxyle, un groupe hydroxyle, un groupe acide sulfonique, un groupe anhydride d'acide, un groupe époxy, un groupe amino, ou un groupe d'hydrocarbures présentant 1 à 20 atomes de carbone qui peut être substitué par un atome d'halogène, un groupe carboxyle, un groupe hydroxyle, un groupe acide sulfonique, un groupe anhydride d'acide, un groupe époxy, ou un groupe amino ; dans le cas où q = 1, $R^{28}$ et $R^{29}$, $R^{29}$ et $R^{30}$, ou $R^{30}$ et $R^{31}$ peuvent être liés l'un à l'autre pour former un cycle monocyclique ou polycyclique ; dans le cas où q = 2 ou 3, $R^{28}$ et $R^{28}$, $R^{28}$ et $R^{29}$, $R^{29}$ et $R^{30}$, $R^{30}$ et $R^{31}$, ou $R^{31}$ et $R^{31}$peuvent être liés l'un à l'autre pour former un cycle monocyclique ou polycyclique ; le cycle monocyclique ou le cycle polycyclique peut présenter une double liaison ; et le cycle monocyclique ou le cycle polycyclique peut être un cycle aromatique,

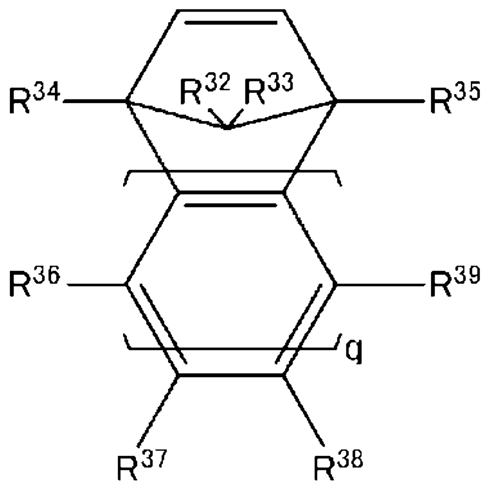

···[IV]

dans la formule [IV], q représente 1, 2, ou 3; $R^{32}$ à $R^{39}$ représentent chacun indépendamment un atome d'hydrogène, un atome d'halogène, un groupe carboxyle, un groupe hydroxyle, un groupe acide sulfonique, un groupe anhydride d'acide, un groupe époxy, un groupe amino, ou un groupe d'hydrocarbures présentant 1 à 20 atomes de carbone qui peut être substitué par un atome d'halogène, un groupe carboxyle, un groupe hydroxyle, un groupe acide sulfonique, un groupe anhydride d'acide, un groupe époxy, ou un groupe amino ; dans le cas où q = 1, $R^{36}$ et $R^{37}$, $R^{37}$ et $R^{38}$, ou $R^{38}$ et $R^{39}$ peuvent être liés l'un à l'autre pour former un cycle monocyclique ou polycyclique ; dans le cas où q = 2 ou 3, $R^{36}$ et $R^{36}$, $R^{36}$ et $R^{37}$, $R^{37}$ et $R^{38}$, $R^{38}$ et $R^{39}$, ou $R^{39}$ et $R^{39}$ peuvent être liés

l'un à l'autre pour former un cycle monocyclique ou polycyclique ; le cycle monocyclique ou le cycle polycyclique peut présenter une double liaison ; et le cycle monocyclique ou le cycle polycyclique peut être un cycle aromatique,

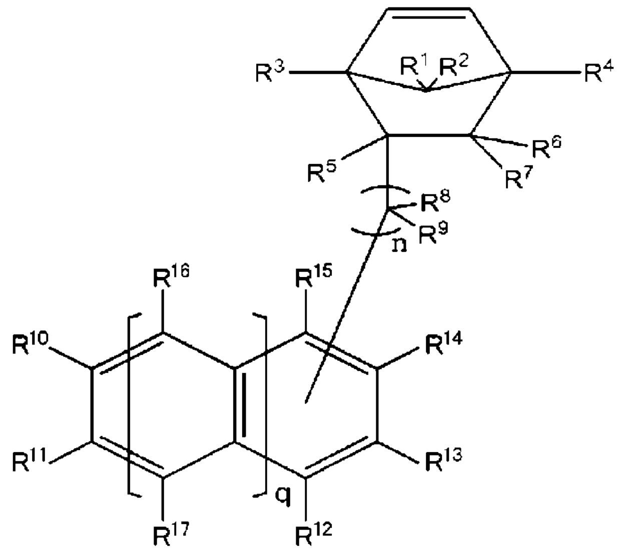

··· [V]

dans la formule [V], n et q représentent chacun indépendamment 0, 1, ou 2 ; $R^1$ à $R^{17}$ représentent chacun indépendamment un atome d'hydrogène, un atome d'halogène, un groupe carboxyle, un groupe hydroxyle, un groupe acide sulfonique, un groupe anhydride d'acide, un groupe époxy, un groupe amino, ou un groupe d'hydrocarbures présentant 1 à 20 atomes de carbone qui peut être substitué par un atome d'halogène, un groupe carboxyle, un groupe hydroxyle, un groupe acide sulfonique, un groupe anhydride d'acide, un groupe époxy, ou un groupe amino ; un élément parmi $R^{10}$ à $R^{17}$ représente une liaison de couplage ; dans le cas où q = 0, $R^{10}$ et $R^{11}$, $R^{11}$ et $R^{12}$, $R^{12}$ et $R^{13}$, $R^{13}$ et $R^{14}$, $R^{14}$ et $R^{15}$, ou $R^{15}$ et $R^{10}$ peuvent être liés l'un à l'autre pour former un cycle monocyclique ou polycyclique ; dans le cas où q = 1 ou 2, $R^{10}$ et $R^{11}$, $R^{11}$ et $R^{17}$, $R^{17}$ et $R^{17}$, $R^{17}$ et $R^{12}$, $R^{12}$ et $R^{13}$, $R^{13}$ et $R^{14}$, $R^{14}$ et $R^{15}$, $R^{15}$ et $R^{16}$, $R^{16}$ et $R^{16}$, ou $R^{16}$ et $R^{10}$ peuvent être liés l'un à l'autre pour former un cycle monocyclique ou polycyclique ; le cycle monocyclique ou le cycle polycyclique peut présenter une double liaison ; et le cycle monocyclique ou le cycle polycyclique peut être un cycle aromatique.

**13.** Composition de résine à base d'oléfine cyclique selon la revendication 12,
dans laquelle l'unité constitutive dérivée d'oléfine cyclique (a2) dans le copolymère greffé (A2) inclut une unité de répétition dérivée d'un élément ou de deux éléments voire plus de composés choisis parmi

le bicyclo [2.2.1]-2-heptène et
le tétracyclo [4.4.0.$1^{2,5}$.$1^{7,10}$]-$_3$-dodécène.

**14.** Composition de résine à base d'oléfine cyclique selon la revendication 12 ou 13,
dans laquelle le copolymère greffé (A2) présente en outre une unité constitutive (al) dérivée d'une oléfine choisie dans le groupe comprenant l'éthylène et une $\alpha$-oléfine présentant 3 à 20 atomes de carbone.

**15.** Composition de résine à base d'oléfine cyclique selon l'une quelconque des revendications 12 à 14,
dans laquelle le monomère présentant un groupe polaire inclut un élément ou deux éléments voire plus choisis parmi un l'acide acrylique, l'acide méthacrylique, l'acide maléique et l'anhydride maléique.

**16.** Composition de résine à base d'oléfine cyclique selon l'une quelconque des revendications 1 à 15,
dans laquelle les particules fines inorganiques (B) incluent un élément ou deux éléments voire plus choisis parmi la zircone, le titane et l'alumine.

**17.** Composition de résine à base d'oléfine cyclique selon l'une quelconque des revendications 1 à 16,
dans laquelle une teneur en particules fines inorganiques (B) est supérieure ou égale à 5 % en masse et inférieure ou égale à 60 % en masse lorsqu'une quantité totale de la composition de résine à base d'oléfine cyclique est désignée comme 100 % en masse.

**18.** Composition de résine à base d'oléfine cyclique selon l'une quelconque des revendications 1 à 17,

dans laquelle dans un cas où un film présentant une épaisseur de film supérieure ou égale à 100 μm et inférieure ou égale à 300 μm est produite en utilisant la composition de résine à base d'oléfine cyclique, un indice de réfraction (nD) du film à une longueur d'onde de 589 nm est supérieur ou égal à 1,545.

**19.** Produit moulé obtenu en utilisant la composition de résine à base d'oléfine cyclique selon l'une quelconque des revendications 1 à 18.

**20.** Composant optique comprenant le produit moulé selon la revendication 19.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013209501 A
- JP 2009108282 A
- US 2017145191 A1
- JP 2006299001 A
- JP 2004284232 A
- JP H10330429 A
- US 2011028658 A1
- JP 2015189949 A
- JP H06228380 A
- JP 2005330465 A
- JP H07145213 A
- JP H0251510 A
- JP 3817015 B
- JP 5594712 B
- JP 2016056318 A
- WO 2008059938 A
- WO 2010050437 A
- JP H05320258 A
- JP H0713084 B
- JP 4245801 B